(19) Europäisches Patentamt
European Patent Office
Office européen des brevets

(11) EP 2 061 007 A1

(12) **EUROPEAN PATENT APPLICATION**
published in accordance with Art. 153(4) EPC

(43) Date of publication:
**20.05.2009 Bulletin 2009/21**

(21) Application number: **07708111.5**

(22) Date of filing: **06.02.2007**

(51) Int Cl.:
***G06T 7/20*** *(2006.01)* ***H04N 7/32*** *(2006.01)*

(86) International application number:
**PCT/JP2007/052011**

(87) International publication number:
**WO 2008/023466 (28.02.2008 Gazette 2008/09)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **24.08.2006 JP 2006227384**
**07.09.2006 JP 2006242343**

(71) Applicant: **MITSUBISHI ELECTRIC CORPORATION**
**Chiyoda-ku**
**Tokyo 100-8310 (JP)**

(72) Inventors:
- **SUKENO, Junji**
  **Tokyo 100-8310 (JP)**
- **SOTODA, Shuji**
  **Tokyo 100-8310 (JP)**
- **HATANO, Yoshiko**
  **Tokyo 100-8310 (JP)**
- **ONO, Yoshiki**
  **Tokyo 100-8310 (JP)**
- **SUGIYAMA, Kazuhiro**
  **Tokyo 100-8310 (JP)**

(74) Representative: **HOFFMANN EITLE**
**Patent- und Rechtsanwälte**
**Arabellastrasse 4**
**81925 München (DE)**

(54) **MOVING VECTOR DETECTING BDEVICE**

(57) The present invention relates to a motion-vector detection device capable of detecting a motion vector between frame images accurately and promptly. The motion-vector detection device according to the present invention is a motion-vector detection device for detecting a motion vector between frame images of the preceding frame and current frame (succeeding frame), and first enhances a vertical edge of each of a plurality of image regions obtained by dividing a frame image in the vertical direction, and then obtains a vertical projection to generate projection data for one horizontal line. Next, intersections of this projection data and a first threshold value are searched, and projection data of the current frame corresponding to a motion vector detection range with each intersection placed at its center is extracted. Then, each piece of extracted projection data is added per distance from the above-mentioned each intersection, and a horizontal motion vector of the frame image is detected from the result of addition.

F I G . 2

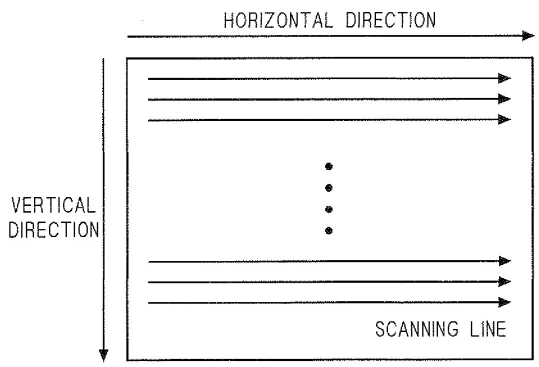


EP 2 061 007 A1

## Description

### Technical Field

The present invention relates to a motion-vector detection device for detecting a motion vector between frame images of a preceding frame and a succeeding frame adjacent to each other in time sequence.

### Background Art

Techniques for detecting a motion vector between frame images for use in hand shake correction or the like include one that detects a motion vector from sequentially captured images using a representative-point matching method. This representative-point matching method defines a representative point in sequentially captured images at a position fixed in an image of the preceding frame as well as performing a correlation operation of the representative points while shifting the image of the current frame in a two-dimensional direction, thereby detecting the amount of shift in which the correlation reaches its highest, as a motion vector.

However, the above motion-vector detection technique requires the representative points to have a luminance gradient of certain degree or steeper, and therefore, the luminance gradient will be slight at all the representative points in the case where monotone images such as document images are targeted, for example, which in turn prevents accurate detection of the amount of movement (motion vector).

Techniques for solving this problem include one that is disclosed in Patent document 1, for example. This technique first detects characteristic points of images having a luminance gradient and carries out the representative-point matching process using the detected characteristic points as representative points, which enables good detection of the motion vector.

Additionally, as described in Patent document 2, there is a method for dividing an image into a plurality of blocks, detecting an edge per block, and following the shift of edges, thereby detecting the motion vector. This method estimates the reliability by giving weight with the number of edges per block in order to reduce misjudgments in the case of a low spatial frequency without characteristic images such as sky or the case of a high spatial frequency with many characteristic points such as a lattice door. Further, as an edge detection method, the zero crossing method or the like is used.

Patent document 1: Patent gazette No. 3534551
Patent document 2: Patent gazette No. 3164121

### Disclosure of Invention

### Problems to be solved by Invention

The technique of Patent document 1 can define representative points at which the luminance gradient exists with reliability, but still requires a considerable amount of operations per representative point (characteristic point) because the correlation operation of the representative points is performed while gradually shifting pixels across the entire search range in frame images. Thus, prompt detection of the motion vector becomes difficult, which makes real time processing difficult, unless representative points are limited to a certain number or smaller. On the other hand, too few representative points will result in degradation of the detection accuracy of the motion vector.

Further, the motion vector detection method disclosed in Patent document 2 reduces misjudgments by giving weight to the reliability of a motion vector calculated per block with the number of edges per block, but has a problem in that it is difficult to estimate all blocks uniformly in the case where real time processing is required.

That is, to estimate all the images uniformly, a motion vector detection process needs to be carried out upon capturing all the images, which takes too much time for real time processing. To satisfy processing time, processing needs to be completed per block and proceeded successively; at this time, however, it is hard to say that sufficient results can always be obtained by uniformly weighting each block only with the number of edges because the respective blocks cannot be processed uniformly.

The present invention has been made to solve the above-described problems, and has an object to provide a motion-vector detection device capable of detecting a motion vector between frame images accurately and promptly as well as estimating the reliability of motion vectors calculated from the respective blocks while satisfying real time processing.

A first aspect of a motion-vector detection device according to the present invention is a motion-vector detection device for detecting a motion vector between frame images of a preceding frame and a succeeding frame adjacent to each other in time sequence, comprising: edge enhancing means for enhancing a vertical edge of each of a plurality of blocks having a constant division width in a vertical direction obtained by dividing a frame image read by sequentially repeating pixel scanning of horizontal lines in the vertical direction; projecting means for obtaining a vertical projection of each of said blocks of the image whose edge has been enhanced by said edge enhancing means, thereby generating projection data having a data array for one horizontal line for each of said blocks; specifying means for specifying the position of an arrayed element of each intersection at which a waveform obtained by graphing values of arrayed elements in the order of elements of said data array of projection data obtained in said projecting means for said preceding frame and a line on which the values of the arrayed elements stand at a predetermined constant value intersect; extracting means for extracting data arrays of a predetermined range with the position of arrayed element of said each intersection placed at its center, from the projection data obtained by said projecting means for said succeeding frame; adding means for adding values of arrayed elements having the same relative position with respect to the position of arrayed element of said each intersection for each of the data arrays of predetermined range extracted by said extracting mean; and detecting means for detecting a horizontal motion vector of a frame image on the basis of the result of addition obtained by said adding means.

A second aspect of a motion-vector detection device according to the present invention is a motion-vector detection device for detecting a motion vector between frame images of a preceding frame and a succeeding frame adjacent to each other in time sequence, comprising: edge enhancing means for enhancing a horizontal edge of each of a plurality of blocks having a constant division width in a horizontal direction obtained by dividing a frame image read by sequentially repeating pixel scanning of horizontal lines in the vertical direction; projecting means for obtaining a horizontal projection of each of said blocks of the image whose edge has been enhanced by said edge enhancing means, thereby generating projection data having a data array for one vertical line for each of said blocks; specifying means for specifying the position of an arrayed element of each intersection at which a waveform obtained by graphing values of arrayed elements in the order of elements of said data array of projection data obtained in said projecting means for said preceding frame and a line on which the values of the arrayed elements stand at a predetermined constant value intersect; extracting means for extracting data arrays of a predetermined range with the position of arrayed element of said each intersection placed at its center, from the projection data obtained by said projecting means for said succeeding frame; adding means for adding values of arrayed elements having the same relative position with respect to the position of arrayed element of said each intersection for each of the data arrays of predetermined range extracted by said extracting means; and detecting means for detecting a vertical motion vector of a frame image on the basis of the result of addition obtained by said adding means.

A third aspect of a motion-vector detection device according to the present invention is a motion-vector detection device for detecting a motion vector between frame images of a preceding frame and a succeeding frame adjacent to each other in time sequence, comprising: edge enhancing means for enhancing a vertical edge of each of a plurality of blocks having a constant division width in a vertical direction obtained by dividing a frame image read by sequentially repeating pixel scanning of horizontal lines in the vertical direction; projecting means for obtaining a vertical projection of each of said blocks of the image whose edge has been enhanced by said edge enhancing means, thereby generating projection data having a data array for one horizontal line for each of said blocks; specifying means for specifying the position of an arrayed element of each intersection at which a waveform obtained by graphing values of arrayed elements in the order of elements of said data array of projection data obtained in said projecting means for said preceding frame and a line on which the values of the arrayed elements stand at a predetermined constant value intersect; extracting means for extracting data arrays of a predetermined range with the position of arrayed element of said each intersection placed at its center, from the projection data obtained by said projecting means for said succeeding frame; adding means for adding values of arrayed elements having the same relative position with respect to the position of arrayed element of said each intersection for each of the data arrays of predetermined range extracted by said extracting means, and calculating a horizontal motion vector for each of said blocks on the basis of the result of addition as obtained; and detecting means for detecting a horizontal motion vector of the entire frame image on the basis of the horizontal motion vector of each of said blocks calculated by said adding means. Said detecting means estimates reliability of the horizontal motion vector of each of said blocks using at least one of said maximum value of said preceding-frame projection data obtained in said maximum-value obtaining means, the result of addition obtained in said adding means and said intersection information obtained in said specifying means.

A fourth aspect of a motion-vector detection device according to the present invention is a motion-vector detection device for detecting a motion vector between frame images of a preceding frame and a succeeding frame adjacent to each other in time sequence, comprising: edge enhancing means for enhancing a horizontal edge of each of a plurality of blocks having a constant division width in a horizontal direction obtained by dividing a frame image read by sequentially repeating pixel scanning of horizontal lines in the vertical direction; projecting means for obtaining a horizontal projection of each of said blocks of the image whose edge has been enhanced by said edge enhancing means, thereby generating projection data having a data array for one vertical line for each of said blocks; specifying means for specifying the position of an arrayed element of each intersection at which a waveform obtained by graphing values of arrayed elements in the order of elements of said data array of projection data obtained in said projecting means for said preceding frame and a line on which the values of the arrayed elements stand at a predetermined constant value intersect; extracting means for extracting data arrays of a predetermined range with the position of arrayed element of said each intersection placed at its center, from the projection data obtained by said projecting means for said succeeding frame; adding means for adding values of arrayed elements having the same relative position with respect to the position of arrayed element of said each intersection for each of the data arrays of predetermined range extracted by said extracting means, and calculating a vertical motion vector for each of said blocks on the basis of the result of addition as obtained; and detecting means for detecting a vertical motion vector of the entire frame image on the basis of the vertical motion vector of each of said blocks calculated by said adding means. Said detecting means estimates reliability of the vertical motion vector of each of said blocks using at least one of said maximum value of said succeeding frame projection data obtained in said maximum-value obtaining means, the result of addition obtained in said adding means and said intersection information obtained in said specifying means.

The first aspect of the motion-vector detection device of the present invention enhances a vertical edge of a predetermined image region in a frame image, obtains a vertical projection of the edge-enhanced image to generate projection data having a data array for one horizontal line, and also specifies the position of an arrayed element of each intersection at which a waveform obtained by graphing the values of arrayed elements in the order of elements of the data array of projection data of the preceding frame and a line on which the values of the arrayed elements stand at a predetermined constant value intersect. Then, data arrays of a predetermined range with the position of arrayed element of each intersection placed at its center are extracted from the projection data of the succeeding frame, and values of arrayed elements having the same relative position with respect to the position of arrayed element of each intersection for each of the extracted data arrays of predetermined range are added, and a horizontal motion vector of the frame image is detected on the basis of the result of addition. As a result, detection of a motion vector between frame images can be performed accurately and promptly.

The second aspect of the motion-vector detection device of the present invention enhances a horizontal edge of a predetermined image region in a frame image, obtains a horizontal projection of the edge-enhanced image to generate projection data having a data array for one vertical line, and also specifies the position of an arrayed element of each intersection at which a waveform obtained by graphing the values of arrayed elements in the order of elements of the data array of projection data of the preceding frame and a line on which the values of the arrayed elements stand at a predetermined constant value intersect. Then, data arrays of a predetermined range with the position of arrayed element of each intersection placed at its center are extracted from the projection data of the succeeding frame, and values of arrayed elements having the same relative position with respect to the position of arrayed element of each intersection for each of the extracted data arrays of predetermined range are added, and a vertical motion vector of the frame image is detected on the basis of the result of addition. As a result, detection of a motion vector between frame images can be performed accurately and promptly.

According to the third aspect of the motion-vector detection device of the present invention, the detecting means estimates the reliability of the horizontal motion vector of each block using at least one of the maximum value of the preceding-frame projection data obtained in the maximum-value obtaining means, the result of addition obtained in the adding means and the intersection information obtained in the specifying means. Horizontal motion vectors obtained from blocks having low reliability are thus omitted, which in turn allows a horizontal motion vector of the entire frame image having high reliability to be calculated.

According to the fourth aspect of the motion-vector detection device of the present invention, the detecting means estimates the reliability of the vertical motion vector of each block using at least one of the maximum value of the preceding frame projection data obtained in the maximum-value obtaining means, the result of addition obtained in the adding means and the intersection information obtained in the specifying means. Vertical motion vectors obtained from blocks having low reliability are thus omitted, which in turn allows a vertical motion vector of the entire frame image having high reliability to be calculated.

These and other objects, features, aspects and advantages of the present invention will become more apparent from the following detailed description of the present invention when taken in conjunction with the accompanying drawings.

Brief Description of Drawings

[Fig. 1] is a block diagram showing an essential configuration of a motion-vector detection device 1 according to a first embodiment of the present invention, a motion-vector detection device 1A according to a second embodiment, a motion-vector detection device 1B according to a third embodiment, and a motion-vector detection device 1C according to a fourth embodiment.

[Fig. 2] is a diagram for explaining pixel scanning directions in a frame image.

[Fig. 3] is a block diagram showing an essential configuration of a horizontal-motion-vector detecting section 2.

[Fig. 4] is a block diagram showing an essential configuration of a vertical-block projecting part 23.

[Fig. 5] is a block diagram showing an essential configuration of a vertical-block horizontal-motion-vector calculating part 31.

[Fig. 6] is a block diagram showing an essential configuration of a vertical-motion-vector detecting section 4.

[Fig. 7] is a block diagram showing an essential configuration of a horizontal-block projecting part 43.

[Fig. 8] is a block diagram showing an essential configuration of a horizontal-block vertical-motion-vector calculating part 50.

[Fig. 9] shows diagrams for explaining the operations of a vertical image-dividing part 21 and a vertical-block projecting part 23.

[Fig. 10] is a diagram for explaining an n-arization process in n-arization parts 314 and 504.

[Fig. 11] shows diagrams for explaining the operations of a first-threshold intersection searching part 29, a vertical-block projection-data reading part 30, and a vertical-block horizontal-motion-vector calculating part 31.

[Fig. 12] shows diagrams for explaining the operations of an adder 315 and a peak detector 317.

[Fig. 13] shows diagrams for explaining the operations of a horizontal image-dividing part 41 and a horizontal-block projecting part 43.

[Fig. 14] shows diagrams for explaining the operations of a third-threshold intersection searching part 48, a horizontal-block projection-data reading part 49, and a horizontal-block vertical-motion-vector calculating part 50.

[Fig. 15] shows diagrams for explaining the operations of an adder 505 and a peak detector 507.

[Fig. 16] is a block diagram showing an essential configuration of a horizontal-motion-vector detecting section 2A in the motion-vector detection device 1A according to the second embodiment of the present invention.

[Fig. 17] is a block diagram showing an essential configuration of a vertical-motion-vector detecting section 4A in the motion-vector detection device 1A.

[Fig. 18] is a block diagram showing an essential configuration of a horizontal-motion-vector detecting section 2B in the motion-vector detection device 1C according to the third embodiment of the present invention.

[Fig. 19] is a block diagram showing an essential configuration of a vertical-block horizontal-motion-vector calculating part 310.

[Fig. 20] is a block diagram showing an essential configuration of a vertical-motion-vector detecting section 4B.

[Fig. 21] is a block diagram showing an essential configuration of a horizontal-block vertical-motion-vector calculating part 500.

[Fig. 22] is a diagram for explaining a method for judging validity/invalidity of vertical blocks using a first vertical-block projection-data maximum value.

[Fig. 23] is a diagram schematically showing judgment of validity/invalidity of vertical blocks.

[Fig. 24] is a diagram for explaining a method for judging validity/invalidity of vertical blocks using a vertical-block n-arized-added-data peak value.

[Fig. 25] is a diagram schematically showing judgment of validity/invalidity of vertical blocks.

[Fig. 26] is a diagram for explaining a method for judging validity/invalidity of vertical blocks using the number of first threshold intersections.

[Fig. 27] is a diagram schematically showing judgment of validity/invalidity of vertical blocks.

[Fig. 28] is a diagram schematically showing judgment of validity/invalidity of vertical blocks.

[Fig. 29] is a diagram for explaining an example of a method for determining a horizontal motion vector of the entire image.

[Fig. 30] is a diagram for explaining an example of a method for determining a horizontal motion vector of the entire image.

[Fig. 31] is a diagram for explaining a method for judging validity/invalidity of horizontal blocks using a first horizontal-block projection-data maximum value.

[Fig. 32] is a diagram schematically showing judgment of validity/invalidity of horizontal blocks.

[Fig. 33] is a diagram for explaining a method for judging validity/invalidity of horizontal blocks using a horizontal-block n-arized-added-data peak value.

[Fig. 34] is a diagram schematically showing judgment of validity/invalidity of horizontal blocks.

[Fig. 35] is a diagram for explaining a method for judging validity/invalidity of horizontal blocks using the number of third threshold intersections.

[Fig. 36] is a diagram schematically showing judgment of validity/invalidity of horizontal blocks.

[Fig. 37] is a diagram schematically showing judgment of validity/invalidity of horizontal blocks.

[Fig. 38] is a diagram for explaining an example of a method for determining a vertical motion vector of the entire image.

[Fig. 39] is a diagram for explaining an example of a method for determining a vertical motion vector of the entire image.

[Fig. 40] is a block diagram showing an essential configuration of a horizontal-motion-vector detecting section 2C in the motion-vector detection device 1C according to the fourth embodiment of the present invention.

[Fig. 41] is a block diagram showing an essential configuration of a vertical-motion-vector detecting section 4C in the motion-vector detection device 1C.

## Best Mode for Carrying Out the Invention

### First embodiment

<Configuration of motion-vector detection device 1>

Fig. 1 is a block diagram showing an essential configuration of a motion-vector detection device 1 according to a first embodiment of the present invention.

The motion-vector detection device 1 is intended to detect an image motion vector indicative of the motion of a subject in a screen in moving images, for example, and detects a motion vector between frame images of a preceding frame and a succeeding frame adjacent to each other in time sequence. The motion vector detected in this motion-vector detection device 1 is used for hand shake correction in a video camera or the like. Frame images input to the motion-vector detection device 1 shall be read by carrying out pixel scanning in the horizontal direction and line scanning in the vertical direction, as shown in Fig. 2.

The motion-vector detection device 1 includes an input terminal 11, a horizontal-motion-vector detecting section 2, a vertical-motion-vector detecting section 4, and two output terminals 12, 13. Regarding these horizontal-motion-vector detecting section 2 and vertical-motion-vector detecting section 4, their functions may be achieved by software by a microprocessor, for example, or most part thereof may be achieved by hardware (other part by software). It is needless to say that all the functions may be achieved by hardware.

For example, image data (moving images) acquired by an imaging device within a video camera or image data (moving images) such as video signals is input to the input terminal 11. A horizontal motion vector of the image data input to the input terminal 11 is detected in the horizontal-motion-vector detecting section 2, and the detected horizontal motion vector is output through the output terminal 12.

On the other hand, the vertical-motion-vector detecting section 4 detects a vertical motion vector of the image data input to the input terminal 11. This motion vector detected by the vertical-motion-vector detecting section 4 is output through the output terminal 13.

Hereinbelow, the configurations of the horizontal-motion-vector detecting section 2 and vertical-motion-vector detecting section 4 will be described in this order.

Fig. 3 is a block diagram showing an essential configuration of the horizontal-motion-vector detecting section 2. The horizontal-motion-vector detecting section 2 includes an input terminal 20, a vertical image-dividing part 21, a vertical-edge detection filtering part 22, a vertical-block projecting part 23, a first vertical-block projection-data maximum-value storage part 24, a bit-number reducing part 25, a first vertical-block projection line memory 26, a second vertical-block projection line memory 27, a second vertical-block projection-data maximum-value storage part 28, a first-threshold intersection searching part 29, a vertical-block projection-data reading part 30, a vertical-block horizontal-motion-vector calculating part 31, a horizontal-motion-vector determining part 32, and an output terminal 33. Functions of the respective parts of the horizontal-motion-vector detecting section 2 will be described briefly (specific operations will be described later in detail).

The vertical image-dividing part 21 divides a frame image input to the input terminal 20 in the vertical direction, and outputs blocks divided vertically (hereinafter also called "vertical blocks").

The vertical-edge detection filtering part 22 carries out a filtering process for performing edge detection in each of the blocks divided by the vertical image-dividing part 21. The vertical image-dividing part 21 and vertical-edge detection filtering part 22 may be called edge enhancing means in combination.

The vertical-block projecting part 23 obtains a vertical projection of an edge-enhanced vertical block output from the vertical-edge detection filtering part 22, and outputs projection data for each vertical block.

The first vertical-block projection-data maximum-value storage part 24 stores the maximum value of projection data of vertical blocks of the current frame output from the vertical-block projecting part 23 (hereinafter also referred to as "current-frame vertical-block projection-data maximum value" or "first vertical-block projection-data maximum value"). Further, the first vertical-block projection-data maximum-value storage part 24 calculates a second threshold value which will be described later on the basis of the first vertical-block projection-data maximum value.

The bit-number reducing part 25 reduces the number of bits of projection data of vertical blocks output from the vertical-block projecting part 23 on the basis of the first vertical-block projection-data maximum value stored in the first vertical-block projection-data maximum-value storage part 24. Vertical-block projection data with the number of bits reduced is called "first vertical-block projection data".

The first vertical-block projection line memory 26 stores the first vertical-block projection data with the number of bits having been reduced by the bit-number reducing part 25.

The second vertical-block projection line memory 27 stores the vertical-block projection data sent from the first vertical-block projection line memory 26 as vertical-block projection data of the preceding frame (hereinafter also referred to as "second vertical-block projection data").

The second vertical-block projection-data maximum-value storage part 28 stores the first vertical-block projection-data maximum value output from the first vertical-block projection-data maximum-value storage part 24 as "second vertical-block projection-data maximum value" of the preceding frame (also referred to as "preceding-frame vertical-block projection-data maximum value"). Further, the second vertical-block projection-data maximum-value storage part 28 calculates a first threshold value which will be describe later on the basis of the second vertical-block projection-data maximum value.

The first-threshold intersection searching part 29 obtains an intersection of the waveform of the second vertical-block projection data of the preceding frame stored in the second vertical-block projection line memory 27 and the first threshold value calculated by the second vertical-block projection-data maximum-value storage part 28, and outputs information on this intersection (hereinafter also referred to as "a first threshold intersection").

The vertical-block projection-data reading part 30 reads the first vertical-block projection data falling within a predetermined range (motion vector detection range) with the first threshold intersection obtained by the first-threshold intersection searching part 29 placed at its center, from the first vertical-block projection line memory 26.

The vertical-block horizontal-motion-vector calculating part 31 n-arizes (where n is an integer not less than 2) each piece of the first vertical-block projection data read by the vertical-block projection-data reading part 30 using the second threshold value output from the first vertical-block projection-data maximum-value storage part 24, thereby reducing the number of bits, and adds the n-arized projection data per distance from the first threshold intersection.

The horizontal-motion-vector determining part 32 determines the horizontal motion vector of an image on the basis of the output from the vertical-block horizontal-motion-vector calculating part 31. The horizontal motion vector of the image determined here is output through the output terminal 33.

Fig. 4 is a block diagram showing an essential configuration of the vertical-block projecting part 23. The vertical-block projecting part 23 includes an input terminal 231, an adder 232 for carrying out data addition per horizontal line, a vertical-projection temporary storage memory 233 as a buffer memory for successively storing data added by the adder 232, and an output terminal 234.

An image whose vertical edge has been enhanced by the vertical-edge detection filtering part 22 is input to the input terminal 231 per vertical block. A vertical projection of the image input to the input terminal 231 is obtained by the adder 232 and vertical-projection temporary storage memory 233. Specifically, data for one horizontal line of a vertical block and data for one horizontal line read from the vertical-projection temporary storage memory 233 are added in the adder 232, and the result of addition is returned again to the vertical-projection temporary storage memory 233 for storage. When addition of all the horizontal lines in the vertical block is completed by repeating such adding operation, added data of all the horizontal lines, that is, projection data in the vertical direction is to be output through the output terminal 234.

Fig. 5 is a block diagram showing an essential configuration of the vertical-block horizontal-motion-vector calculating part 31.

The vertical-block horizontal-motion-vector calculating part 31 includes three input terminals 311 to 313, an n-arization part 314, an adder 315 for adding the first vertical-block projection data having been n-arized in the n-arization part 314, a horizontal-motion-vector adding memory 316 as a buffer memory for successively storing data added by the adder 315, a peak detector 317, and an output terminal 318.

The first vertical-block projection data output from the vertical-block projection-data reading part 30 is input to the input terminal 311. The second threshold value output from the first vertical-block projection-data maximum-value storage part 24 is input to the input terminal 312. Further, the information on the first threshold intersection output from the first-threshold intersection searching part 29 is input to the input terminal 313.

The n-arization part 314 n-arizes (e.g., ternarizes) the first vertical-block projection data input through the input terminal 311 on the basis of the second threshold value input through the input terminal 312.

The adder 315 adds the first vertical-block projection data n-arized by the n-arization part 314 and the data read from the horizontal-motion-vector adding memory 316 with the first threshold intersection placed at its center, and the result of addition is stored again in the horizontal-motion-vector adding memory 316. When addition of all the first threshold intersections for the vertical blocks is completed by repeating such adding operation, added data for the vertical blocks is output to the peak detector 317.

The peak detector 317 detects the peak position (a horizontal motion vector which will be described later) in the added data output from the adder 315. This peak position detected by the peak detector 317 is to be input to the horizontal-motion-vector determining part 32 through the output terminal 318.

Next, the configuration of the vertical-motion-vector detecting section 4 will be described. Fig. 6 is a block diagram showing an essential configuration of the vertical-motion-vector detecting section 4. The vertical-motion-vector detecting section 4 includes an input terminal 40, a horizontal image-dividing part 41, a horizontal-edge detection filtering part 42, horizontal-block projecting part 43, a first horizontal-block projection line memory 44, and a first horizontal-block projection-data maximum-value storage part 45. Further, the vertical-motion-vector detecting section 4 includes a second horizontal-block projection line memory 46, a second horizontal-block projection-data maximum-value storage part 47, a third-threshold intersection searching part 48, a horizontal-block projection-data reading part 49, a horizontal-block vertical-motion-vector calculating part 50, a vertical-motion-vector determining part 51, and an output terminal 52. Functions of the respective parts of the vertical-motion-vector detecting section 4 will be described briefly (specific operations will be described later in detail).

The horizontal image-dividing part 41 divides a frame image input to the input terminal 40 in the horizontal direction, and outputs blocks divided horizontally (hereinafter also called "horizontal blocks").

The horizontal-edge detection filtering part 42 carries out a filtering process for performing edge detection in each of the blocks divided by the horizontal image-dividing part 41. The horizontal image-dividing part 41 and horizontal-edge detection filtering part 42 may be called edge enhancing means in combination.

The horizontal-block projecting part 43 obtains a horizontal projection of an edge-enhanced horizontal block output from the horizontal-edge detection filtering part 42, and outputs projection data for each horizontal block.

The first horizontal-block projection line memory 44 stores the horizontal-block projection data output from the horizontal-block projecting part 43 as horizontal-block projection data of the current frame (hereinafter also referred to as "first horizontal-block projection data").

The first horizontal-block projection-data maximum-value storage part 45 stores the maximum value of projection data of horizontal blocks of the current frame output from the horizontal-block projecting part 43 (hereinafter also referred to as "current-frame horizontal-block projection-data maximum value" or "first horizontal-block projection-data maximum value").

The second horizontal-block projection line memory 46 stores the horizontal-block projection data sent from the first horizontal-block projection line memory 44 as horizontal-block projection data of the preceding frame (hereinafter also referred to as "second horizontal-block projection data").

The second horizontal-block projection-data maximum-value storage part 47 stores the first horizontal-block projection-data maximum value output from the first horizontal-block projection-data maximum-value storage part 45 as "second horizontal-block projection-data maximum value" of the preceding frame (also referred to as "preceding-frame horizontal-block projection-data maximum value"). Further, the second horizontal-block projection-data maximum-value storage part 47 calculates third and fourth threshold values which will be described later on the basis of the second horizontal-block projection-data maximum value.

The third-threshold intersection searching part 48 obtains an intersection of the second horizontal-block projection data of the preceding frame stored in the second horizontal-block projection line memory 46 and the third threshold value calculated by the second horizontal-block projection-data maximum-value storage part 47, and outputs information on this intersection (hereinafter also referred to as a third threshold intersection").

The horizontal-block projection-data reading part 49 reads the first horizontal-block projection data falling within a predetermined range (motion vector detection range) with the third threshold intersection obtained by the third-threshold intersection searching part 48 placed at its center, from the first horizontal-block projection line memory 44.

The horizontal-block vertical-motion-vector calculating part 50 n-arizes (where n is an integer not less than 2) each piece of the first horizontal-block projection data read by the horizontal-block projection-data reading part 49 using the fourth threshold value output from the second horizontal-block projection-data maximum-value storage part 47, thereby reducing the number of bits, and adds the n-arized projection data per distance from the third threshold intersection.

The vertical-motion-vector determining part 51 determines the vertical motion vector of an image on the basis of the output from the horizontal-block vertical-motion-vector calculating part 50. The vertical motion vector of the image determined here is output through the output terminal 52.

Fig. 7 is a block diagram showing an essential configuration of the horizontal-block projecting part 43. The horizontal-block projecting part 43 includes an input terminal 431, an adder 432 for carrying out addition of horizontal line data of horizontal blocks, a horizontal-projection temporary storage memory 433 as a buffer memory for successively storing data added by the adder 432, and an output terminal 434.

An image whose horizontal edge has been enhanced by the horizontal-edge detection filtering part 42 is input to the input terminal 431. A horizontal projection of the image input to the input terminal 431 is obtained per horizontal block by the adder 432 and horizontal-projection temporary storage memory 433. Specifically, with regard to pixels of one horizontal line in horizontal blocks, a pixel input through the input terminal 431 and the result of addition added in the adder 432 up to the preceding pixel and stored in the horizontal-projection temporary storage memory 433 are added in the adder 432, and the result of addition is returned again to the horizontal-projection temporary storage memory 433 for storage. When addition of one horizontal line in a horizontal block is completed by repeating such adding operation, added data of all the pixels in one horizontal line of that horizontal block, that is, projection data in the horizontal direction is to be output through the output terminal 434. Thereafter, projection data in the horizontal direction of the succeeding horizontal block is processed similarly, and when processing of all the horizontal blocks for one horizontal line is completed, the succeeding one horizontal line is processed.

Fig. 8 is a block diagram showing an essential configuration of the horizontal-block vertical-motion-vector calculating part 50.

The horizontal-block vertical-motion-vector calculating part 50 includes three input terminals 501 to 503, an n-arization part 504, an adder 505 for adding the first horizontal-block projection data having been n-arized in the n-arization part 504, a vertical-motion-vector adding memory 506 as a buffer memory for successively storing data added by the adder 505, a peak detector 507, and an output terminal 508.

The first horizontal-block projection data output from the horizontal-block projection-data reading part 49 is input to the input terminal 501. The fourth threshold value output from the second horizontal-block projection-data maximum-value storage part 47 is input to the input terminal 502. Further, the information on the third threshold intersection output from the third-threshold intersection searching part 48 is input to the input terminal 503.

The n-arization part 504 n-arizes (e.g., temarizes) the first horizontal-block projection data input through the input terminal 501 on the basis of the fourth threshold value input through the input terminal 502.

The adder 505 adds the first horizontal-block projection data n-arized by the n-arization part 504 and the data read from the vertical-motion-vector adding memory 506 with the third threshold intersection placed at its center, and the result of addition is stored again in the vertical-motion-vector adding memory 506. When addition of all the third threshold intersections for the horizontal blocks is completed by repeating such adding operation, added data for the horizontal blocks is output to the peak detector 507.

The peak detector 507 detects the peak position (vertical motion vector which will be described later) in the added data output from the adder 505. This peak position detected by the peak detector 507 is to be input to the vertical-motion-vector determining part 51 through the output terminal 508.

The operation of the motion-vector detection device 1 having the above-described configuration will be described below.

<Operation of motion-vector detection device 1>

First, the operation of the horizontal-motion-vector detecting section 2 for detecting a horizontal motion vector of an image in the motion-vector detection device 1 will be described.

When a frame image read by sequentially repeating pixel scanning of horizontal lines in the vertical direction as shown in Fig. 2 is input to the input terminal 20 of the horizontal-motion-vector detecting section 2 shown in Fig. 3, it is divided into blocks in the vertical direction by the vertical image-dividing part 21. That is, the vertical image-dividing part 21 defines a plurality of image regions (vertical blocks) obtained by vertically dividing the frame image. In subsequent processes, processing and control is thereby carried out per vertical block.

In the vertical image-dividing part 21, image data of 640 pixels by 480 pixels as shown in, for example, Fig. 9(a) is divided into seven vertical blocks vb0 to vb6 having a width of 64 pixels (division width) in the vertical direction. Image data of the lowermost layer, vertical block vb7, in the vertical direction is not to be used in detection of a horizontal motion vector, but no particular problem arises in detection accuracy since seven vertical blocks vb0 to vb6 which occupy the most part of the frame image are used in detection of the horizontal motion vector. Here, setting the division width and number of divisions as shown in Fig. 9(a) is not always necessary.

The image divided into the seven vertical blocks vb0 to vb6 in the vertical image-dividing part 21 as shown in Fig. 9(a) is subjected to detection of an edge component extending in the vertical direction, in other words, a filtering process for enhancing an image portion abruptly changing in the horizontal direction, in the vertical-edge detection filtering part 22. As a filter for use in this filtering process, a (1, -1) 2-tap filter for simply obtaining the difference from an adjacent pixel in the horizontal direction, a (-1, 2, -1) 3-tap filter corresponding to a second derivative or the like can be employed. The use of such filter is not always necessary, and a filter that increases the output value in an image portion whose change in luminance increases in the horizontal direction will do.

Image data whose vertical edge has been enhanced for each of the vertical blocks (image regions) vb0 to vb6 in the vertical-edge detection filtering part 22 is input to the vertical-block projecting part 23, and projected in the vertical direction by the vertical-block projecting part 23. With this projection, a noise component (between lines) in the vertical direction can be reduced, and the vertical edge component can further be enhanced, so that the vertical edge corresponding to a characteristic point is made distinctive, which achieves improved motion-vector detection accuracy. The operation of the vertical-block projecting part 23 will be described with reference to the conceptual drawing shown in Fig. 9(b).

In the vertical-block projecting part 23, all arrayed elements are generated for each piece of vertical-block projection data vn0 to vn6 (Fig. 9(b)) having a data array Mv for one horizontal line at the time when input of the respective vertical blocks vb0 to vb6 shown in Fig. 9 (a) is completed, that is, at the time when the last pixel on the last line in each of the edge-enhanced vertical blocks vb0 to vb6 is input. While the data array Mv contains arrayed elements of the total pixel number of a horizontal line (e.g., 640), valid elements in a 2-tap filter such as (1, -1) is the total pixel number of the horizontal line minus 1 (e.g., 639), and valid elements in a 3-tap filter such as (-1, 2, -1) is the total pixel number of the horizontal line minus 2 (e.g., 638).

Specifically, image data of the respective vertical blocks vb0 to vb6 (image data whose vertical edge has been enhanced) input through the input terminal 231 as shown in Fig. 4 is sequentially input to the adder 232. The adder 232, first, writes the leading horizontal line of the input vertical block into the vertical-projection temporary storage memory 233 without reading data within the vertical-projection temporary storage memory 233. Next, the adder 232 reads the result of addition up to the preceding line stored in the vertical-projection temporary storage memory 233, and carries out an addition with one horizontal line of the vertical block input through the input terminal 231, and writes back the result of addition into the vertical-projection temporary storage memory 233.

Then, when the last horizontal line of the vertical block is input to the adder 232, the result of addition up to the preceding line stored in the vertical-projection temporary storage memory 233 is read, and an addition with the last horizontal line of the vertical block input through the input terminal 231 is carried out, and the result of addition, that is, data obtained by adding all the horizontal lines of the vertical block is output to the first vertical-block projection-data maximum-value storage part 24 and bit-number reducing part 25 through the output terminal 234, as vertical-block projection data.

In the adder 232, the projection data obtained by adding all the horizontal lines of the vertical block may be once stored in the vertical-projection temporary storage memory 233, and when the leading line of the succeeding vertical block is input, the projection data within the vertical-projection temporary storage memory 233 may be read to be output through the output terminal 234.

The first vertical-block projection-data maximum-value storage part 24 calculates the maximum value of the projection data output from the vertical-block projecting part 23, and stores it as the first vertical-block projection-data maximum value (current-frame vertical-block projection-data maximum value). That is, the first vertical-block projection-data maximum-value storage part 24 obtains the maximum value of arrayed elements of the data array Mv (Fig. 9(b)) of the projection data of the current frame (succeeding frame), and stores this maximum value.

Further, the first vertical-block projection-data maximum-value storage part 24 calculates the second threshold value on the basis of the calculated current-frame vertical-block projection-data maximum value. For instance, defining the current-frame vertical-block projection-data maximum value as P1max, the second threshold value $\alpha 2$ is calculated by the following equation (1):

$$\alpha 2 = P1max \times k1 \ldots (1)$$

where k1 is a previously-determined coefficient satisfying 0<k1<1.

The calculation of the second threshold value $\alpha 2$ is not limited to the above equation (1), but may be anything that makes the second threshold value $\alpha 2$ larger as the current-frame vertical-block projection-data maximum value P1max increases, or alternatively, a conversion table may be used.

The bit-number reducing part 25 determines a valid bit range of projection data on the basis of the current-frame vertical-block projection-data maximum value (first vertical-block projection-data maximum value) input from the first vertical-block projection-data maximum-value storage part 24. Then, higher-order invalid bits and lower-order invalid bits defined on the basis of this valid bit range are omitted from the vertical-block projection data input from the vertical-block projecting part 23, and the current-frame vertical-block projection data composed only of valid bits is output to the first vertical-block projection line memory 26.

The first vertical-block projection line memory 26 stores the current-frame vertical-block projection data with the number of bits having been reduced by the bit-number reducing part 25, as the first vertical-block projection data, for each vertical block. That is, the projection data of the current frame (succeeding frame) with the number of bits (data length of each arrayed element) having been reduced by the bit-number reducing part 25 on the basis of the first vertical-block projection-data maximum value obtained in the first vertical-block projection-data maximum-value storage part 24 is stored in the first vertical-block projection line memory 26.

The first vertical-block projection line memory 26 reads the preceding-frame vertical-block projection data at the time when a new piece of vertical-block projection data of the current frame is input, and supplies it to the second vertical-block projection line memory 27.

The second vertical-block projection line memory 27 stores the preceding-frame vertical-block projection data read from the first vertical-block projection line memory 26, as the second vertical-block projection data.

Similarly, the first vertical-block projection-data maximum-value storage part 24 reads the first vertical-block projection-data maximum value already stored at the time when the new vertical-block projection-data maximum value of the current frame is updated, and supplies it to the second vertical-block projection-data maximum-value storage part 28.

The second vertical-block projection-data maximum-value storage part 28 stores the first vertical-block projection-data maximum value read from the first vertical-block projection-data maximum-value storage part 24, as the second vertical-block projection-data maximum value of the preceding frame (preceding-frame vertical-block projection-data maximum value).

In other words, the current-frame vertical-block projection-data maximum value stored in the first vertical-block projection-data maximum-value storage part 24 is to be stored as the preceding-frame vertical-block projection-data maximum value in the second vertical-block projection-data maximum-value storage part 28 in the succeeding frame.

The second vertical-block projection-data maximum-value storage part 28 defines the first threshold value (predetermined constant value) on the basis of the second vertical-block projection-data maximum value of the preceding frame. For instance, defining the preceding-frame vertical-block projection-data maximum value as P2max, the first threshold value $\alpha 1$ is calculated by the following equation (2):

$$\alpha 1 = P2max \times k2 \ldots (2)$$

where k2 is a previously-determined coefficient satisfying

$0<k2<1$.

The calculation of the first threshold value $\alpha1$ is not limited to the above equation (2), but may be anything that makes the first threshold value $\alpha1$ larger as the preceding-frame vertical-block projection-data maximum value P2max increases, or alternatively, a conversion table may be used.

The first-threshold intersection searching part 29 searches an intersection (first threshold intersection) of the second vertical-block projection data read from the second vertical-block projection line memory 27 and the first threshold value output from the second vertical-block projection-data maximum-value storage part 28, in the horizontal direction. Information on first threshold intersections obtained in this first-threshold intersection searching part 29 is output to the vertical-block projection-data reading part 30 and vertical-block horizontal-motion-vector calculating part 31.

The vertical-block projection-data reading part 30 reads the current-frame (first) vertical-block projection data corresponding to the motion vector detection range with the first threshold intersection output from the first-threshold intersection searching part 29 placed at its center, from the first vertical-block projection line memory 26.

That is, letting the first threshold intersection be A(i) (where i = 1, 2, ... p; p is the total number of first threshold intersections as detected), and the motion vector detection range be (-V) to (+V) (where V is a positive integer) with the first threshold intersection placed at its center, the projection data read from the first vertical-block projection line memory 26 is to be partial data of the first vertical-block projection data falling within the range of (A(i)-V) to (A(i)+V) in the horizontal direction.

The first vertical-block projection data read from the first vertical-block projection line memory 26 by this vertical-block projection-data reading part 30 is output to the vertical-block horizontal-motion-vector calculating part 31.

The first vertical-block projection data output from the vertical-block projection-data reading part 30 is input to the n-arization part 314 (compression means) through the input terminal 311 of the vertical-block horizontal-motion-vector calculating part 31 shown in Fig. 5.

This n-arization part 314 n-arizes the first vertical-block projection data on the basis of the second threshold value output from the first vertical-block projection-data maximum-value storage part 24 and input through the input terminal 312.

That is, the n-arization part 314 subjects the data length of each arrayed element of the data array Mv (Fig. 9(b)) of the current-frame projection data extracted in the vertical-block projection-data reading part 30 to a ternarization process, for example, for compression. The process in this n-arization part 314 will be described with reference to Fig. 10.

Fig. 10 is a diagram for explaining an n-arization process in the n-arization part 314. Fig. 10 shows one example of a ternarization process where n = 3.

Letting the first vertical-block projection data input to the n-arization part 314 be D and the second threshold value input through the input terminal 312 be $\alpha2$ ($\alpha2$ is a positive integer), the n-arization part 314 outputs (-1) when $D<(-\alpha2)$, outputs 0 when $(-\alpha2)\leq D\leq\alpha2$, and outputs 1 when $D>\alpha2$, thereby performing a ternarization process. That is, in the ternarization process in the n-arization part 314, relating to the second threshold value $\alpha2$ ($\alpha2>0$) defined on the basis of the maximum value of the arrayed elements of the data array Mv in the current-frame (succeeding-frame) projection data, ternarization is performed in three levels of: the case where the value of an arrayed element of the current-frame projection data extracted in the vertical-block projection-data reading part 30 is smaller than $(-\alpha2)$; the case where it is not smaller than $(-\alpha2)$ and not larger than $\alpha2$; and the case where it is larger than $\alpha2$.

In the n-arization process in this n-arization part 314, what positional relationship a partial waveform of the current-frame first vertical-block projection data output from the vertical-block projection-data reading part 30 has with respect to the first threshold intersection, that is, what tendency the waveform shows is of importance, and therefore, it is sufficient if such a bit accuracy that crests and troughs can be distinguished is ensured in the waveform of the first vertical-block projection data.

On the other hand, employing the very value of the first vertical-block projection data output from the vertical-block projection-data reading part 30 without performing the reduction of the number of bits in the n-arization part 314 might cause crests and troughs of small amplitude at which characteristics of an image appear to become lost in crests of large amplitude corresponding to the first vertical-block projection data $D>\alpha2$ and troughs of large amplitude corresponding to $D<(-\alpha2)$, which is not appropriate. Further, small crests and troughs corresponding to $(-\alpha2)\leq D\leq\alpha2$ are susceptible to noise and their number is large, in which crests and troughs of moderate amplitude at which characteristics of the image appear are to become lost.

Therefore, the n-arization part 314 achieves improved motion-vector detection accuracy by subjecting the first vertical-block projection data to an appropriate n-arization process.

Operations of the above-explained first-threshold intersection searching part 29, vertical-block projection-data reading part 30 and vertical-block horizontal-motion-vector calculating part 31 will be specifically explained referring to Fig. 11. The abscissa in Fig. 11(a) and (b) indicates the position of arrayed elements of the data array Mv (Fig. 9(b)) of projection data. Fig. 11(a) indicates first threshold intersections A(1) to A(8) by circles, respectively.

The first-threshold intersection searching part 29 obtains the first threshold intersections A(1) to A(8) which intersect the first threshold value $\alpha1$ output from the second vertical-block projection-data maximum-value storage part 28 in the waveform of the second vertical-block projection data W2 of the preceding frame, as shown in Fig. 11(a).

That is, the first-threshold intersection searching part 29 specifies the position of the arrayed elements of the respective first threshold intersections at which the waveform W2 obtained by graphing the values of the arrayed elements in the order of elements of the data array Mv (Fig. 9(b)) of projection data relating to the projection data obtained in the vertical-block projecting part 23 for the preceding frame and the line on which the values of the arrayed elements stand at the first threshold value (predetermined constant value) $\alpha 1$ intersect.

Next, the vertical-block projection-data reading part 30 reads the current-frame vertical-block projection data from the first vertical-block projection line memory 26 with respect to the predetermined motion vector detection range with the first threshold intersections A(1) to A(8) shown in Fig. 11(a) placed at its center.

That is, the vertical-block projection-data reading part 30 extracts data arrays in the predetermined range with the position of arrayed elements of projection data (data array) in the respective first threshold intersections placed at its center, from the current-frame (succeeding-frame) projection data output from the vertical-block projecting part 23 with the number of bits having been reduced by the bit-number reducing part 25.

For instance, with respect to the first threshold intersection A(7), first vertical-block projection data W1 corresponding to the range (the waveform portion within a rectangle indicated by broken lines) from (A(7)-V) to (A (7)+V) with the first threshold intersection A(7) as shown in Fig. 11(b) placed at its center is read.

Then, the first vertical-block projection data read by the vertical-block projection-data reading part 30 is subjected to the n-arization process in the n-arization part 314 of the vertical-block horizontal-motion-vector calculating part 31 using the second threshold value $\alpha 2$ output from the first vertical-block projection-data maximum-value storage part 24.

For instance, with respect to the first threshold intersection A(7), the first vertical-block projection data is subjected to the ternarization process as shown in Fig. 11(c) in the range (the waveform portion within a rectangle indicated by broken lines) from (A(7)-V) to (A(7)+V) with the first threshold intersection A(7) placed at its center, on the basis of the large-and-small relation between the first vertical-block projection data W1 with respect to the second threshold values $\alpha 2$ and ($-\alpha 2$) shown in Fig. 11(b). Accordingly, the current-frame vertical-block projection data is to be expressed by "-1", "0" or "+1".

The n-arization part 314 performs an n-arization process as shown in Fig. 11(c) for all the first threshold intersections output from the first-threshold intersection searching part 29.

Next, the adder 315 (Fig. 5) adds the first vertical-block projection data n-arized by the n-arization part 314 and the added values of data n-arized up to the last one read from the horizontal-motion-vector adding memory 316 with the first threshold intersection output from the first-threshold intersection searching part 29 through the input terminal 313 placed at its center, and the result of addition is stored again in the horizontal-motion-vector adding memory 316.

Then, the first vertical-block projection data n-arized relating to the last one of all the first threshold intersections detected by the first-threshold intersection searching part 29 is added by the adder 315, and when the addition process for one vertical block is finished, the result of addition is to be output to the peak detector 317.

After the completion of the addition process in the adder 315, the result of addition may be read by the peak detector 317 from the horizontal-motion-vector adding memory 316 which stores the results of addition for all the first threshold intersections.

Data obtained by adding the first vertical-block projection data having been n-arized corresponding to the motion vector detection range (aforementioned range of $\pm$ V) with each first threshold intersection placed at its center, to all the first threshold intersections detected by the first-threshold intersection searching part 29 (hereinafter also referred to as "vertical-block n-arized data") is input to the peak detector 317, and a peak value of this vertical-block n-arized data is detected by the peak detector 317.

The peak position of the vertical-block n-arized data detected in the peak detector 317 is to be a horizontal motion vector obtained from that vertical block, and output to the horizontal-motion-vector determining part 32 through the output terminal 318.

Operations of the above-explained adder 315 and peak detector 317 will be specifically explained referring to Fig. 12. Fig. 12(a) conceptually shows the first vertical-block projection data ternarized in the motion vector detection range (aforementioned range of $\pm$ V) with the first threshold intersections A(1) to A(8) shown in Fig. 11(a) placed at its center.

When the ternarized data around the first threshold intersections A(1) to A(8) shown in Fig. 12(a) is sequentially input, the adder 315 adds these pieces of data, and the vertical-block n-arized data as shown in Fig. 12(b) is generated.

Specifically, the adder 315 adds values of arrayed elements having the same relative position with respect to the position of arrayed element of each first threshold intersection, for each data array in the motion vector detection range (predetermined range) of the current frame extracted by the vertical-block projection-data reading part 30 from the vertical-block projection data (data array Mv (Fig. 9(b)) and compressed in data length in the n-arization part 314.

When the vertical-block n-arized data generated in the adder 315 is input to the peak detector 317, the peak position hv in the horizontal direction shown in Fig. 12(b) is detected as the horizontal motion vector of that vertical block. That is, the peak detector 317 detects the motion vector in the horizontal direction of a frame image on the basis of the result of addition added in the adder 315.

This peak detector 317 basically searches a peak position that reaches its maximum value in the motion vector detection range (range of ± V), but in the case where there are a plurality of the same maximum values, one that is close to the origin point 0 (in the case where some have the same distance to the origin point 0, one that is in a negative position) is given a high priority. Not limited to such detection rule of the peak position, the maximum value in a positive position may be given a high priority, or the tendency of motion vector in the preceding frame may be used in detection of the peak position of the current frame.

The horizontal motion vectors calculated for the respective vertical blocks in the peak detector 317 are sequentially input to the horizontal-motion-vector determining part 32 through the output terminal 318.

The horizontal-motion-vector determining part 32 determines the horizontal motion vector of the entire image on the basis of the horizontal motion vectors of the respective vertical blocks sequentially output from the vertical-block horizontal-motion-vector calculating part 31. This horizontal-motion-vector determining part 32 defines a horizontal motion vector that occurs with the highest frequency of appearance as the horizontal motion vector of the entire image.

It is not always necessary to define the horizontal motion vector that occurs with the highest frequency of appearance as the horizontal motion vector of the entire image, but the average value of the horizontal motion vectors of the respective vertical blocks output from the vertical-block horizontal-motion-vector calculating part 31 may be defined as the horizontal motion vector of the entire image.

As described above, the horizontal-motion-vector determining part 32 determines the horizontal motion vector of the entire image on the basis of the horizontal motion vectors of the respective vertical blocks, which allows suppression of an improper reaction to a movement, if any, occurring in part of the image.

In detecting the horizontal motion vector of the entire frame image, it is not necessarily required to use the entire frame image, but a horizontal motion vector may be detected from part of the frame image, and it may be defined as the horizontal motion vector of the entire frame image.

Next, the operation the vertical-motion-vector detecting section 4 for detecting a vertical motion vector of an image in the motion-vector detection device I will be explained.

When a frame image read by sequentially repeating pixel scanning of horizontal lines in the vertical direction as shown in Fig. 2 is input to the input terminal 40 of the vertical-motion-vector detecting section 4 shown in Fig. 6, it is divided into blocks in the horizontal direction by the horizontal image-dividing part 41. That is, the horizontal image-dividing part 41 defines a plurality of image regions (horizontal blocks) obtained by horizontally dividing the frame image. In subsequent processes, processing and control is thereby carried out per horizontal block.

In the horizontal image-dividing part 41, image data of 640 pixels by 480 pixels as shown in, for example, Fig. 13(a) is divided into ten horizontal blocks hb0 to hb9 having a width of 64 pixels (division width) in the horizontal direction. Here, setting the division width and number of divisions as shown in Fig. 13(a) is not always necessary.

The image divided into the ten vertical blocks hb0 to hb9 in the horizontal image-dividing part 41 as shown in Fig. 13(a) is subjected to detection of an edge component extending in the horizontal direction, in other words, a filtering process for enhancing an image portion abruptly changing in the vertical direction, in the horizontal-edge detection filtering part 42. As a filter for use in this filtering process, a (1, -1) 2-tap filter for simply obtaining the difference from an adjacent pixel in the vertical direction, a (-1, 2, -1) 3-tap filter corresponding to a second derivative or the like can be employed. The use of such filter is not always necessary, and a filter that increases the output value in an image portion whose change in luminance increases in the vertical direction will do.

Image data whose horizontal edge has been enhanced for each of the horizontal blocks (image regions) hb0 to hb9 in the horizontal-edge detection filtering part 42 is input to the horizontal-block projecting part 43, and projected in the horizontal direction by the horizontal-block projecting part 43. With this projection, a noise component (between lines) in the horizontal direction can be reduced, and the horizontal edge component can further be enhanced, so that the horizontal edge corresponding to a characteristic point is made distinctive, which achieves improved motion-vector detection accuracy. The operation of the horizontal-block projecting part 43 will be described with reference to the conceptual drawing shown in Fig. 13 (b).

In the horizontal-block projecting part 43, one arrayed element of horizontal-block projection data hn0 to hn9 (Fig. 13(b)) having a data array Mh for one vertical line is generated at the time when input of the respective horizontal blocks hb0 to hb9 shown in Fig. 13(a) is completed. Accordingly, all arrayed elements are completed at the time when input of the last horizontal line of each of the edge-enhanced horizontal blocks hb0 to hb9 is completed. While the data array Mh contains arrayed elements of the total pixel number of a vertical line (e.g., 480), valid elements in a 2-tap filter such as (1, -1) is the total pixel number of the vertical line minus 1 (e.g., 479), and valid elements in a 3-tap filter such as (-1, 2, -1) is the total pixel number of the vertical line minus 2 (e.g., 478).

Specifically, image data of the respective horizontal blocks hb0 to hb9 (image data whose horizontal edge has been enhanced) input through the input terminal 431 as shown in Fig. 7 is sequentially input to the adder 432. The adder 432, first, writes the leading horizontal line of the input horizontal block into the horizontal-projection temporary storage memory 433 without reading data within the horizontal-projection temporary storage memory 433.

Next, the adder 432 reads the result of addition up to the preceding pixel of one horizontal line stored in the horizontal-projection temporary storage memory 433, and carries out an addition with the current pixel of one horizontal line of the horizontal block input through the input terminal 431, and writes back the result of addition into the horizontal-projection temporary storage memory 433.

Then, when the last pixel of one horizontal line in the horizontal block is input to the adder 432, the result of addition up to the preceding pixel stored in the horizontal-projection temporary storage memory 433 is read, and an addition with the last pixel of one horizontal line of the horizontal block input through the input terminal 431 is carried out, and the result of addition, that is, data obtained by adding all the pixels of one horizontal line of the horizontal block is output to the first horizontal-block projection line memory 44 and first horizontal-block projection-data maximum-value storage part 45 through the output terminal 434, as projection data for one horizontal line of the horizontal block.

In the adder 432, the projection data obtained by adding all the pixels of one horizontal line of the horizontal block may be once stored in the horizontal-projection temporary storage memory 433, and when the leading pixel of one horizontal line of the succeeding horizontal block is input, the projection data within the horizontal-projection temporary storage memory 433 may be read to be output through the output terminal 434.

The first horizontal-block projection line memory 44 stores the current-frame horizontal-block projection data input from the horizontal-block projecting part 43 as the first horizontal-block projection data, per horizontal block.

The first horizontal-block projection-data maximum-value storage part 45 calculates the maximum value of the horizontal-block projection data input from the horizontal-block projecting part 43 and stores it as the first horizontal-block projection-data maximum value (current-frame horizontal-block projection-data maximum value).

The second horizontal-block projection line memory 46 stores the horizontal-block projection data read from the first horizontal-block projection line memory 44 as the second horizontal-block projection data of the preceding frame.

Similarly, the second horizontal-block projection-data maximum-value storage part 47 stores the first horizontal-block projection-data maximum value output from the first horizontal-block projection-data maximum-value storage part 45 as the second horizontal-block projection-data maximum value of the preceding frame (preceding-frame horizontal-block projection-data maximum value).

In other words, the current-frame horizontal-block projection-data maximum value stored in the first horizontal-block projection-data maximum-value storage part 45 is to be stored in the second horizontal-block projection-data maximum-value storage part 47 in the succeeding frame as the preceding-frame horizontal-block projection-data maximum value.

Further, the second horizontal-block projection-data maximum-value storage part 47 calculates the fourth threshold value on the basis of the calculated preceding-frame horizontal-block projection-data maximum value. For instance, defining the preceding-frame horizontal-block projection-data maximum value as P4max, the fourth threshold value $\alpha 4$ is calculated by the following equation (3):

$$\alpha 4 = P4max \times k4 \ \ldots \ (3)$$

where k4 is a previously-determined coefficient satisfying $0<k4<1$.

The calculation of the fourth threshold value $\alpha 4$ is not limited to the above equation (3), but may be anything that makes the fourth threshold value $\alpha 4$ larger as the preceding-frame horizontal-block projection-data maximum value P4max increases, or alternatively, a conversion table may be used. Further, it is not always necessary to use the second horizontal-block projection-data maximum value of each horizontal block for the fourth threshold value $\alpha 4$, but the fourth threshold value may be calculated using the horizontal-block projection-data maximum value of the entire image of the preceding frame, and the same fourth threshold value may be employed for the entire image.

The second horizontal-block projection-data maximum-value storage part 47 determines the third threshold value (predetermined constant value) on the basis of the second horizontal-block projection-data maximum value of the preceding frame. For instance, defining the preceding-frame horizontal-block projection-data maximum value as P3max, the third threshold value $\alpha 3$ is calculated by the following equation (4):

$$\alpha 3 = P3max \times k3 \ \ldots \ (4)$$

where k3 is a previously-determined coefficient satisfying $0<k3<1$.

The calculation of the third threshold value $\alpha 3$ is not limited to the above equation (4), but may be anything that makes the third threshold value $\alpha 3$ larger as

the preceding-frame horizontal-block projection-data maximum value P3max increases, or alternatively, a conversion table may be used. Further, it is not always necessary to use the second horizontal-block projection-data maximum value of each horizontal block for the third threshold value α3, but the third threshold value may be calculated using the horizontal-block projection-data maximum value of the entire image of the preceding frame, and the same third threshold value may be employed for the entire image.

The third-threshold intersection searching part 48 searches an intersection (third threshold intersection) of the second horizontal-block projection data read from the second horizontal-block projection line memory 46 and the third threshold value output from the second horizontal-block projection-data maximum-value storage part 47, in the vertical direction. Information on this third threshold intersection obtained in this third-threshold intersection searching part 48 is output to the horizontal-block projection-data reading part 49 and horizontal-block vertical-motion-vector calculating part 50.

The horizontal-block projection-data reading part 49 reads the current-frame (first) horizontal-block projection data corresponding to the motion vector detection range with the third threshold intersection output from the third-threshold intersection searching part 48 placed at its center, from the first horizontal-block projection line memory 44.

That is, letting the third threshold intersection be B(i) (where i = 1, 2, ... q; q is the total number of third threshold intersections as detected), and the motion vector detection range be (-U) to (+U) (where U is a positive integer) with the third threshold intersection placed at its center, the projection data read from the first horizontal-block projection line memory 44 is to be partial data of the first horizontal-block projection data falling within the range of (B(i)-U) to (B(i)+U) in the vertical direction.

The first horizontal-block projection data read from the first horizontal-block projection line memory 44 by this horizontal-block projection-data reading part 49 is output to the horizontal-block vertical-motion-vector calculating part 50.

The first horizontal-block projection data output from the horizontal-block projection-data reading part 49 is input to the n-arization part 504 (compression means) through the input terminal 501 of the horizontal-block vertical-motion-vector calculating part 50 shown in Fig. 8.

This n-arization part 504 n-arizes the first horizontal-block projection data on the basis of the fourth threshold value output from the second horizontal-block projection-data maximum-value storage part 47 and input through the input terminal 502.

That is, the n-arization part 504 compresses the data length of each arrayed element of the data array Mh (Fig. 13(b)) of the current-frame projection data extracted in the horizontal-block projection-data reading part 49. The n-arization part 504 performs processing similar to the aforementioned n-arization part 314, where a ternarization process, for example, is executed.

That is, in the ternarization process in the n-arization part 504, relating to the fourth threshold value α4 (α4>0) defined on the basis of the maximum value of the arrayed elements of the data array Mh in the preceding-frame projection data, ternarization is performed in three levels of: the case where the value of an arrayed element of the current-frame projection data extracted in the horizontal-block projection-data reading part 49 is smaller than (-α4); the case where it is not smaller than (-α4) and not larger than α4; and the case where it is larger than α4. It is not absolutely necessary that the n-arization part 504 have the same characteristics as the n-arization part 314, but it may have different characteristics from the n-arization part 314.

Operations of the above-explained third-threshold intersection searching part 48, and horizontal-block projection-data reading part 49 and horizontal-block vertical-motion-vector calculating part 50 will be specifically explained referring to Fig. 14. The abscissa in Fig. 14(a) and (b) indicates the position of arrayed elements of the data array Mh (Fig. 13(b)) of projection data. Fig. 14(a) indicates third threshold intersections B (1) to B(6) by circles, respectively.

The third-threshold intersection searching part 48 obtains the third threshold intersections B(1) to B(6) which intersect the third threshold value α3 output from the second horizontal-block projection-data maximum-value storage part 47 in the waveform of second horizontal-block projection data W4 of the preceding frame, as shown in Fig. 14(a).

That is, the third-threshold intersection searching part 48 specifies the position of the arrayed elements of the respective third threshold intersections at which the waveform W4 obtained by graphing the values of the arrayed elements in the order of elements of the data array Mh (Fig. 13(b)) of projection data relating to the projection data obtained in the horizontal-block projecting part 43 for the preceding frame and the line on which the values of the arrayed elements stand at the third threshold value (predetermined constant value) α3 intersect.

Next, the horizontal-block projection-data reading part 49 reads the current-frame horizontal-block projection data from the first horizontal-block projection line memory 44 with respect to the predetermined motion vector detection range with the third threshold intersections B(1) to B(6) shown in Fig. 14(a) placed at its center.

That is, the horizontal-block projection-data reading part 49 extracts data arrays in the predetermined range with the position of arrayed elements of projection data (data array) in each third threshold intersection placed at its center, from the current-frame (succeeding-frame) projection data obtained from the horizontal-block projecting part 43. For instance, with respect to the third threshold intersection B(4), first horizontal-block projection data W3 corresponding to the range (the waveform portion within a rectangle indicated by broken lines) from (B(4)-U) to (B(4)+U) with the third threshold intersection B(4) as shown in Fig. 14(b) placed at its center is read.

Then, the first horizontal-block projection data read by the horizontal-block projection-data reading part 49 is subjected to the n-arization process in the n-arization part 504 of the horizontal-block vertical-motion-vector calculating part 50 using the fourth threshold value $\alpha4$ output from the second horizontal-block projection-data maximum-value storage part 47.

For instance, with respect to the third threshold intersection B(4), the first horizontal-block projection data is subjected to the ternarization process as shown in Fig. 14(c) in the range (the waveform portion within a rectangle indicated by broken lines) from (B(4)-U) to (B(4)+U) with the third threshold intersection B(4) placed at its center, on the basis of the large-and-small relation between the first horizontal-block projection data W3 with respect to the fourth threshold values $\alpha4$ and ($-\alpha4$) shown in Fig. 14(b). Accordingly, the current-frame horizontal-block projection data is to be expressed by "-1", "0" or "+1".

The n-arization part 504 performs an n-arization process as shown in Fig. 14(c) for all the third threshold intersections output from the third-threshold intersection searching part 48.

Next, the adder 505 (Fig. 8) adds the first horizontal-block projection data n-arized by the n-arization part 504 and the added values of data n-arized up to the last one read from the vertical-motion-vector adding memory 506 with the third threshold intersection output from the third-threshold intersection searching part 48 through the input terminal 503 placed at its center, and the result of addition is stored again in the vertical-motion-vector adding memory 506.

Then, the first horizontal-block projection data n-arized relating to the last one of all the third threshold intersections detected by the third-threshold intersection searching part 48 is added by the adder 505, and when the addition process for one horizontal block is finished, the result of addition is to be output to the peak detector 507.

After the completion of the addition process in the adder 505, the result of addition may be read by the peak detector 507 from the vertical-motion-vector adding memory 506 which stores the results of addition for all the third threshold intersections.

Data obtained by adding the first horizontal-block projection data having been n-arized corresponding to the motion vector detection range (aforementioned range of $\pm$ U) with each third threshold intersection placed at its center, to all the third threshold intersections detected by the third-threshold intersection searching part 48 (hereinafter also referred to as "horizontal-block n-arized data") is input to the peak detector 507, and a peak value of this horizontal-block n-arized data is detected by the peak detector 507.

The peak position of the horizontal-block n-arized data detected in the peak detector 507 is to be a vertical motion vector obtained from that horizontal block, and output to the vertical-motion-vector determining part 51 through the output terminal 508.

Operations of the above-explained adder 505 and peak detector 507 will be specifically explained referring to Fig. 15. Fig. 15(a) conceptually shows the first horizontal-block projection data ternarized in the motion vector detection range (aforementioned range of $\pm$ U) with the third threshold intersections B(1) to B(6) shown in Fig. 14(a) placed at its center.

When the ternarized data around the third threshold intersections B(1) to B(6) shown in Fig. 15(a) is sequentially input, the adder 505 adds these pieces of data, and the horizontal-block n-arized data as shown in Fig. 15(b) is generated. Specifically, the adder 505 adds values of arrayed elements having the same relative position with respect to the position of arrayed element of each third threshold intersection, for each data array in the motion vector detection range (predetermined range) of the current frame extracted from the horizontal-block projection data (data array Mv (Fig. 9(b))) by the horizontal-block projection-data reading part 49 and compressed in data length in the n-arization part 504.

When the horizontal-block n-arized data generated in the adder 505 is input to the peak detector 507, the peak position vv in the vertical direction shown in Fig. 15(b) is detected as the vertical motion vector of that horizontal block. That is, the peak detector 507 detects the motion vector in the vertical direction of a frame image on the basis of the result of addition added in the adder 505.

This peak detector 507 basically searches a peak position that reaches its maximum value in the motion vector detection range (range of $\pm$ U), but in the case where there are a plurality of the same maximum values, one that is close to the origin point 0 (in the case where some have the same distance to the origin point 0, one that is in a negative position) is given a high priority. Not limited to such detection rule of the peak position, the maximum value in a positive position may be given a high priority, or the tendency of motion vector in the preceding frame may be used in detection of the peak position of the current frame.

The vertical motion vectors calculated for the respective horizontal blocks in the peak detector 507 are sequentially input to the vertical-motion-vector determining part 51 through the output terminal 508.

The vertical-motion-vector determining part 51 determines the vertical motion vector of the entire image on the basis of the vertical motion vectors of the respective horizontal blocks sequentially output from the horizontal-block vertical-motion-vector calculating part 50. This vertical-motion-vector determining part 51 defines a vertical motion vector that occurs with the highest frequency of appearance as the vertical motion vector of the entire image.

It is not always necessary to define the vertical motion vector that occurs with the highest frequency of appearance as the vertical motion vector of the entire image, but the average value of the vertical motion vectors of the respective horizontal blocks sequentially output from the horizontal-block vertical-motion-vector calculating part 50 may be defined as the vertical motion vector of the entire image.

As described above, the vertical-motion-vector determining part 51 determines the vertical motion vector of the entire image on the basis of the vertical motion vectors of the respective horizontal blocks, which allows suppression of an improper reaction to a movement, if any, occurring in part of the image.

In detecting the vertical motion vector of the entire frame image, it is not necessarily required to use the entire frame image, but a vertical motion vector may be detected from part of the frame image, and it may be defined as the vertical motion vector of the entire frame image.

<Effects>

With the operations of the above-described motion-vector detection device 1, a vertical projection of each vertical block whose vertical edge has been enhanced is obtained to generate the vertical-block projection data, and the current-frame vertical-block projection data corresponding to the motion vector detection range with the intersection (first threshold intersection) of the preceding-frame vertical-block projection data and first threshold value $\alpha 1$ placed at its center to be added per distance from each first threshold intersection, to detect the motion vector in the horizontal direction from the result of addition, which allows a movement of the vertical edge of an image corresponding to a characteristic point to be followed with a small amount of calculations.

Similarly, a horizontal projection of each horizontal block whose horizontal edge has been enhanced is obtained to generate the horizontal-block projection data, and the current-frame horizontal-block projection data corresponding to the motion vector detection range with the intersection (third threshold intersection) of the preceding-frame horizontal-block projection data and third threshold value $\alpha 3$ placed at its center to be added per distance from each third threshold intersection, to detect the motion vector in the vertical direction from the result of addition, which allows a movement of the horizontal edge of an image corresponding to a characteristic point to be followed with a small amount of calculations. As a result, detection of motion vectors in the horizontal direction and vertical direction can be performed accurately and promptly.

Since the bit-number reducing part 25 of the motion-vector detection device 1 reduces the number of bits of the current-frame vertical-block projection data on the basis of the current-frame vertical-block projection data obtained by the first vertical-block projection-data maximum-value storage part 24, the amount of calculations in the subsequent process can be suppressed, which permits more prompt detection of a motion vector.

Since the motion-vector detection device 1 obtains the second vertical-block projection-data maximum value of the preceding frame and determines the first threshold value $\alpha 1$ on the basis of this maximum value, an appropriate first threshold intersection can be determined. Similarly, since it obtains the second horizontal-block projection-data maximum value of the preceding frame and determines the third threshold value $\alpha 3$ on the basis of this maximum value, an appropriate third threshold intersection can be determined.

Since the motion-vector detection device 1 enhances the vertical edge of each divided image (vertical block) after dividing a frame image in the vertical direction by the vertical image-dividing part 21, a divided image whose vertical edge has been enhanced can be generated simply. Similarly, since it enhances the horizontal edge of each divided image (horizontal block) after dividing a frame image in the horizontal direction by the horizontal image-dividing part 41, a divided image whose horizontal edge has been enhanced can be generated simply.

Further, in the motion-vector detection device 1, since projection data read by the vertical-block projection-data reading part 30 is n-arized in the n-arization part 314 of the vertical-block horizontal-motion-vector calculating part 31, the amount of subsequent calculations can be reduced, allowing motion vector detection to be performed more promptly. Particularly, since the n-arization part 314 performs ternarization on the basis of the second threshold value $\alpha 2$ determined on the basis of the vertical-block projection-data maximum value of the current frame, motion vector detection capable of achieving real time processing while ensuring a relatively large dynamic range can be achieved. Further, the memory can be reduced significantly.

Similarly, since projection data read in the horizontal-block projection-data reading part 49 is n-arized in the n-arization part 504 of the horizontal-block vertical-motion-vector calculating part 50, the amount of subsequent calculations can be reduced, allowing motion vector detection to be performed more promptly. Particularly, since the n-arization part 504 performs ternarization on the basis of the fourth threshold value $\alpha 4$ determined on the basis of the horizontal-block projection-data maximum value of the preceding frame, motion vector detection capable of achieving real time processing without losing the dynamic range greatly can be achieved. Further, the memory can be reduced significantly.

Second embodiment

<Configuration of motion-vector detection device 1A>

As shown in Fig. 1, a motion-vector detection device 1A according to a second embodiment of the present invention has a similar configuration to the motion-vector detection device 1 according to the first embodiment, but is different in configuration of the horizontal motion vector detecting section and vertical motion vector detecting section. The configurations of a horizontal-motion-vector detecting section 2A and a vertical-motion-vector detecting section 4A in the motion-vector detection device 1A will be described referring to Figs. 16 and 17.

Fig. 16 is a block diagram showing an essential configuration of the horizontal-motion-vector detecting section 2A. In Fig. 16, sections having similar functions as the horizontal-motion-vector detecting section 2 described in the first embodiment are indicated by the same characters, and repeated description will be omitted.

In the edge enhancing means of the horizontal-motion-vector detecting section 2A, the vertical image-dividing part 21 and vertical-edge detection filtering part 22 are disposed in reverse order with respect to the edge enhancing means of the horizontal-motion-vector detecting section 2 of the first embodiment.

<Operation of motion-vector detection device 1 A>

**[0189]** , the operation of the horizontal-motion-vector detecting section 2A will be described.

When a frame image read by sequentially repeating pixel scanning of horizontal lines in the vertical direction as shown in Fig. 2 is input to the input terminal 20 of the horizontal-motion-vector detecting section 2A, it is subjected to detection of an edge component extending in the vertical direction, in other words, a filtering process for enhancing an image portion abruptly changing in the horizontal direction, in the vertical-edge detection filtering part 22.

When the frame image whose vertical edge has been enhanced in the vertical-edge detection filtering part 22 is input to the vertical image-dividing part 21, it is divided into blocks in the vertical direction. That is, the vertical image-dividing part 21 defines a plurality of image regions (vertical blocks) obtained by vertically dividing the edge-enhanced frame image. In subsequent processes, processing and control is thereby carried out per vertical block.

The image data divided in the vertical image-dividing part 21 is input to the vertical-block projecting part 23, and the process in the vertical-block projecting part 23 and subsequent processes are carried out similarly to the horizontal-motion-vector detecting section 2 of the first embodiment.

Fig. 17 is a block diagram showing an essential configuration of the vertical-motion-vector detecting section 4A. In Fig. 17, sections having similar functions as the vertical-motion-vector detecting section 4 described in the first embodiment are indicated by the same characters, and repeated description will be omitted.

In the edge enhancing means of the vertical-motion-vector detecting section 4A, the horizontal image-dividing part 41 and horizontal-edge detection filtering part 42 are disposed in reverse order with respect to the edge enhancing means of the vertical-motion-vector detecting section 4 of the first embodiment. The operation of the vertical-motion-vector detecting section 4A will be described.

When a frame image read by sequentially repeating pixel scanning of horizontal lines in the vertical direction as shown in Fig. 2 is input to the input terminal 40 of the vertical-motion-vector detecting section 4A shown in Fig. 3, it is subjected to detection of an edge component extending in the horizontal direction, in other words, a filtering process for enhancing an image portion abruptly changing in the vertical direction, in the horizontal-edge detection filtering part 42.

When the frame image whose horizontal edge has been enhanced in the horizontal-edge detection filtering part 42 is input to the horizontal image-dividing part 41, it is divided into blocks in the horizontal direction. That is, the horizontal image-dividing part 41 defines a plurality of image regions (horizontal blocks) obtained by horizontally dividing the edge-enhanced frame image. In subsequent processes, processing and control is thereby carried out per horizontal block.

The image data divided in the horizontal image-dividing part 41 is input to the horizontal-block projecting part 43, and the process in the horizontal-block projecting part 43 and subsequent processes are carried out similarly to the vertical-motion-vector detecting section 4 of the first embodiment.

<Effects>

With the above-described operations of the motion-vector detection device 1A, similar effects to the first embodiment are achieved.

Further, in the motion-vector detection device 1A, the frame image is subjected to vertical edge enhancement in the vertical-edge detection filtering part 22, and then the edge-enhanced frame image is divided in the vertical direction in the vertical image-dividing part 21, so that a divided image whose vertical edge has been enhanced can be generated simply.

Similarly, the frame image is subjected to horizontal edge enhancement in the horizontal-edge detection filtering part 42, and then the edge-enhanced frame image is divided in the horizontal direction in the horizontal image-dividing part 41, so that a divided image whose horizontal edge has been enhanced can be generated simply.

In the motion-vector detection device 1A, it is not essential to dispose the vertical-edge detection filtering part 22 and horizontal-edge detection filtering part 42 separately in the horizontal-motion-vector detecting section 2A and vertical-motion-vector detecting section 4A, respectively, but a horizontal/vertical-edge extraction filtering part which combines the functions of both the vertical-edge detection filtering part 22 and horizontal-edge detection filtering part 42 may be provided, and its output may be input to both the vertical image-dividing part 21 and horizontal image-dividing part 41.

Third embodiment

<Configuration of motion-vector detection device 1B>

As shown in Fig. 1, a motion-vector detection device 1B according to a third embodiment of the present invention has similar configuration to the motion-vector detection device 1 according to the first embodiment, but is different in configuration of the horizontal motion vector detecting section and vertical motion vector detecting section.

Hereinafter, the configurations of a horizontal-motion-vector detecting section 2B and a vertical-motion-vector detecting section 4B in the motion-vector detection device 1B will be described.

Fig. 18 is a block diagram showing an essential configuration of the horizontal-motion-vector detecting section 2B. In Fig. 18, sections having similar functions as the horizontal-motion-vector detecting section 2 described in the first embodiment are indicated by the same characters, and repeated description will be omitted.

The horizontal-motion-vector detecting section 2B includes the input terminal 20, vertical image-dividing part 21, vertical-edge detection filtering part 22, vertical-block projecting part 23, first vertical-block projection-data maximum-value storage part 24, bit-number reducing part 25, first vertical-block projection line memory 26. Further, the horizontal-motion-vector detecting section 2 includes second vertical-block projection line memory 27, second vertical-block projection-data maximum-value storage part 28, first-threshold intersection searching part 29, vertical-block projection-data reading part 30, vertical-block horizontal-motion-vector calculating part 310, horizontal-motion-vector determining part 320, and output terminal 33.

In the above-described horizontal-motion-vector detecting section 2B, the vertical-block horizontal-motion-vector calculating part 310 and horizontal-motion-vector determining part 320 are different in function from the vertical-block horizontal-motion-vector calculating part 31 and horizontal-motion-vector determining part 32 of the horizontal-motion-vector detecting section 2 of the first embodiment.

That is, the vertical-block horizontal-motion-vector calculating part 310 reduces the number of bits by n-arizing (n is an integer not less than 2) each piece of the first vertical-block projection data read by the vertical-block projection-data reading part 30 using the second threshold value output from the first vertical-block projection-data maximum-value storage part 24, and adds the n-arized projection data per distance from the first threshold intersection. Then, information on the peak position (horizontal motion vector which will be described later) and peak value in the added data is supplied to the horizontal-motion-vector determining part 320.

Further, the horizontal-motion-vector determining part 320 determines a horizontal motion vector of an image on the basis of the output from the vertical-block horizontal-motion-vector calculating part 31. The horizontal motion vector determined here is output through the output terminal 33. The horizontal-motion-vector determining part 320 is configured to receive the first vertical-block projection-data maximum value stored in the first vertical-block projection-data maximum-value storage part 24 and information on the first threshold intersections output from the first-threshold intersection searching part 29, and use them in processing for increasing reliability of the horizontal motion vector. A specific operation will be described later.

Fig. 19 is a block diagram showing an essential configuration of the vertical-block horizontal-motion-vector calculating part 310.

The vertical-block horizontal-motion-vector calculating part 310 includes three input terminals 311 to 313, n-arization part 314, adder 315 for adding the first vertical-block projection data having been n-arized in the n-arization part 314, horizontal-motion-vector adding memory 316 as a buffer memory for successively storing data added by the adder 315, peak detector 3170, and output terminals 318 and 319.

The first vertical-block projection data output from the vertical-block projection-data reading part 30 is input to the input terminal 311. The second threshold value output from the first vertical-block projection-data maximum-value storage part 24 is input to the input terminal 312. Further, the information on the first threshold intersections output from the first-threshold intersection searching part 29 is input to the input terminal 313.

The n-arization part 314 n-arizes (e.g., temarizes) the first vertical-block projection data input through the input terminal 311 on the basis of the second threshold value input through the input terminal 312.

The adder 315 adds the first vertical-block projection data n-arized by the n-arization part 314 and the data read from the horizontal-motion-vector adding memory 316 with the first threshold intersection placed at its center, and the result of addition is stored again in the horizontal-motion-vector adding memory 316. When addition of all the first threshold intersections for the vertical blocks is completed by repeating such adding operation, added data for the vertical blocks is output to the peak detector 3170.

The peak detector 3170 detects the peak position (horizontal motion vector which will be described later) and peak value in the added data output from the adder 315. This peak position detected by the peak detector 3170 is to be input to the horizontal-motion-vector determining part 320 through the output terminal 318, and the peak value is to be input to the horizontal-motion-vector determining part 320 through the output terminal 319.

Next, the configuration of the vertical-motion-vector detecting section 4B will be described. Fig. 20 is a block diagram showing an essential configuration of the vertical-motion-vector detecting section 4B.

The vertical-motion-vector detecting section 4B includes an input terminal 40, a horizontal image-dividing part 41, a horizontal-edge detection filtering part 42, horizontal-block projecting part 43, a first horizontal-block projection line memory 44, and a first horizontal-block projection-data maximum-value storage part 45. Further, the vertical-motion-vector detecting section 4 includes a second horizontal-block projection line memory 46, a second horizontal-block projection-data maximum-value storage part 47, a third-threshold intersection searching part 48, a horizontal-block projection-data reading part 49, a horizontal-block vertical-motion-vector calculating part 500, a vertical-motion-vector determining part 510, and an output terminal 52.

In the above-described vertical-motion-vector detecting section 4B, the horizontal-block vertical-motion-vector calculating part 500 and vertical-motion-vector determining part 510 are different in function from the horizontal-block vertical-motion-vector calculating part 50 and vertical-motion-vector determining part 51 of the vertical-motion-vector detecting section 4 of the first embodiment.

That is, the horizontal-block vertical-motion-vector calculating part 500 n-arizes (where n is an integer not less than 2) each piece of the first horizontal-block projection data read by the horizontal-block projection-data reading part 49 using the fourth threshold value output from the second horizontal-block projection-data maximum-value storage part 47, thereby reducing the number of bits, and adds the n-arized projection data per distance from the third threshold intersection. Then, it supplies the peak position (a vertical motion vector which will be described later) and peak value in the added data to the vertical-motion-vector determining part 510.

The vertical-motion-vector determining part 510 determines the vertical motion vector of the image on the basis of the output from the horizontal-block vertical-motion-vector calculating part 500. The vertical motion vector of the image determined here is output through the output terminal 52. The vertical-motion-vector determining part 510 is configured to receive the first horizontal-block projection-data maximum value stored in the first horizontal-block projection-data maximum-value storage part 45 and information on the third threshold intersections output from the third-threshold intersection searching part 48, and use them in processing for increasing reliability of the vertical motion vector. A specific operation will be described later.

Fig. 21 is a block diagram showing an essential configuration of the horizontal-block vertical-motion-vector calculating part 500.

The horizontal-block vertical-motion-vector calculating part 500 includes three input terminals 501 to 503, n-arization part 504, adder 505 for adding the first horizontal-block projection data having been n-arized in the n-arization part 504, vertical-motion-vector adding memory 506 as a buffer memory for successively storing data added by the adder 505, peak detector 5070, and output terminals 508 and 509.

The first horizontal-block projection data output from the horizontal-block projection-data reading part 49 is input to the input terminal 501. The second threshold value output from the second horizontal-block projection-data maximum-value storage part 47 is input to the input terminal 502. Further, the information on the third threshold intersections output from the third-threshold intersection searching part 48 is input to the input terminal 503.

The n-arization part 504 n-arizes (e.g., ternarizes) the first horizontal-block projection data input through the input terminal 501 on the basis of the fourth threshold value input through the input terminal 502.

The adder 505 adds the first horizontal-block projection data n-arized by the n-arization part 504 and the data read from the vertical-motion-vector adding memory 506 with the third threshold intersection placed at its center, and the result of addition is stored again in the vertical-motion-vector adding memory 506. When addition of all the third threshold intersections for the horizontal blocks is completed by repeating such adding operation, added data for the horizontal blocks is output to the peak detector 5070.

The peak detector 5070 detects the peak position (vertical motion vector which will be described later) and peak value in the added data output from the adder 505. This peak position detected by the peak detector 507 is to be input to the vertical-motion-vector determining part 510 through the output terminal 508, and the peak value is to be input to the vertical-motion-vector determining part 510 through the output terminal 509.

The operation of the motion-vector detection device 1B having the above-described configuration will be described below.

<Operation of motion-vector detection device 1B>

<Operation of horizontal-motion-vector detecting section 2B>

First, the operation of the horizontal-motion-vector detecting section 2B for detecting a horizontal motion vector of an image in the motion-vector detection device 1B will be described.

The operation of the horizontal-motion-vector detecting section 2B is basically the same as the horizontal-motion-vector detecting section 2 described in the first embodiment, and repeated description will be omitted, and the operations of the vertical-block horizontal-motion-vector calculating part 310 and horizontal-motion-vector determining part 320 will be mainly described.

The first-threshold intersection searching part 29 searches an intersection (first threshold intersection) of the second vertical-block projection data read from the second vertical-block projection line memory 27 and the first threshold value output from the second vertical-block projection-data maximum-value storage part 28, in the horizontal direction. Information on first threshold intersections obtained in this first-threshold intersection searching part 29 is output to the vertical-block projection-data reading part 30, vertical-block horizontal-motion-vector calculating part 310 and horizontal-motion-vector determining part 320.

The vertical-block projection-data reading part 30 reads the current-frame (first) vertical-block projection data corresponding to the motion vector detection range with the first threshold intersection output from the first-threshold intersection searching part 29 placed at its center, from the first vertical-block projection line memory 26. That is, letting the first threshold intersection be A(i) (where i = 1, 2, ... p; p is the total number of first threshold intersections as detected), and the motion vector detection range be (-V) to (+V) (where V is a positive integer) with the first threshold intersection placed at its center, the projection data read from the first vertical-block projection line memory 26 is to be partial data of the first vertical-block projection data falling within the range of (A(i)-V) to (A(i)+V) in the horizontal direction.

The first vertical-block projection data read from the first vertical-block projection line memory 26 by this vertical-block projection-data reading part 30 is output to the vertical-block horizontal-motion-vector calculating part 310.

The first vertical-block projection data output from the vertical-block projection-data reading part 30 is input to the n-arization part 314 through the input terminal 311 of the vertical-block horizontal-motion-vector calculating part 310 shown in Fig. 19. The processing in this n-arization part 314 has already been described using Fig. 10, and description will be omitted.

Further, the operations of the first-threshold intersection searching part 29, vertical-block projection-data reading part 30 and vertical-block horizontal-motion-vector calculating part 310 (basically the same as the vertical-block horizontal-motion-vector calculating part 31) have already been described using Fig. 11, and description will be omitted.

The adder 315 (Fig. 19) adds the first vertical-block projection data n-arized by the n-arization part 314 and the added values of first vertical-block projection data n-arized up to the last one read from the horizontal-motion-vector adding memory 316 with the first threshold intersection output from the first-threshold intersection searching part 29 through the input terminal 313 placed at its center, and the result of addition is stored again in the horizontal-motion-vector adding memory 316. Then, the first vertical-block projection data n-arized relating to the last one of all the first threshold intersections detected by the first-threshold intersection searching part 29 is added by the adder 315, and when the addition process for one vertical block is finished, the result of addition is to be output to the peak detector 3170. After the completion of the addition process in the adder 315, the result of addition may be read by the peak detector 3170 from the horizontal-motion-vector adding memory 316 which stores the results of addition for all the first threshold intersections.

Data obtained by adding the first vertical-block projection data having been n-arized corresponding to the motion vector detection range (aforementioned range of ± V) with each first threshold intersection placed at its center, to all the first threshold intersections detected by the first-threshold intersection searching part 29 (hereinafter also referred to as "vertical-block n-arized data") is input to the peak detector 3170, and a peak value of this vertical-block n-arized data is detected by the peak detector 3170. The peak position of the vertical-block n-arized data detected by the peak detector 3170 will be the horizontal motion vector obtained from that vertical block, and input to the horizontal-motion-vector determining part 320 through the output terminal 318. Similarly, the peak value at that time is to be output through the output terminal 319.

The specific operations of the adder 315 and peak detector 3170 are basically similar to those of the adder 315 and peak detector 317 of the vertical-block horizontal-motion-vector calculating part 31 described using Fig. 12, and repeated description will be omitted, however, the horizontal motion vector (peak position) calculated for each vertical block by the peak detector 3170 and the peak value in added data of vertical blocks n-arized and added (hereinafter also referred to as "vertical-block n-arized-added-data peak value") are input to the horizontal-motion-vector determining part 320 through the output terminals 318 and 319, respectively, and the vertical-block n-arized-added-data peak value is used for judgment of validity/invalidity of vertical blocks.

The horizontal-motion-vector determining part 320 determines the horizontal motion vector of the entire image on the basis of horizontal motion vectors of the respective vertical blocks sequentially output from the vertical-block horizontal-motion-vector calculating part 310.

At this time, validity/invalidity of vertical blocks is judged on the basis of the first vertical-block projection-data maximum value output from the first vertical-block projection-data maximum-value storage part 24, vertical-block n-arized-added-data peak value output from the vertical-block horizontal-motion-vector calculating part 310 and information on the first threshold intersections output from the first-threshold intersection searching part 29. Then, the horizontal motion vector calculated from a vertical block judged as an invalid block shall not be used in determining the horizontal motion vector of the entire image.

<Judgment of validity/invalidity of vertical blocks>

<In the case of using first vertical-block projection-data maximum value>

The method for judging validity/invalidity of vertical blocks will be described below.

Fig. 22 is a diagram for explaining the method for judging validity/invalidity of vertical blocks using a first vertical-block projection-data maximum value.

Fig. 22 shows the case in which image data of 640 pixels by 480 pixels shown in Fig. 9(a), taken as an example, is divided into seven vertical blocks vb0 to vb6 having a width of 64 pixels (division width) in the vertical direction.

Further, Fig. 22 indicates the first vertical-block projection-data maximum value of each vertical block output from the first vertical-block projection-data maximum-value storage part 24 (Fig. 18) in hexadecimal notation for each block.

The horizontal-motion-vector determining part 320 obtains the maximum value of all the blocks from among the first vertical-block projection-data maximum values in the respective vertical blocks vb0 to vb6. In the example of Fig. 22, the vertical block vb2 has the maximum value in all the blocks, and this value will be called all-vertical-block projection-data maximum value.

Further, the horizontal-motion-vector determining part 320 judges a vertical block having a maximum value of not more than, e.g., a quarter of the all-vertical-block projection-data maximum value, as an invalid block. In the example of Fig. 22, the vertical blocks vb0, vb1 and vb6 are judged as invalid blocks.

Fig. 23 is a diagram schematically showing judgment of validity/invalidity of vertical blocks.

Fig. 23 shows a graph plotting the all-vertical-block projection-data maximum value in abscissa and first vertical-block projection-data maximum value in ordinate, and indicates that the blocks are divided into valid blocks and invalid blocks on the border of the line starting at the origin point and having an inclination of 1/4 (S = 1/4).

A vertical block judged as an invalid block can be said to be less characteristic picture pattern (having few clear points) or extremely detailed picture pattern, which are in result judged as having lower reliability than other valid blocks. Therefore, the horizontal motion vector can be improved in reliability by not using vertical blocks judged as invalid blocks in determination of the horizontal motion vector of the entire image.

In the above description, the validity/invalidity judging condition has been described as not more than a quarter of the all-vertical-block projection-data maximum value, however, this is not a restrictive example. Under some circumstances, it may be not more than a double or not more than one-eighth. In this manner, setting the judging condition at $1/2^n$ allows the validity/invalidity judgment to be carried out easily.

<In the case of using vertical-block n-arized-added-data peak value>

Fig. 24 is a diagram for explaining a method for judging validity/invalidity of vertical blocks using the vertical-block n-arized-added-data peak value.

Fig. 24 shows the case in which image data of 640 pixels by 480 pixels shown in Fig. 9(a), taken as an example, is divided into seven vertical blocks vb0 to vb6 having a width of 64 pixels (division width) in the vertical direction.

Further, Fig. 24 indicates the vertical-block n-arized-added-data peak value of each vertical block output from the vertical-block horizontal-motion-vector calculating part 310 (Fig. 18) in hexadecimal notation for each block.

The horizontal-motion-vector determining part 320 obtains the maximum value of the vertical-block n-arized-added-data peak values in the respective vertical blocks vb0 to vb6. In the example of Fig. 24, the vertical block vb4 has the maximum value, and this value will be called a maximum value of the vertical-block n-arized-added-data peak-value.

Further, the horizontal-motion-vector determining part 320 judges a vertical block having a vertical-block n-arized-added data not more than a predetermined value B (e.g., 7 in decimal notation) as an invalid block when the maximum value of the vertical-block n-arized-added-data peak-value is not less than a predetermined value A (e.g., 12 in decimal notation). In the example of Fig. 24, the vertical blocks vb0, vb1, vb5 and vb6 are judged as invalid blocks.

The output of the adder 315 (Fig. 19) of the vertical-block horizontal-motion-vector calculating part 310 (Fig. 18) is an addition of first vertical-block projection data n-arized by the second threshold value with the first threshold intersection placed at its center, which takes a larger value with increasing number of first threshold intersections and increasing amplitudes (crests) exceeding the second threshold value ($\alpha 2$) on the positive side. Conversely, it is to be canceled out if there are amplitudes exceeding the second threshold value ($-\alpha 2$) on the negative side.

In other words, when the maximum value of output of the adder 315, that is, the vertical-block n-arized-added-data peak value of a certain vertical block is not less than the predetermined value A, and on the other hand, the vertical-block n-arized-added-data peak value of another vertical block is not more than the predetermined value B, the other vertical block can be said to be a picture pattern in which the result of addition is canceled out, or a less characteristic small-amplitude picture pattern.

Therefore, a block having the vertical-block n-arized-added-data peak value not more than the predetermined value B is judged as having lower reliability than a block of not less than the predetermined value A, which is in result judged as having lower reliability than other valid blocks. Therefore, the horizontal motion vector can be improved in reliability by not using vertical blocks judged as invalid blocks in determination of the horizontal motion vector of the entire image.

Fig. 25 is a diagram schematically showing judgment of validity/invalidity of vertical blocks. Fig. 25 shows a graph plotting the maximum value of the vertical-block n-arized-added-data peak-value in abscissa and vertical-block n-arized-added-data peak value in ordinate, and shows the operation of judging a vertical block having a vertical-block n-arized-added data of not more than the predetermined value B as an invalid block when the maximum value of the vertical-block n-arized-added-data peak-value is not less than the predetermined value A.

Further, Fig. 25 also shows the operation of not judging a block, if any, having a vertical-block n-arized-added-data peak value of not more than the predetermined value B, as an invalid block, in the case where the maximum value of the vertical-block n-arized-added-data peak-value is less than the predetermined value A.

For instance, taking Fig. 24 as an example, in the case where the maximum value of the vertical-block n-arized-added-data peak-value is 7, the vertical blocks vb0, vb1, vb5 and vb6 are not judged as invalid blocks. This is because blocks in which the vertical-block n-arized-added-data peak value is the maximum value cannot be said to have relatively low reliability.

The above description has shown the example of setting the predetermined value A at 12 and predetermined value B at 7 as the validity/invalidity judging condition, however, this is not a restrictive example. It depends on the number of pixels of the image in the horizontal direction, and the predetermined value A may be set at about 10 and predetermined value B at a value about half of that in the case where the number of pixels of the image in the horizontal direction is 640, for example.

<In the case of using the number of first threshold intersections>

Fig. 26 is a diagram for explaining a method for judging validity/invalidity of vertical blocks using the number of first threshold intersections.

Fig. 26 shows the case in which image data of 640 pixels by 480 pixels shown in Fig. 9(a), taken as an example, is divided into seven vertical blocks vb0 to vb6 having a width of 64 pixels (division width) in the vertical direction.

Further, Fig. 26 indicates the number of first threshold intersections output from the first-threshold intersection searching part 29 (Fig. 18) in hexadecimal notation for each block.

The first-threshold intersection searching part 29 outputs information on an intersection of the waveform of the second vertical-block projection data of the preceding frame stored in the second vertical-block projection line memory 27 and the first threshold value calculated by the second vertical-block projection-data maximum-value storage part 28, and the information contains information on the number of first threshold intersections. As shown in Fig. 26, the number of first threshold intersections is obtained for each of the vertical blocks vb0 to vb6.

Fig. 27 is a diagram schematically showing judgment of validity/invalidity of vertical blocks. Fig. 27 shows a graph plotting the maximum value of the number of first threshold intersections in the respective vertical blocks vb0 to vb6 in abscissa and the number of first threshold intersections in ordinate, and horizontal-motion-vector determining part 320 judges a vertical block in the vertical blocks vb0 to vb6 whose number of first threshold intersections is not more than a predetermined value D (e.g., 3 in decimal notation), as an invalid block, regardless of the maximum value of the number of first threshold intersections. In the example of Fig. 26, the vertical blocks vb0 and vb6 are judged as invalid blocks.

The horizontal motion vector can be improved in reliability by not using vertical blocks judged as invalid blocks in determination of the horizontal motion vector of the entire image.

On the other hand, the number of first threshold intersections is at least not more than the number of pixels in the horizontal direction. Since it can be said that an extremely periodic picture pattern is captured in the case where the number is extremely larger than the number of pixels in the horizontal direction, it may be configured that a block of not less than a predetermined value E (e.g., not less than half of the number of pixels in the horizontal direction) is judged as an invalid block.

Further, as shown in Fig. 28, it may be configured that a block of not more than the predetermined value D is judged as an invalid block only in the case where the maximum value of the number of first threshold intersections is not less than a predetermined value C (>D). In this case, a block, if any, of not more than the predetermined value D, is not judged as an invalid block, when the maximum value of the number of first threshold intersections is less than the predetermined value C, which allows finer setting of judging criteria of invalid blocks.

The above description has shown the example of setting the predetermined value D at 3 and predetermined value E at half of the number of pixels in the horizontal direction as the validity/invalidity judging condition, however, this is not a restrictive example.

Judging invalid blocks using the above-described method for judging validity/invalidity of vertical blocks using the first vertical-block projection-data maximum value, the method for judging validity/invalidity of vertical blocks using the vertical-block n-arized-added-data peak value and the method for judging validity/invalidity of vertical blocks using the information on the number of first threshold intersections, and the motion vector can be improved in reliability by not using horizontal motion vectors calculated from vertical blocks judged as invalid blocks in determination of the horizontal motion vector of the entire image.

The above-described three methods of judgment may be used alone or in combination.

For instance, validity/invalidity of vertical blocks may be judged using the vertical-block n-arized-added-data peak value while judging validity/invalidity using the first vertical-block projection-data maximum value, or validity/invalidity of vertical blocks may be judged using the information on the first threshold intersections while judging validity/invalidity using the first vertical-block projection-data maximum value.

Such combination can ensure selection of invalid blocks, which further improves the motion vector in reliability.

<Method for determining horizontal motion vector>

The horizontal-motion-vector determining part 320 judges validity/invalidity of vertical blocks as described above, and determines the horizontal motion vector of the entire image from the horizontal motion vectors of vertical blocks judged as valid blocks.

At this time, vertical blocks having the same horizontal motion vector are collected to create a histogram.

An example of a method for determining the horizontal motion vector of the entire image will be described below using Figs. 29 and 30.

Figs. 29 and 30 show the case of setting the detection range of the horizontal motion vector at -V to V, and herein, show the case in which V is 31, as an example, which are indicated at a 1-vector interval from -31 to 31. The number given in a box provided in correspondence to each vector indicates the number of vertical blocks having the same vector.

As shown in Fig. 29, among horizontal motion vectors calculated for the respective vertical blocks, a horizontal motion vector 6 is obtained in two vertical blocks, but the rest of the vertical blocks all have different horizontal motion vectors distributed in a range whose minimum value stands at -14 and maximum value stands at 27, and the difference therebetween is 41, which can be said that there are many fluctuations with respect to the motion vector detection range. In Fig. 29, blocks corresponding to the horizontal motion vectors obtained from the respective vertical blocks of the current frame are given sandy hatching.

When the difference between the maximum value and minimum value of the distribution range of horizontal motion vectors obtained from the respective vertical blocks is not less than the previously-determined threshold value B (e.g., aforementioned V), the horizontal-motion-vector determining part 320 assumes the horizontal motion vectors obtained from the respective vertical blocks to have low reliability, and defines the horizontal motion vectors as 0.

Such processing allows the horizontal motion vector of the entire image to be improved in reliability.

On the other hand, when the number of vertical blocks having the horizontal motion vector of 6 is not less than the previously-determined value A (e.g., 3), it is judged that the horizontal motion vectors obtained from the respective vertical blocks are sufficiently reliable.

Similarly, when the difference between the maximum value and minimum value of the distribution range of horizontal motion vectors obtained from the respective vertical blocks is less than the threshold value B, it is also judged that the horizontal motion vectors obtained from the respective vertical blocks are sufficiently reliable.

The value A and threshold value B are not limited to the above-mentioned values. In addition, the judgment on fluctuations is not limited to the judgment using the above-described difference between the maximum value and minimum value of the distribution range of horizontal motion vectors, but a standard deviation may be used to judge that there are great fluctuations when the standard deviation is not less than the threshold value B, for example.

In the case where the horizontal motion vectors obtained from the respective vertical blocks are judged as sufficiently reliable as a result of the above-described processing, the horizontal motion vector of the current frame will be calculated with the following procedure.

In summary, a horizontal motion vector closest to the horizontal motion vector of the preceding frame among the horizontal motion vectors output from the respective vertical blocks of the current frame is to be defined as the horizontal motion vector of the current frame.

Fig. 30 shows the case in which the difference between the maximum value and minimum value of the distribution range of horizontal motion vectors obtained from the respective vertical blocks is 11, which is smaller than the threshold value B (e.g., V=31), so that the horizontal-motion-vector determining part 320 judges the horizontal motion vectors calculated from the respective vertical blocks as being reliable.

Here, in Fig. 30, a horizontal motion vector 5 is the horizontal motion vector of the preceding frame, and a horizontal motion vector closest thereto obtained from the respective vertical blocks of the current frame is the horizontal motion vector 6. Accordingly, the horizontal motion vector 6 is defined as the horizontal motion vector of the current frame. In Fig. 30, blocks corresponding to the horizontal motion vectors obtained from the respective vertical blocks of the current frame are given sandy hatching, and the horizontal motion vector of the preceding frame is given diagonal hatching.

Here, in the case where the outputs of a plurality of vertical blocks result in the same horizontal motion vector, that is, in the case where a certain horizontal motion vector occurs twice or more, a horizontal motion vector that occurs once may be omitted assuming it to have low reliability, and then, a horizontal motion vector closest to the horizontal motion vector of the preceding frame is then obtained, and that horizontal motion vector is defined as the horizontal motion vector of the current frame.

In the case of employing this method, a horizontal motion vector 8 is to be the horizontal motion vector of the current frame in the example shown in Fig. 30.

In the case where there exist two horizontal motion vectors closest to the horizontal motion vector of the preceding frame, their average, that is, the horizontal motion vector of the preceding frame it self may be defined as the horizontal motion vector of the current frame.

Here, it is configured such that information on the horizontal motion vector of the preceding frame is stored in a predetermined memory (preceding-frame horizontal-motion-vector storage means) provided in the horizontal-motion-vector determining part 320 to be read according to necessity.

As described above, the reliability of horizontal motion vector of the entire image is estimated considering fluctuations of horizontal motion vectors calculated on the basis of vertical blocks having high reliability upon omitting vertical blocks having low reliability by the operation of judging validity/invalidity of vertical blocks, and even in the case where it is judged as being reliable, a horizontal motion vector that displays little sense of abnormality with the motion from the preceding frame incorporated can be determined by considering the horizontal motion vector of the preceding frame.

<Operation of vertical-motion-vector detecting section 4B>

The operation of the vertical-motion-vector detecting section 4B for detecting a vertical motion vector of the image in the motion-vector detection device 1B will be explained.

The operation of the vertical-motion-vector detecting section 4B is basically the same as the operation of the vertical-motion-vector detecting section 4 described in the first embodiment, and repeated description will be omitted, and the operations of the horizontal-block vertical-motion-vector calculating part 500 and vertical -motion-vector determining part 510 will be mainly described.

The third-threshold intersection searching part 48 searches an intersection (third threshold intersection) of the second horizontal-block projection data read from the second horizontal-block projection line memory 46 and the third threshold value output from the second horizontal-block projection-data maximum-value storage part 47, in the vertical direction. Information on third threshold intersections obtained in this third-threshold intersection searching part 48 is output to the horizontal-block projection-data reading part 49, horizontal-block vertical-motion-vector calculating part 500 and vertical-motion-vector determining part 510.

The horizontal-block projection-data reading part 49 reads the current-frame (first) horizontal-block projection data corresponding to the motion vector detection range with the third threshold intersection output from the third-threshold intersection searching part 48 placed at its center, from the first horizontal-block projection line memory 44. That is, letting the third threshold intersection be B(i) (where i = 1, 2, ... q; q is the total number of third threshold intersections as detected), and the motion vector detection range be (-U) to (+U) (where U is a positive integer) with the third threshold intersection placed at its center, the projection data read from the first horizontal-block projection line memory 44 is to be partial data of the first horizontal-block projection data falling within the range of (B(i)-U) to (B(i)+U) in the vertical direction.

The first horizontal-block projection data read from the first horizontal-block projection line memory 44 by this horizontal-block projection-data reading part 49 is output to the horizontal-block vertical-motion-vector calculating part 500.

The first horizontal-block projection data output from the horizontal-block projection-data reading part 49 is input to the n-arization part 504 through the input terminal 501 of the horizontal-block vertical-motion-vector calculating part 500 shown in Fig. 21. The processing in this n-arization part 504 has already been described using Fig. 10, and description will be omitted.

Further, the operations of the third-threshold intersection searching part 48, horizontal-block projection-data reading part 49 and horizontal-block vertical-motion-vector calculating part 500 (basically the same as the horizontal-block vertical-motion-vector calculating part 50) have already been described using Fig. 14, and description will be omitted.

Next, the adder 505 (Fig. 21) adds the first horizontal-block projection data n-arized by the n-arization part 504 and the added values of first horizontal-block projection data n-arized up to the last one read from the vertical-motion-vector adding memory 506 with the third threshold intersection output from the third-threshold intersection searching part 48 through the input terminal 503 placed at its center, and the result of addition is stored again in the vertical-motion-vector adding memory 506. Then, the first horizontal-block projection data n-arized relating to the last one of all the third threshold intersections detected by the third-threshold intersection searching part 48 is added by the adder 505, and when the addition process for one horizontal block is finished, the result of addition is to be output to the peak detector 5070. After the completion of the addition process in the adder 505, the result of addition may be read by the peak detector 5070 from the vertical-motion-vector adding memory 506 which stores the results of addition for all the third threshold intersections.

Data obtained by adding the first horizontal-block projection data n-arized corresponding to the motion vector detection range (aforementioned range of $\pm$ U) with each third threshold intersection placed at its center, to all the third threshold intersections detected by the third-threshold intersection searching part 48 (hereinafter also referred to as "horizontal-block n-arized data") is input to the peak detector 5070, and a peak value of this horizontal-block n-arized data is detected by the peak detector 5070. The peak position of the horizontal-block n-arized data detected by the peak detector 5070 is to be the vertical motion vector obtained from that horizontal block, and input to the vertical-motion-vector determining part 510 through the output terminal 508. Similarly, the peak value at that time is to be output through the output terminal 509.

The specific operations of the adder 505 and peak detector 5070 are basically similar to those of the adder 505 and peak detector 507 of the horizontal-block vertical-motion-vector calculating part 50 described using Fig. 15, and repeated description will be omitted, however, the vertical motion vector (peak position) calculated for each horizontal block by the peak detector 507 and the peak value of added data of horizontal blocks n-arized and added (hereinafter also referred to as "horizontal-block n-arized-added-data peak value") are input to the vertical-motion-vector determining part 510 through the output terminals 508 and 509, respectively, and the horizontal-block n-arized-added-data peak value is used for judgment of validity/invalidity of horizontal blocks.

The vertical-motion-vector determining part 510 (Fig. 20) determines the vertical motion vector of the entire image on the basis of vertical motion vectors of the respective horizontal blocks sequentially output from the horizontal-block vertical-motion-vector calculating part 500.

At this time, validity/invalidity of horizontal blocks is judged on the basis of the first horizontal-block projection-data maximum value output from the first horizontal-block projection-data maximum-value storage part 45, horizontal-block n-arized-added-data peak value output from the horizontal-block vertical-motion-vector calculating part 500 and information on the third threshold intersections output from the third-threshold intersection searching part 48. Then, the vertical motion vectors calculated from horizontal blocks judged as invalid blocks shall not be used in determining the vertical motion vector of the entire image.

<Judgment of validity/invalidity of horizontal blocks>

<In the case of using first horizontal-block projection-data maximum value>

The method for judging validity/invalidity of horizontal blocks will be described below.

Fig. 31 is a diagram for explaining the method for judging validity/invalidity of horizontal blocks using a first horizontal-block projection-data maximum value.

Fig. 31 shows the case in which image data of 640 pixels by 480 pixels shown in Fig. 13(a), taken as an example, is divided into ten horizontal blocks hb0 to hb9 having a width of 64 pixels (division width) in the horizontal direction.

Further, Fig. 31 indicates the first horizontal-block projection-data maximum value of each horizontal block output from the first horizontal-block projection-data maximum-value storage part 45 (Fig. 20) in hexadecimal notation for each block.

The vertical-motion-vector determining part 510 obtains the maximum value of all the blocks from among the first horizontal-block projection-data maximum values in the respective horizontal blocks hb0 to hb9. In the example of Fig. 31, the horizontal block hb4 has the maximum value in all the blocks, and this value will be called all-horizontal-block projection-data maximum value.

Further, the vertical-motion-vector determining part 510 judges a horizontal block having a maximum value of not more than, e.g., a quarter of the all-horizontal-block projection-data maximum value, as an invalid block. In the example of Fig. 31, the horizontal blocks hb0, hb1, hb8 and hb9 are judged as invalid blocks.

Fig. 32 is a diagram schematically showing judgment of validity/invalidity of horizontal blocks.

Fig. 32 shows a graph plotting the all-horizontal-block projection-data maximum value in abscissa and first horizontal-block projection-data maximum value in ordinate, and indicates that the blocks are divided into valid blocks and invalid blocks on the border of the line starting at the origin point and having an inclination of 1/4 (S = 1/4).

A horizontal block judged as an invalid block can be said to be a less characteristic picture pattern (having few clear points) or extremely detailed picture pattern, which are in result judged as having lower reliability than other valid blocks. Therefore, the vertical motion vector can be improved in reliability by not using horizontal blocks judged as invalid blocks in determination of the vertical motion vector of the entire image.

In the above description, the validity/invalidity judging condition has been described as not more than a quarter of the all-horizontal-block projection-data maximum value, however, this is not a restrictive example. Under some circumstances, it may be not more than a double or not more than one-eighth. In this manner, setting the judging condition at $1/2^n$ allows the validity/invalidity judgment to be carried out easily.

<In the case of using horizontal-block n-arized-added-data peak value>

Fig. 33 is a diagram for explaining the method for judging validity/invalidity of horizontal blocks using the horizontal-block n-arized-added-data peak value.

Fig. 33 shows the case in which image data of 640 pixels by 480 pixels shown in Fig. 13(a), taken as an example, is divided into ten horizontal blocks hb0 to hb9 having a width of 64 pixels (division width) in the horizontal direction.

Further, Fig. 33 indicates the horizontal-block n-arized-added-data peak value of each horizontal block output from the horizontal-block vertical-motion-vector calculating part 500 (Fig. 20) in hexadecimal notation for each block.

The vertical-motion-vector determining part 510 obtains the maximum value of the horizontal-block n-arized-added-data peak values in the respective horizontal blocks hb0 to hb9. In the example of Fig. 33, the horizontal block hb4 has the maximum value, and this value will be called a maximum value of the horizontal-block n-arized-added-data peak-value.

Further, the vertical-motion-vector determining part 510 judges a horizontal block having a horizontal-block n-arized-added data not more than the predetermined value B (e.g., 7 in decimal notation) as an invalid block when the maximum value of the horizontal-block n-arized-added-data peak-value is not less than the predetermined value A (e.g., 12 in decimal notation). In the example of Fig. 33, the horizontal blocks hb0, hb1, hb7, hb8 and hb9 are judged as invalid blocks.

The output of the adder 505 (Fig. 21) of the horizontal-block vertical-motion-vector calculating part 500 (Fig. 20) is an addition of first horizontal-block projection data n-arized by the fourth threshold value with the third threshold intersection placed at its center, which takes a larger value with increasing number of third threshold intersections and increasing amplitudes (crests) exceeding the fourth threshold value ($\alpha4$) on the positive side. Conversely, it is to be canceled out if there are amplitudes exceeding the fourth threshold value ($-\alpha4$) on the negative side.

In other words, when the maximum value of output of the adder 505, that is, the horizontal-block n-arized-added-data peak value of a certain horizontal block is not less than the predetermined value A, and on the other hand, the horizontal-block n-arized-added-data peak value of another horizontal block is not more than the predetermined value B, the other horizontal block can be said to be a picture pattern in which the result of addition is canceled out, or a less characteristic small-amplitude picture pattern.

Therefore, a block having the horizontal-block n-arized-added-data peak value not more than the predetermined value B is judged as having lower reliability than a block of not less than the predetermined value A, which is in result judged as having lower reliability than other valid blocks. Therefore, the vertical motion vector can be improved in reliability by not using horizontal blocks judged as invalid blocks in determination of the vertical motion vector of the entire image.

Fig. 34 is a diagram schematically showing judgment of validity/invalidity of horizontal blocks. Fig. 34 shows a graph plotting the maximum value of the horizontal-block n-arized-added-data peak-value in abscissa and horizontal-block n-arized-added-data peak value in ordinate, and shows the operation of judging a horizontal block having a horizontal-block n-arized-added data of not more than the predetermined value B as an invalid block when the maximum value of the horizontal-block n-arized-added-data peak-value is not less than the predetermined value A.

Further, Fig. 34 also shows the operation of not judging a block, if any, having a horizontal-block n-arized-added-data peak value of not more than the predetermined value B, as an invalid block, in the case where the maximum value of the horizontal-block n-arized-added-data peak-value is less than the predetermined value A.

For instance, taking Fig. 33 as an example, in the case where the maximum value of the horizontal-block n-arized-added-data peak-value is 7, the vertical blocks hb0, hb1, hb7, hb8 and hb9 are not judged as invalid blocks. This is because blocks in which the horizontal-block n-arized-added-data peak value is the maximum value cannot be said to have relatively low reliability.

The above description has shown the example of setting the predetermined value A at 12 and predetermined value B at 7 as the validity/invalidity judging condition, however, this is not a restrictive example. It depends on the number of pixels of the image in the vertical direction, and the predetermined value A may be set at about 10 and predetermined value B at a value about half of that in the case where the number of pixels of the image in the vertical direction is 640, for example.

<In the case of using the number of third threshold intersections>

Fig. 35 is a diagram for explaining a method for judging validity/invalidity of vertical blocks using the number of third threshold intersections.

Fig. 35 shows the case in which image data of 640 pixels by 480 pixels shown in Fig. 13(a), taken as an example, is divided into ten horizontal blocks hb0 to hb9 having a width of 64 pixels (division width) in the horizontal direction.

Further, Fig. 35 indicates the number of third threshold intersections output from the third-threshold intersection searching part 48 (Fig. 20) in hexadecimal notation for each block.

The third-threshold intersection searching part 48 outputs information on an intersection of the waveform of the second horizontal-block projection data of the preceding frame stored in the second horizontal-block projection line memory 46 and the third threshold value calculated by the second horizontal-block projection-data maximum-value storage part 45, and the information contains information on the number of third threshold intersections. As shown in Fig. 35, the number of third threshold intersections is obtained for each of the horizontal blocks hb0 to hb9.

Fig. 36 is a diagram schematically showing judgment of validity/invalidity of horizontal blocks. Fig. 36 shows a graph plotting the maximum value of the number of third threshold intersections in the respective horizontal blocks hb0 to hb9 in abscissa and the number of third threshold intersections in ordinate, and vertical-motion-vector determining part 510 (Fig. 20) judges a horizontal block in the horizontal blocks hb0 to hb9 whose number of third threshold intersections is not more than the predetermined value D (e.g., 3 in decimal notation), as an invalid block, regardless of the maximum value of the number of third threshold intersections. In the example of Fig. 35, the horizontal blocks hb0 and hb9 are judged as invalid blocks.

The vertical motion vector can be improved in reliability by not using horizontal blocks judged as invalid blocks in determination of the vertical motion vector of the entire image.

On the other hand, the number of third threshold intersections is at least not more than the number of pixels in the vertical direction. Since it can be said that an extremely periodic picture pattern is captured in the case where the number is extremely larger than the number of pixels in the vertical direction, it may be configured that a block of not less than the predetermined value E (e.g., not less than half of the number of pixels in the vertical direction) is judged as an invalid block. For instance, the horizontal block hb4 in Fig. 35 is judged as an invalid block since the number of third threshold intersections is 241, which is not less than half of the number of pixels in the vertical direction.

Further, as shown in Fig. 37, it may be configured that a block of not more than the predetermined value D is judged as an invalid block only in the case where the maximum value of the number of third threshold intersections is not less than the predetermined value C (>D). In this case, a block, if any, of not more than the predetermined value D, is not judged as an invalid block, when the maximum value of the number of third threshold intersections is less than the predetermined value C, which allows finer setting of judging criteria of invalid blocks.

The above description has shown the example of setting the predetermined value D at 3 and predetermined value E at 7 in the validity/invalidity judging condition, however, this is not a restrictive example.

Judging invalid blocks using the above-described method for judging validity/invalidity of horizontal blocks using the first horizontal-block projection-data maximum value, the method for judging validity/invalidity of horizontal blocks using the horizontal-block n-arized-added-data peak value and the method for judging validity/invalidity of horizontal blocks using the information on the number of third threshold intersections, and the motion vector can be improved in reliability by not using vertical motion vectors calculated from horizontal blocks judged as invalid blocks in determination of the vertical motion vector of the entire image.

The above-described three methods of judgment may be used alone or in combination.

For instance, validity/invalidity of horizontal blocks may be judged using the horizontal-block n-arized-added-data peak value while judging validity/invalidity using the first horizontal-block projection-data maximum value, or validity/invalidity of horizontal blocks may be judged using the information on the third threshold intersections while judging validity/invalidity using the first horizontal-block projection-data maximum value.

Such combination can ensure selection of invalid blocks, which further improves the motion vector in reliability.

<Method for determining vertical motion vectors>

The vertical-motion-vector determining part 510 judges validity/invalidity of horizontal blocks as described above, and determines the vertical motion vector of the entire image from the vertical motion vectors of horizontal blocks judged as valid blocks.

At this time, horizontal blocks having the same vertical motion vector are collected to create a histogram.

An example of a method for determining the vertical motion vector of the entire image will be described below using Figs. 38 and 39.

Figs. 38 and 39 show the case of setting the detection range of the vertical motion vector at -U to U, and herein, show the case in which U is 31, as an example, which are indicated at a 1-vector interval from -31 to 31. The number given in a box provided in correspondence to each vector indicates the number of horizontal blocks having the same vector.

As shown in Fig. 38, among vertical motion vectors calculated for the respective horizontal blocks, vertical motion vectors -3 and 2 are each obtained in two horizontal blocks, but the rest of the horizontal blocks all have different vertical motion vectors distributed in a range whose minimum value stands at -26 and maximum value stands at 8, and the difference therebetween is 34, which can be said that there are many fluctuations with respect to the motion vector detection range. In Fig. 38, blocks corresponding to the vertical motion vectors obtained from the respective horizontal blocks of the current frame are given sandy hatching.

When the difference between the maximum value and minimum value of the distribution range of vertical motion vectors obtained from the respective horizontal blocks is not less than the previously-determined threshold value B (e.g., aforementioned U), the vertical-motion-vector determining part 510 assumes the vertical motion vectors obtained from the respective horizontal blocks to have low reliability, and defines the vertical motion vectors as 0.

Such processing allows the vertical motion vector of the entire image to be improved in reliability.

On the other hand, when the number of horizontal blocks having a vertical motion vector of -3 and a horizontal motion vector of 2 is not less than the previously-determined value A (e.g., 3), it is judged that the vertical motion vectors obtained from the respective horizontal blocks are sufficiently reliable.

Similarly, when the difference between the maximum value and minimum value of the distribution range of vertical motion vectors obtained from the respective horizontal blocks is less than the threshold value B, it is also judged that the vertical motion vectors obtained from the respective horizontal blocks are sufficiently reliable.

The value A and threshold value B are not limited to the above-mentioned values. In addition, the judgment on fluctuations is not limited to the judgment using the above-described difference between the maximum value and minimum value of the distribution range of vertical motion vectors, but a standard deviation may be used to judge that there are great fluctuations when the standard deviation is not less than the threshold value B, for example.

In the case where the vertical motion vectors obtained from the respective horizontal blocks are judged as sufficiently reliable as a result of the above-described processing, the vertical motion vector of the current frame will be calculated with the following procedure.

In summary, a vertical motion vector closest to the vertical motion vector of the preceding frame among the vertical motion vectors output from the respective horizontal blocks of the current frame is to be defined as the vertical motion vector of the current frame.

Fig. 39 shows the case in which the difference between the maximum value and minimum value of the distribution range of vertical motion vectors obtained from the respective horizontal blocks is 9, which is smaller than the threshold value B (e.g., U=31), so that the vertical-motion-vector determining part 510 judges the vertical motion vectors calculated from the respective horizontal blocks as being reliable.

Here, in Fig. 39, a vertical motion vector 8 is the vertical motion vector of the preceding frame, and a vertical motion vector closest thereto obtained from the respective horizontal blocks of the current frame is the vertical motion vector 6. Accordingly, the vertical motion vector 6 is defined as the vertical motion vector of the current frame. In Fig. 39, blocks corresponding to the vertical motion vectors obtained from the respective horizontal blocks of the current frame are given sandy hatching, and the vertical motion vector of the preceding frame is given diagonal hatching.

Here, in the case where the outputs of a plurality of horizontal blocks result in the same vertical motion vector, that is, in the case where a certain vertical motion vector occurs twice or more, a vertical motion vector that occurs once may be omitted assuming it to have low reliability, and then, a vertical motion vector closest to the vertical motion vector of the preceding frame is then obtained, and that vertical motion vector is defined as the vertical motion vector of the current frame.

In the case of employing this method, a vertical motion vector 5 is to be the vertical motion vector of the current frame in the example shown in Fig. 39.

In the case where there exist two vertical motion vectors closest to the vertical motion vector of the preceding frame, their average, that is, the vertical motion vector of the preceding frame it self may be defined as the vertical motion vector of the current frame.

Here, it is configured such that information on the vertical motion vector of the preceding frame is stored in a predetermined memory (preceding-frame vertical-motion-vector storage means) provided in the vertical-motion-vector determining part 510 to be read according to necessity.

As described above, the reliability of the vertical motion vector of the entire image is estimated considering fluctuations of vertical motion vectors calculated on the basis of horizontal blocks having high reliability upon omitting horizontal blocks having low reliability by the operation of judging validity/invalidity of horizontal blocks, and even in the case where it is judged as reliable, a vertical motion vector that displays little sense of abnormality with the motion from the preceding frame incorporated can be determined by considering the vertical motion vector of the preceding frame.

<Effects>

As described above, in the horizontal-motion-vector detecting section 2B of the motion-vector detection device 1B according to the third embodiment, the horizontal-motion-vector determining part 320 judges validity/invalidity of vertical blocks on the basis of the first vertical-block projection-data maximum value output from the first vertical-block projection-data maximum-value storage part 24, vertical-block n-arized-added-data peak value output from the vertical-block horizontal-motion-vector calculating part 310 and information on the first threshold intersections output from the first-threshold intersection searching part 29, allowing horizontal motion vectors obtained from vertical blocks having low reliability to be omitted, which in result can calculate a horizontal motion vector having high reliability.

The reliability of the horizontal motion vector of the entire image is estimated considering fluctuations of horizontal motion vectors calculated on the basis of vertical blocks having high reliability, and even in the case where it is judged as reliable, a horizontal motion vector that displays less sense of abnormality with the motion from the preceding frame incorporated can be determined by considering the horizontal motion vector of the preceding frame.

In the vertical-motion-vector detecting section 4B, the vertical-motion-vector determining part 510 judges validity/invalidity of horizontal blocks on the basis of the first horizontal-block projection-data maximum value output from the first horizontal-block projection-data maximum-value storage part 45, horizontal-block n-arized-added-data peak value output from the horizontal-block vertical-motion-vector calculating part 500 and information on the third threshold intersections output from the third-threshold intersection searching part 48, allowing vertical motion vectors obtained from horizontal blocks having low reliability to be omitted, which in result can calculate a vertical motion vector having high reliability.

The reliability of the vertical motion vector of the entire image is estimated considering fluctuations of vertical motion vectors calculated on the basis of horizontal blocks having high reliability, and even in the case where it is judged as reliable, a vertical motion vector that displays less sense of abnormality with the motion from the preceding frame incorporated can be determined by considering the vertical motion vector of the preceding frame.

Further, in the motion-vector detection device 1B, the vertical image-dividing part 21 divides a frame image in the vertical direction, and then the vertical edge is enhanced in each of divided images (vertical blocks), so that a divided image whose vertical edge has been enhanced can be generated simply. Similarly, the horizontal image-dividing part 41 divides a frame image in the horizontal direction, and then the horizontal edge is enhanced in each of divided images (horizontal blocks), so that a divided image whose horizontal edge has been enhanced can be generated simply.

Fourth embodiment

<Configuration of motion-vector detection device>

As shown in Fig. 1, a motion-vector detection device 1C according to a fourth embodiment of the present invention has a similar configuration to the motion-vector detection device 1 according to the first embodiment, but is different in configuration of the horizontal-motion-vector detecting section and vertical-motion-vector detecting section.

The configurations of a horizontal-motion-vector detecting section 2C and a vertical-motion-vector detecting section 4C in the motion-vector detection device 1C will be described below referring to Figs. 40 and 41. Fig. 40 is a block diagram showing an essential configuration of the horizontal-motion-vector detecting section 2C. In Fig. 40, sections having similar functions as the horizontal-motion-vector detecting section 2B described in the third embodiment are indicated by the same characters, and repeated description will be omitted.

In the edge enhancing means of the horizontal-motion-vector detecting section 2C, the vertical image-dividing part 21 and vertical-edge detection filtering part 22 are disposed in reverse order with respect to the edge enhancing means of the horizontal-motion-vector detecting section 2B of the third embodiment. The operation of this horizontal-motion-vector detecting section 2C will be described below.

When a frame image read by sequentially repeating pixel scanning of horizontal lines in the vertical direction as shown in Fig. 2 is input to the input terminal 20 of the horizontal-motion-vector detecting section 2C, it is subjected to detection of an edge component extending in the vertical direction, in other words, a filtering process for enhancing an image portion abruptly changing in the horizontal direction, in the vertical-edge detection filtering part 22.

When the frame image whose vertical edge has been enhanced in the vertical-edge detection filtering part 22 is input to the vertical image-dividing part 21, it is divided into blocks in the vertical direction. That is, the vertical image-dividing part 21 defines a plurality of image regions (vertical blocks) obtained by vertically dividing the edge-enhanced frame image. In subsequent processes, processing and control is thereby carried out per vertical block.

The image data divided in the vertical image-dividing part 21 is input to the vertical-block projecting part 23, and the process in the vertical-block projecting part 23 and subsequent processes are carried out similarly to the horizontal-motion-vector detecting section 2B of the third embodiment.

Fig. 41 is a block diagram showing an essential configuration of the vertical-motion-vector detecting section 4C. In Fig. 41, sections having similar functions as the vertical-motion-vector detecting section 4B described in the third embodiment are indicated by the same characters, and repeated description will be omitted.

In the edge enhancing means of the vertical-motion-vector detecting section 4C, the horizontal image-dividing part 41 and horizontal-edge detection filtering part 42 are disposed in reverse order with respect to the edge enhancing means of the vertical-motion-vector detecting section 4B of the third embodiment. The operation of the vertical-motion-vector detecting section 4C will be described below.

When a frame image read by sequentially repeating pixel scanning of horizontal lines in the vertical direction as shown in Fig. 2 is input to the input terminal 40 of the vertical-motion-vector detecting section 4C, it is subjected to detection of an edge component extending in the horizontal direction, in other words, a filtering process for enhancing an image portion abruptly changing in the vertical direction, in the horizontal-edge detection filtering part 42.

When the frame image whose horizontal edge has been enhanced in the horizontal-edge detection filtering part 42 is input to the horizontal image-dividing part 41, it is divided into blocks in the horizontal direction. That is, the horizontal image-dividing part 41 defines a plurality of image regions (horizontal blocks) obtained by horizontally dividing the edge-enhanced frame image. In subsequent processes, processing and control is thereby carried out per horizontal block.

The image data divided in the horizontal image-dividing part 41 is input to the horizontal-block projecting part 43, and the process in the horizontal-block projecting part 43 and subsequent processes are carried out similarly to the vertical-motion-vector detecting section 4B of the third embodiment.

With the above-described operations of the motion-vector detection device 1C, similar effects to the third embodiment are achieved.

Further, in the motion-vector detection device 1C, the frame image is subjected to vertical edge enhancement in the vertical-edge detection filtering part 22, and then the edge-enhanced frame image is divided in the vertical direction in the vertical image-dividing part 21, so that a divided image whose vertical edge has been enhanced can be generated simply.

Similarly, the frame image is subjected to horizontal edge enhancement in the horizontal-edge detection filtering part 42, and then the edge-enhanced frame image is divided in the horizontal direction in the horizontal image-dividing part 41, so that a divided image whose horizontal edge has been enhanced can be generated simply.

In the motion-vector detection device 1C, it is not essential to dispose the vertical-edge detection filtering part 22 and horizontal-edge detection filtering part 42 separately in the horizontal-motion-vector detecting section 2A and vertical-motion-vector detecting section 4A, respectively, but a horizontal/vertical-edge extraction filtering part which combines the functions of both the vertical-edge detection filtering part 22 and horizontal-edge detection filtering part 42 may be provided, and its output may be input to both the vertical image-dividing part 21 and horizontal image-dividing part 41.

<Variations>

The vertical-edge detection filtering part and horizontal-edge detection filtering part in the above-described respective embodiments may be configured to perform, for example, binarization: "with edge"; and "without edge" or ternarization: "with a positive edge"; "without edge"; and "with a negative edge" by threshold processing of judging the large-and-small relation with a predetermined threshold value after the filtering process of performing edge detection. Such threshold processing allows edges having luminance variations (luminance gradient) not less than the predetermined threshold to be handled identically.

In the above-described respective embodiments, data output from the bit-number reducing part 25 may be input alternately to the first vertical-block projection line memory 26 and second vertical-block projection line memory 27 by switching per frame, for example.

Data output from the horizontal-block projecting part 43 may be input alternately to the first horizontal-block projection line memory 44 and second horizontal-block projection line memory 46 by switching per frame, for example.

Similarly, data output from the vertical (horizontal)-block projecting part may be input alternately to the first vertical (horizontal)-block projection-data maximum-value storage part and second vertical (horizontal)-block projection-data maximum-value storage part by switching per frame, for example.

The "preceding frame" throughout the present invention involves not only the immediately preceding frame with respect to a succeeding frame (e.g., current frame) but also second to the immediately preceding frame and more. For instance, in the case where an intermediate frame is skipped by frame skipping, a frame preceding to the skipped frame is involved.

While the invention has been shown and described in detail, the forgoing description is in all aspects illustrative and not restrictive. It is therefore understood that numerous modifications and variations can be devised without departing from the scope of the invention.

## Claims

1. A motion-vector detection device for detecting a motion vector between frame images of a preceding frame and a succeeding frame adjacent to each other in time sequence, comprising:

   edge enhancing means (21, 22) for enhancing a vertical edge of each of a plurality of blocks having a constant division width in a vertical direction obtained by dividing a frame image read by sequentially repeating pixel scanning of horizontal lines in the vertical direction;
   projecting means (23) for obtaining a vertical projection of each of said blocks of the image whose edge has been enhanced by said edge enhancing means (21, 22), thereby generating projection data having a data array for one horizontal line for each of said blocks;
   specifying means (29) for specifying the position of an arrayed element of each intersection at which a waveform obtained by graphing values of arrayed elements in the order of elements of said data array of projection data obtained in said projecting means (23) for said preceding frame and a line on which the values of the arrayed elements stand at a predetermined constant value intersect;
   extracting means (30) for extracting data arrays of a predetermined range with the position of arrayed element of said each intersection placed at its center, from the projection data obtained by said projecting means for said succeeding frame;
   adding means (31) for adding values of arrayed elements having the same relative position with respect to the position of arrayed element of said each intersection for each of the data arrays of predetermined range extracted by said extracting means (30); and
   detecting means (32) for detecting a horizontal motion vector of a frame image on the basis of the result of addition obtained by said adding means (31).

2. The motion-vector detection device according to claim 1, further comprising:

   maximum-value obtaining means (24) for obtaining the maximum value of arrayed elements of said projection data;
   reducing means (25) for reducing the data length of each arrayed element of said projection data on the basis of the maximum value obtained in said maximum-value obtaining means; and
memory means (26) for storing projection data whose data length has been reduced by said reducing means (25) for said succeeding frame, wherein
said specifying means (29) has position specifying means for specifying the position of an arrayed element of each intersection at which a waveform obtained by graphing values of arrayed elements in the order of elements of said data array of projection data whose data length has been reduced by said reducing means (25) for said preceding frame and a line on which the values of the arrayed elements stand at a predetermined constant value intersect, and
said extracting means (30) has means for extracting data arrays of a predetermined range with the position of arrayed element of said each intersection specified by said position specifying means placed at its center, from projection data of the succeeding frame stored in said memory means (26) whose data length has been reduced.

**3.** The motion-vector detection device according to claim 1, wherein
said adding means (31) includes:

compression means (314) for compressing the data length of each arrayed element of the data arrays of the predetermined range extracted by said extracting means (30); and
means (315) for adding values of arrayed elements having the same relative position with respect to the position of arrayed element of said each intersection for each data array of the predetermined range whose data length has been compressed by said compression means.

**4.** The motion-vector detection device according to claim 3, wherein
said compression means (314) subjects the value of each arrayed element of the data arrays of the predetermined range extracted by said extracting means, to a ternarization process, and
in said ternarization process, relating to a threshold value Th (Th>0) defined on the basis of the maximum value of the arrayed elements of projection data of said succeeding frame, ternarization is performed in three levels of: the case where the value of an arrayed element of the projection data extracted in said extracting means (30) is smaller than (-Th); the case where it is not smaller than (-Th) and not larger than Th; and the case where it is larger than Th.

**5.** A motion-vector detection device for detecting a motion vector between frame images of a preceding frame and a succeeding frame adjacent to each other in time sequence, comprising:

edge enhancing means (42) for enhancing a horizontal edge of each of a plurality of blocks having a constant division width in a horizontal direction obtained by dividing a frame image read by sequentially repeating pixel scanning of horizontal lines in the vertical direction;
projecting means (43) for obtaining a horizontal projection of each of said blocks of the image whose edge has been enhanced by said edge enhancing means, thereby generating projection data having a data array for one vertical line for each of said blocks;
specifying means (48) for specifying the position of an arrayed element of each intersection at which a waveform obtained by graphing values of arrayed elements in the order of elements of said data array of projection data obtained in said projecting means (43) for said preceding frame and a line on which the values of the arrayed elements stand at a predetermined constant value intersect;
extracting means (49) for extracting data arrays of a predetermined range with the position of arrayed element of said each intersection placed at its center, from the projection data obtained by said projecting means for said succeeding frame;
adding means (50) for adding values of arrayed elements having the same relative position with respect to the position of arrayed element of said each intersection for each of the data arrays of predetermined range extracted by said extracting means (49); and
detecting means (51) for detecting a vertical motion vector of a frame image on the basis of the result of addition obtained by said adding means (50).

**6.** The motion-vector detection device according to claim 5, wherein
said adding means (50) includes:

compression means (504) for compressing the data length of each arrayed element of the data arrays of the predetermined range extracted by said extracting means (49); and
means (505) for adding values of arrayed elements having the same relative position with respect to the position of arrayed element of said each intersection for each data array of the predetermined range whose data length has been compressed by said compression means.

**7.** The motion-vector detection device according to claim 6, wherein
said compression means (504) subjects the value of each arrayed element of the data arrays of the predetermined range extracted by said extracting means, to a ternarization process, and
in said ternarization process, relating to a threshold value Th (Th>0) defined on the basis of the maximum value of the arrayed elements in projection data of said succeeding frame, ternarization is performed in three levels of: the case where the value of an arrayed element relating to the projection data extracted in said extracting means is smaller than (-Th); the case where it is not smaller than (-Th) and not larger than Th; and the case where it is larger than Th.

**8.** The motion-vector detection device according to claim 1 or 5, comprising
maximum-value specifying means (28, 47) for obtaining the maximum value of arrayed elements of projection data relating to said preceding frame.

**9.** A motion-vector detection device for detecting a motion vector between frame images of a preceding frame and a succeeding frame adjacent to each other in time sequence, comprising:

edge enhancing means (21, 22) for enhancing a vertical edge of each of a plurality of blocks having a constant division width in a vertical direction obtained by dividing a frame image read by sequentially repeating pixel scanning of horizontal lines in the vertical direction;
projecting means (23) for obtaining a vertical projection of each of said blocks of the image whose edge has been enhanced by said edge enhancing means (21, 22), thereby generating projection data having a data array for one horizontal line for each of said blocks;
maximum-value obtaining means (24) for obtaining the maximum value of arrayed elements of succeeding-frame projection data obtained in said projecting means (23) for said succeeding frame;
specifying means (29) for specifying and outputting, as intersection information, the position of an arrayed element of each intersection at which a waveform obtained by graphing values of arrayed elements in the order of elements of said data array of preceding-frame projection data obtained in said projecting means (23) for said preceding frame and a line on which the values of the arrayed elements stand at a predetermined constant value intersect;
extracting means (30) for extracting data arrays of a predetermined range with the position of arrayed element of said each intersection placed at its center, from said succeeding-frame projection data;
adding means (310) for adding values of arrayed elements having the same relative position with respect to the position of arrayed element of said each intersection for each of the data arrays of predetermined range extracted by said extracting means (30), and calculating a horizontal motion vector for each of said blocks on the basis of the result of addition as obtained; and
detecting means (320) for detecting a horizontal motion vector of the entire frame image on the basis of the horizontal motion vector of each of said blocks calculated by said adding means (310), wherein
said detecting means (320) estimates reliability of the horizontal motion vector of each of said blocks using at least one of said maximum value of said succeeding-frame projection data obtained in said maximum-value obtaining means (24), the result of addition obtained in said adding means (310) and said intersection information obtained in said specifying means (29).

**10.** The motion-vector detection device according to claim 9, wherein
in the case of carrying out reliability estimation of the horizontal motion vector of each of said blocks using said maximum value of said succeeding-frame projection data, said detecting means (320) obtains the maximum value of all the blocks from among said maximum values in said succeeding-frame projection data obtained in each of said plurality of blocks, judges said block having a maximum value of not more than a predetermined ratio among the maximum values of all the blocks, as an invalid block, and the horizontal motion vector of each of said blocks calculated from the invalid block is not used in detection of the horizontal motion vector of said entire frame image.

**11.** The motion-vector detection device according to claim 9, wherein
in the case of carrying out reliability estimation of the horizontal motion vector of each of said blocks using said result of addition, said detecting means (320) obtains the maximum peak value from among peak values in said result of addition obtained in each of said plurality of blocks, judges said block having said maximum value of not more than a previously-determined second value, as an invalid block, when said maximum peak value is not less than a previously-determined first value, and the horizontal motion vector of each of said blocks calculated from the invalid block is not used in detection of the horizontal motion vector of said entire frame image.

**12.** The motion-vector detection device according to claim 9, wherein
in the case of carrying out reliability estimation of the horizontal motion vector of each of said blocks using said intersection information, said detecting means (320) uses information on the number of intersections in said intersection information, judges said block having said number of intersections of not more than a previously-determined first value and not less than a previously-determined second value, as an invalid block, and the horizontal motion vector of each of said blocks calculated from the invalid block is not used in detection of the horizontal motion vector of said entire frame image.

**13.** The motion-vector detection device according to claim 9, wherein
in the case of carrying out reliability estimation of the horizontal motion vector of each of said blocks using said intersection information, said detecting means (320) uses information on the number of intersections in said intersection information, judges said block having said number of intersections of not more than a previously-determined second value and not less than a previously-determined third value, as an invalid block, when said maximum value is not less than a previously-determined first value, and the horizontal motion vector of each of said blocks calculated from the invalid block is not used in detection of the horizontal motion vector of said entire frame image.

**14.** The motion-vector detection device according to any one of claims 10 to 13, wherein
said detecting means (320) obtains the distribution range of horizontal motion vectors obtained from said blocks judged as valid blocks by the reliability estimation of horizontal motion vectors of each of said blocks, and when the distribution range is not less than a previously-determined threshold value, defines the horizontal motion vector of said entire frame image as 0.

**15.** The motion-vector detection device according to claim 14, wherein
said detecting means (320) includes preceding-frame horizontal-motion-vector storage means for storing the horizontal motion vector of said entire frame image of said preceding frame, and
a horizontal motion vector closest to the horizontal motion vector of said entire frame image of said preceding frame among the horizontal motion vectors of said blocks calculated from said blocks judged as valid blocks is to be the horizontal motion vector of said entire frame image of said succeeding frame.

**16.** A motion-vector detection device for detecting a motion vector between frame images of a preceding frame and a succeeding frame adjacent to each other in time sequence, comprising:

edge enhancing means (42) for enhancing a horizontal edge of each of a plurality of blocks having a constant division width in a horizontal direction obtained by dividing a frame image read by sequentially repeating pixel scanning of horizontal lines in the vertical direction;
projecting means (43) for obtaining a horizontal projection of each of said blocks of the image whose edge has been enhanced by said edge enhancing means, thereby generating projection data having a data array for one vertical line for each of said blocks;
maximum-value obtaining means (45) for obtaining the maximum value of arrayed elements of succeeding-frame projection data obtained in said projecting means (43) for said succeeding frame;
specifying means (48) for specifying and outputting, as intersection information, the position of an arrayed element of each intersection at which a waveform obtained by graphing values of arrayed elements in the order of elements of said data array of preceding-frame projection data obtained in said projecting means (43) for said preceding frame and a line on which the values of the arrayed elements stand at a predetermined constant value intersect;
extracting means (49) for extracting data arrays of a predetermined range with the position of arrayed element of said each intersection placed at its center, from said succeeding-frame projection data;
adding means (500) for adding values of arrayed elements having the same relative position with respect to the position of arrayed element of said each intersection for each of the data arrays of predetermined range extracted by said extracting means (49), and calculating a vertical motion vector for each of said blocks on the basis of the result of addition as obtained; and
detecting means (510) for detecting a vertical motion vector of the entire frame image on the basis of the vertical motion vector of each of said blocks calculated by said adding means (500), wherein
said detecting means (510) estimates reliability of the vertical motion vector of each of said blocks using at least one of said maximum value of said succeeding frame projection data obtained in said maximum-value obtaining means (45), the result of addition obtained in said adding means (500) and said intersection information obtained in said specifying means (48).

**17.** The motion-vector detection device according to claim 16, wherein
in the case of carrying out reliability estimation of the vertical motion vector of each of said blocks using said maximum value of said succeeding-frame projection data, said detecting means (510) obtains the maximum value of all the blocks from among said maximum values in said succeeding-frame projection data obtained in each of said plurality of blocks, judges said block having a maximum value of not more than a predetermined ratio among the maximum values of all the blocks, as an invalid block, and the vertical motion vector of each of said blocks calculated from the invalid block is not used in detection of the vertical motion vector of said entire frame image.

**18.** The motion-vector detection device according to claim 16, wherein
in the case of carrying out reliability estimation of the vertical motion vector of each of said blocks using said result of addition, said detecting means (510) obtains the maximum value of all the blocks from among said maximum values in said succeeding-frame projection data obtained in each of said plurality of blocks, judges said block having a maximum value of not more than a predetermined ratio among the maximum values of all the blocks, as an invalid block, and the vertical motion vector of each of said blocks calculated from the invalid block is not used in detection of the vertical motion vector of said entire frame image.

**19.** The motion-vector detection device according to claim 16, wherein
in the case of carrying out reliability estimation of the vertical motion vector of each of said blocks using said intersection information, said detecting means (510) uses information on the number of intersections in said intersection information, judges said block having said number of intersections of not more than a previously-determined first value and not less than a previously-determined second value, as an invalid block, and the horizontal motion vector of each of said blocks calculated from the invalid block is not used in detection of the vertical motion vector of said entire frame image.

**20.** The motion-vector detection device according to claim 16, wherein
in the case of carrying out reliability estimation of the vertical motion vector of each of said blocks using said intersection information, said detecting means (510) uses information on the number of intersections in said intersection information, obtains the maximum value from among said number of intersections obtained in each of said plurality of blocks, and judges said block having said number of intersections of not more than a previously-determined second value and not less than a previously-determined third value, as an invalid block, when said maximum value is not less than a previously-determined first value, and the vertical motion vector of each of said blocks calculated from the invalid block is not used in detection of the vertical motion vector of said entire frame image.

**21.** The motion-vector detection device according to any one of claims 17 to 20, wherein
said detecting means (510) obtains the distribution range of vertical motion vectors obtained from said blocks judged as valid blocks by the reliability estimation of vertical motion vector of each of said blocks, and when the distribution range is not less than a previously-determined threshold value, defines the vertical motion vector of said entire frame image as 0.

**22.** The motion-vector detection device according to claim 21, wherein
said detecting means includes preceding-frame vertical-motion-vector storage means for storing the vertical motion vector of said entire frame image of said preceding frame, and
a vertical motion vector closest to the vertical motion vector of said entire frame image of said preceding frame among the vertical motion vectors of said blocks calculated from said blocks judged as valid blocks is to be the vertical motion vector of said entire frame image of said succeeding frame.

**23.** The motion-vector detection device according to claim 1 or 9, wherein
said edge enhancing means (21, 22) includes:

image dividing means (21) for defining each of a plurality of image regions obtained by dividing said frame image in the vertical direction, as said block; and
enhancing means (22) for enhancing a vertical edge of each of said plurality of blocks.

**24.** The motion-vector detection device according to claim 1 or 9, wherein
said edge enhancing means (21, 22) includes:

enhancing means (22) for enhancing a vertical edge of said frame image; and
image dividing means (21) for defining each of a plurality of image regions obtained by dividing said frame image whose edge has been enhanced by said enhancing means (22) in the vertical direction, as said block.

**25.** The motion-vector detection device according to claim 5 or 16, wherein
said edge enhancing means (41, 42) includes:

image dividing means (41) for defining each of a plurality of image regions obtained by dividing said frame image in the horizontal direction, as said block; and

enhancing means (42) for enhancing a horizontal edge of each of said plurality of blocks.

**26.** The motion-vector detection device according to claim 5 or 16, wherein
said edge enhancing means (41, 42) includes:

enhancing means (42) for enhancing a horizontal edge of said frame image; and
image dividing means (41) for defining each of a plurality of image regions obtained by dividing said frame image whose edge has been enhanced by said enhancing means (42) in the horizontal direction, as said block.

FIG. 1

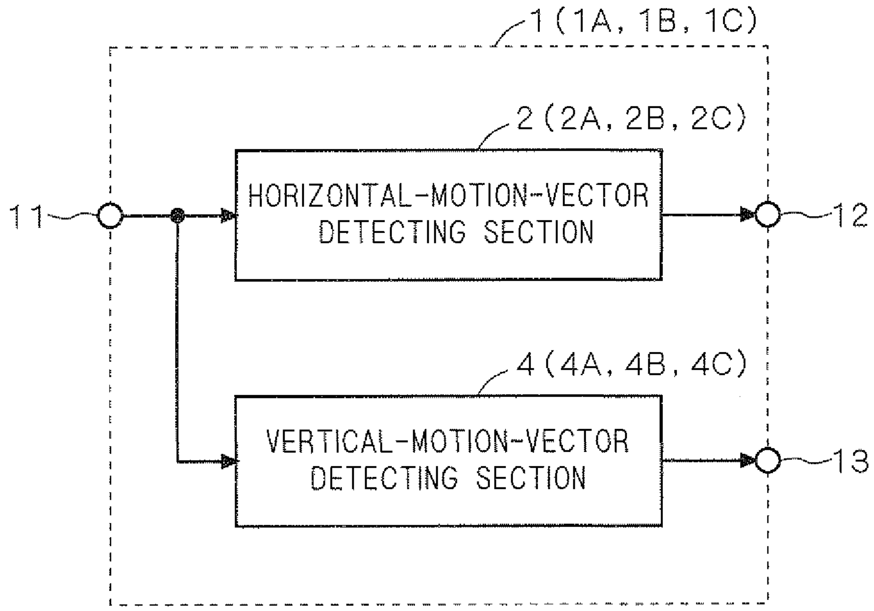
1 (1A, 1B, 1C)
2 (2A, 2B, 2C)
HORIZONTAL-MOTION-VECTOR DETECTING SECTION
11
12
4 (4A, 4B, 4C)
VERTICAL-MOTION-VECTOR DETECTING SECTION
13

FIG. 2

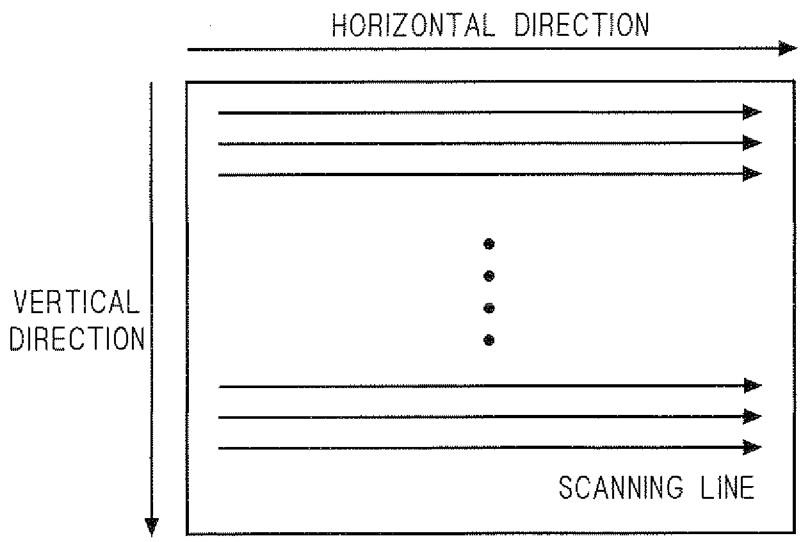
HORIZONTAL DIRECTION
VERTICAL DIRECTION
SCANNING LINE

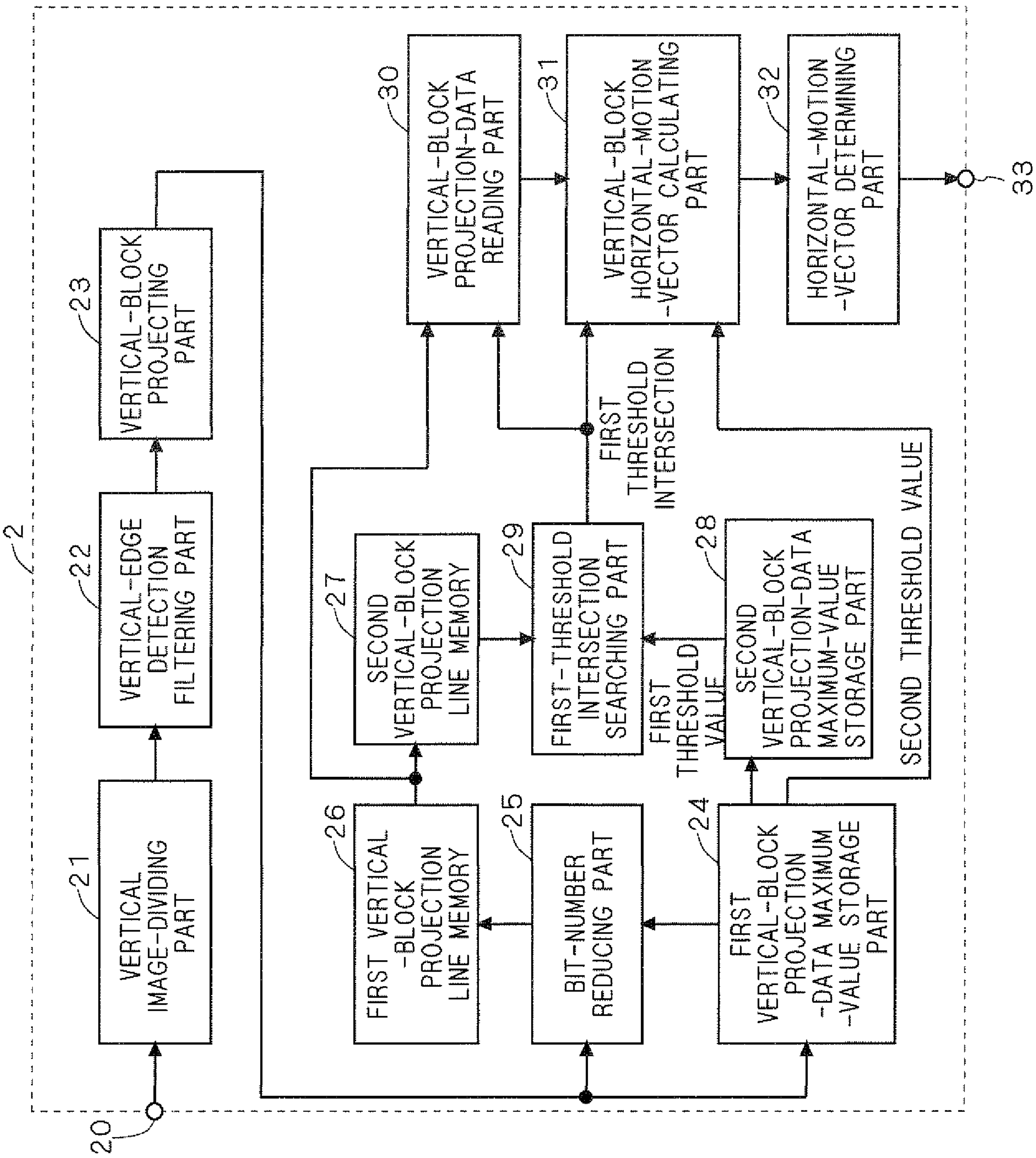
2
20
VERTICAL IMAGE-DIVIDING PART
21
VERTICAL-EDGE DETECTION FILTERING PART
22
VERTICAL-BLOCK PROJECTING PART
23
FIRST VERTICAL-BLOCK PROJECTION-DATA MAXIMUM-VALUE STORAGE PART
24
BIT-NUMBER REDUCING PART
25
FIRST VERTICAL-BLOCK PROJECTION LINE MEMORY
26
SECOND VERTICAL-BLOCK PROJECTION LINE MEMORY
27
SECOND VERTICAL-BLOCK PROJECTION-DATA MAXIMUM-VALUE STORAGE PART
28
FIRST-THRESHOLD INTERSECTION SEARCHING PART
29
FIRST THRESHOLD VALUE
SECOND THRESHOLD VALUE
FIRST THRESHOLD INTERSECTION
VERTICAL-BLOCK PROJECTION-DATA READING PART
30
VERTICAL-BLOCK HORIZONTAL-MOTION-VECTOR CALCULATING PART
31
HORIZONTAL-MOTION-VECTOR DETERMINING PART
32
33

F I G . 3

FIG. 4

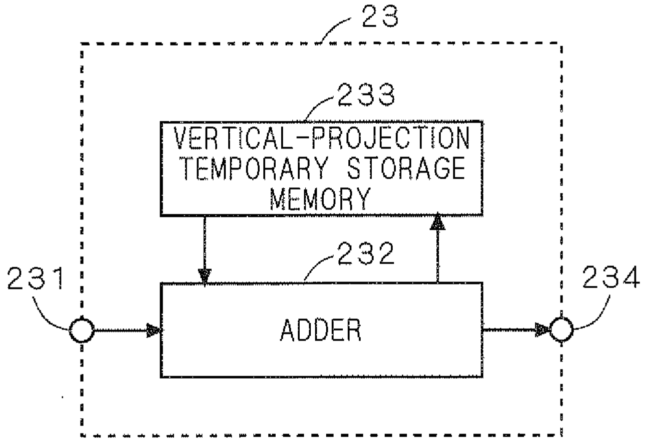
23
233
VERTICAL-PROJECTION TEMPORARY STORAGE MEMORY
232
231
234
ADDER

FIG. 5

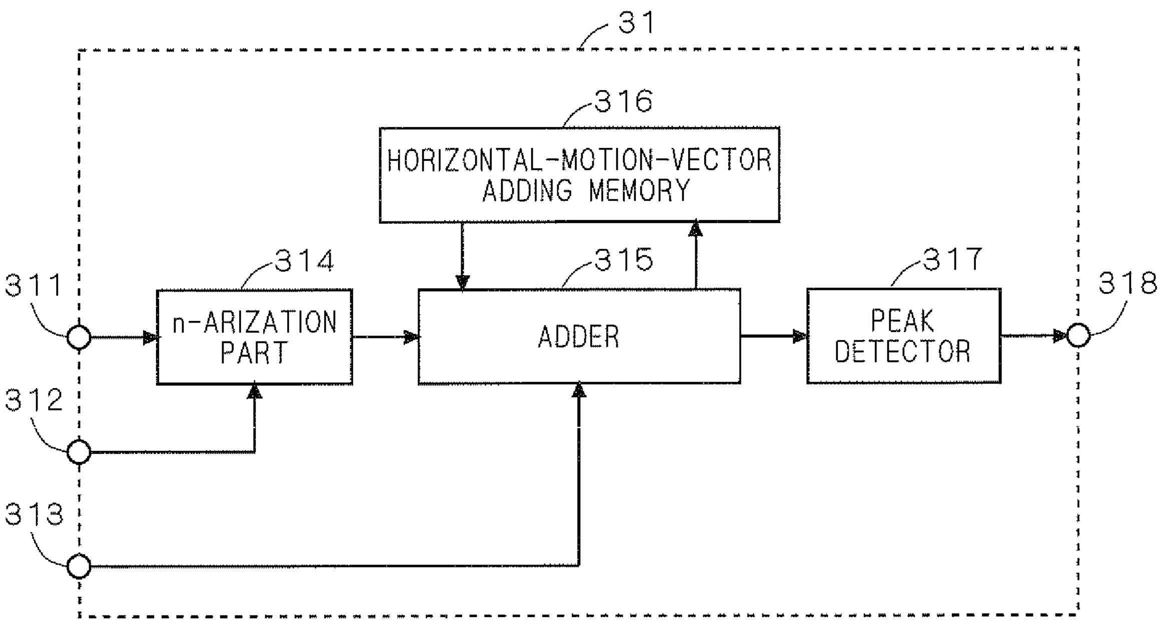
31
316
HORIZONTAL-MOTION-VECTOR ADDING MEMORY
314
315
317
311
318
n-ARIZATION PART
ADDER
PEAK DETECTOR
312
313

FIG. 6

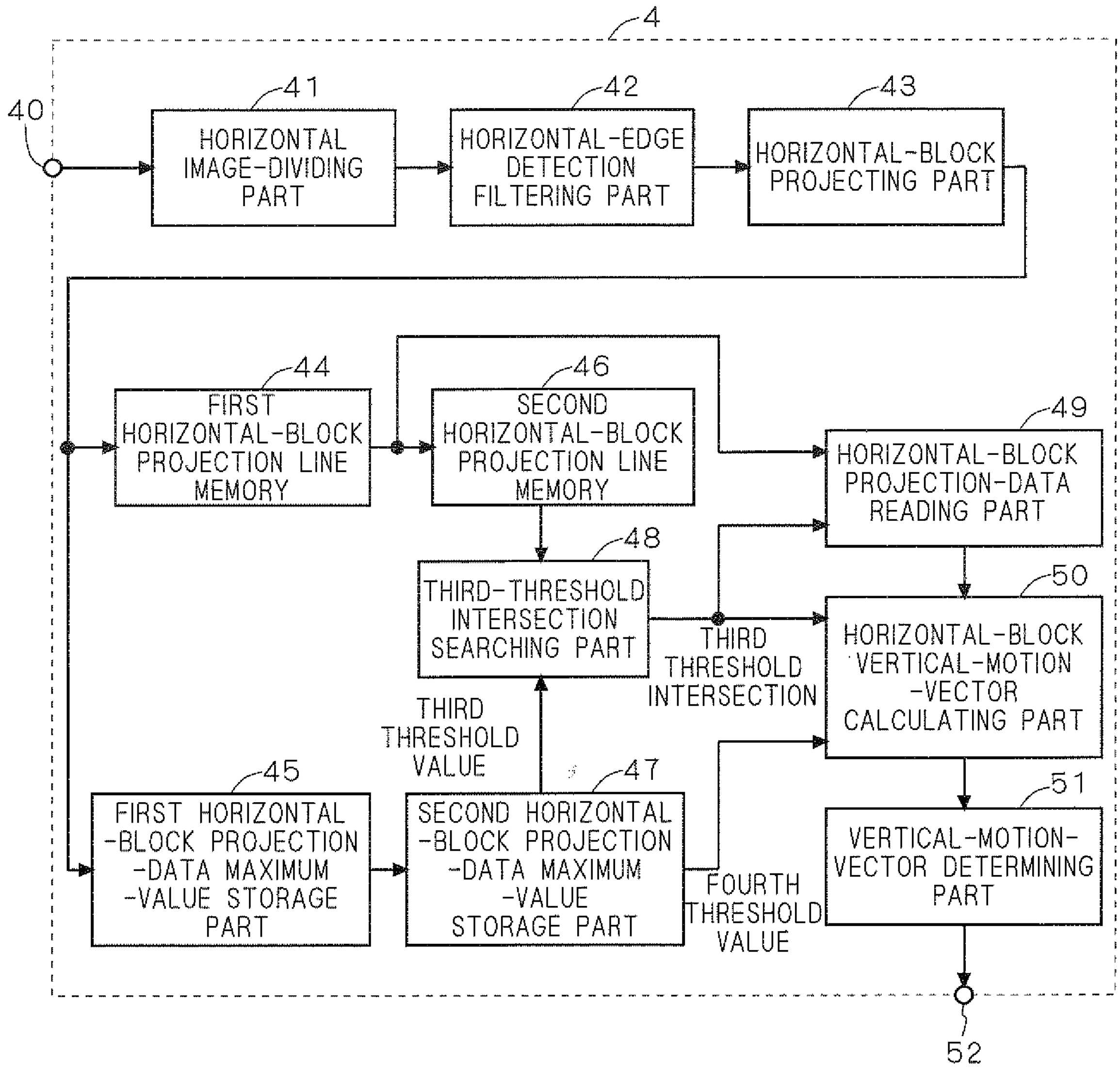
4
40
41
HORIZONTAL IMAGE-DIVIDING PART
42
HORIZONTAL-EDGE DETECTION FILTERING PART
43
HORIZONTAL-BLOCK PROJECTING PART
44
FIRST HORIZONTAL-BLOCK PROJECTION LINE MEMORY
46
SECOND HORIZONTAL-BLOCK PROJECTION LINE MEMORY
49
HORIZONTAL-BLOCK PROJECTION-DATA READING PART
48
THIRD-THRESHOLD INTERSECTION SEARCHING PART
THIRD THRESHOLD INTERSECTION
50
HORIZONTAL-BLOCK VERTICAL-MOTION -VECTOR CALCULATING PART
THIRD THRESHOLD VALUE
45
FIRST HORIZONTAL -BLOCK PROJECTION -DATA MAXIMUM -VALUE STORAGE PART
47
SECOND HORIZONTAL -BLOCK PROJECTION -DATA MAXIMUM -VALUE STORAGE PART
FOURTH THRESHOLD VALUE
51
VERTICAL-MOTION-VECTOR DETERMINING PART
52

FIG. 7

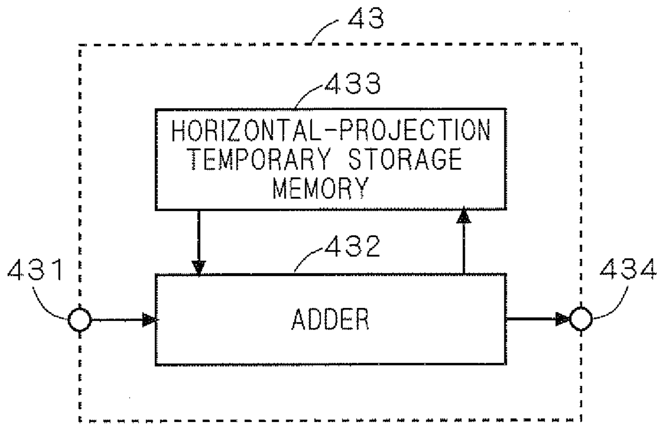
43
433
HORIZONTAL-PROJECTION TEMPORARY STORAGE MEMORY
432
431
434
ADDER

F I G . 8

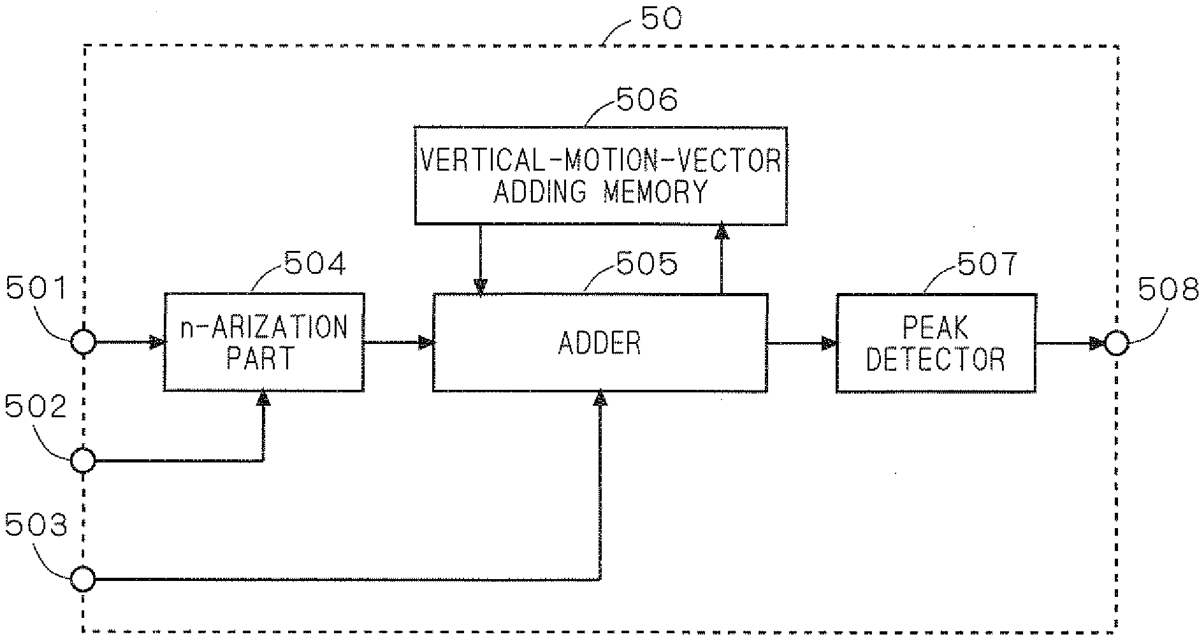
50
506
VERTICAL-MOTION-VECTOR ADDING MEMORY
501
504
n-ARIZATION PART
505
ADDER
507
PEAK DETECTOR
508
502
503

FIG. 9

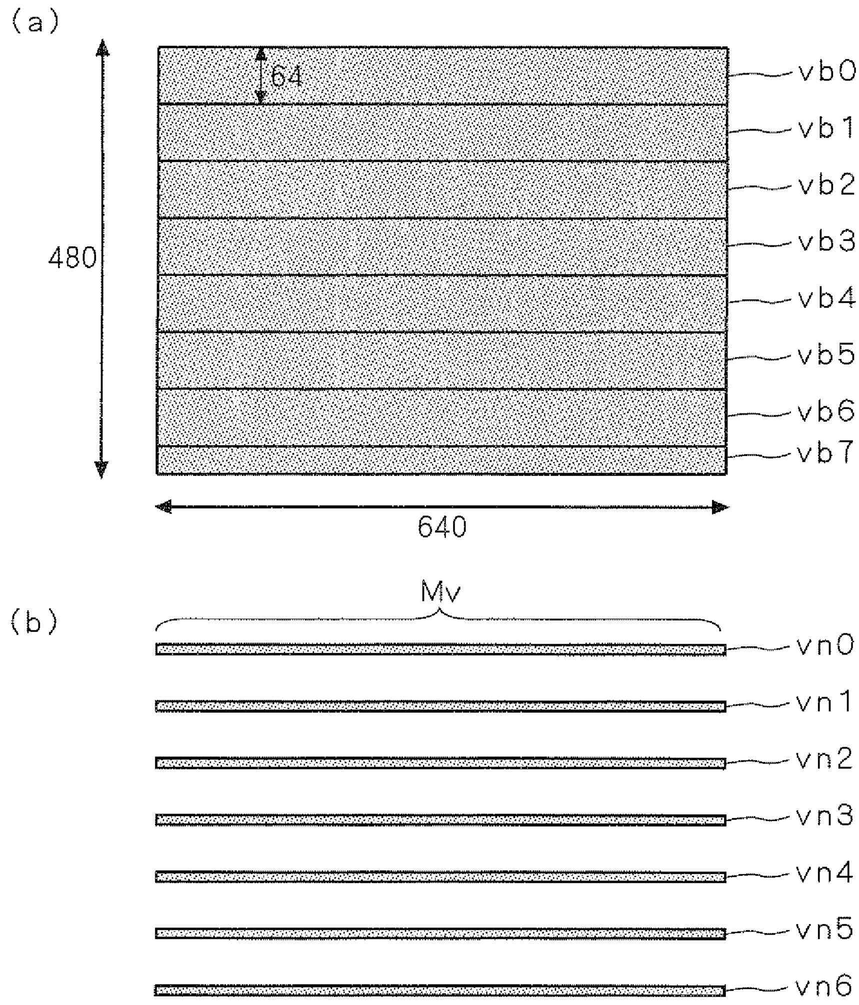
(a)
64
480
640
vb0
vb1
vb2
vb3
vb4
vb5
vb6
vb7
(b)
Mv
vn0
vn1
vn2
vn3
vn4
vn5
vn6

FIG. 10

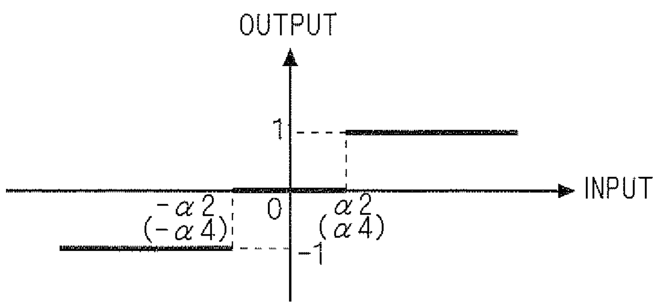
OUTPUT
INPUT
1
0
-1
−α2
(−α4)
α2
(α4)

FIG. 11

(a)

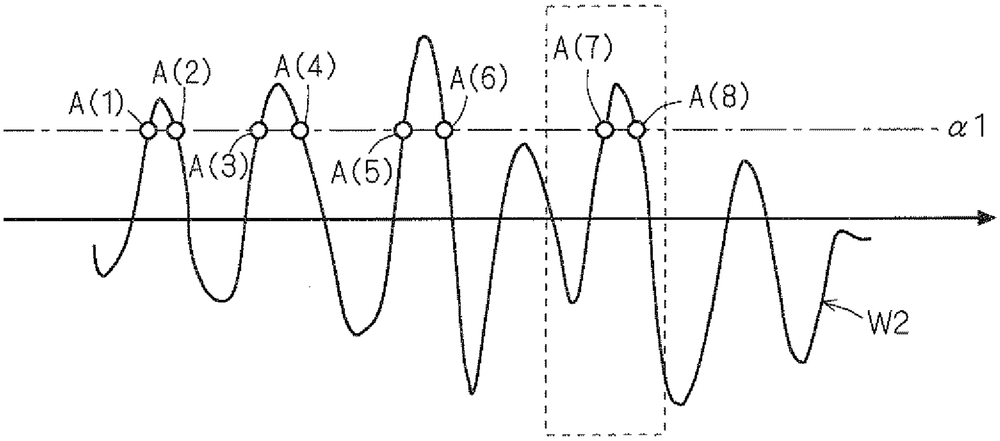


(b)

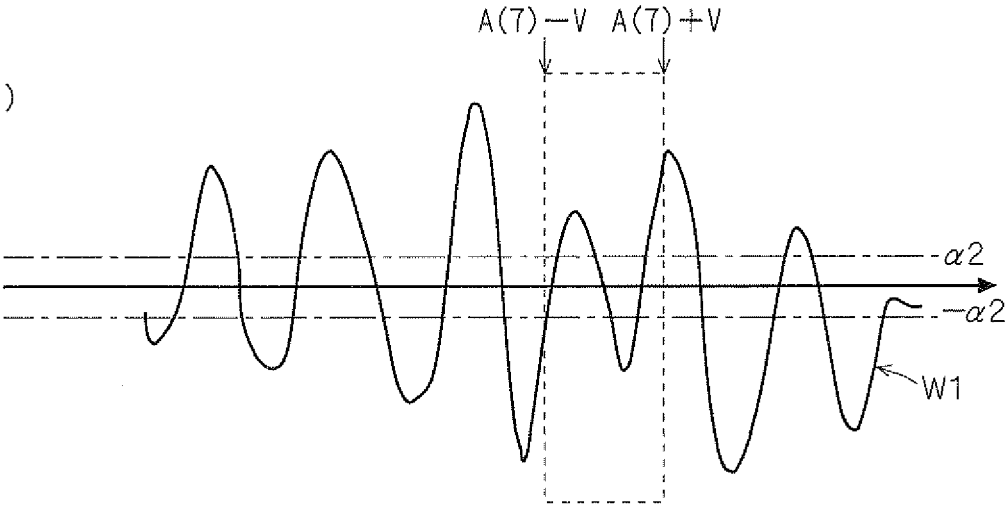


(c)

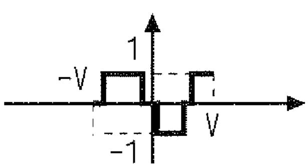

F I G . 1 2

(a)

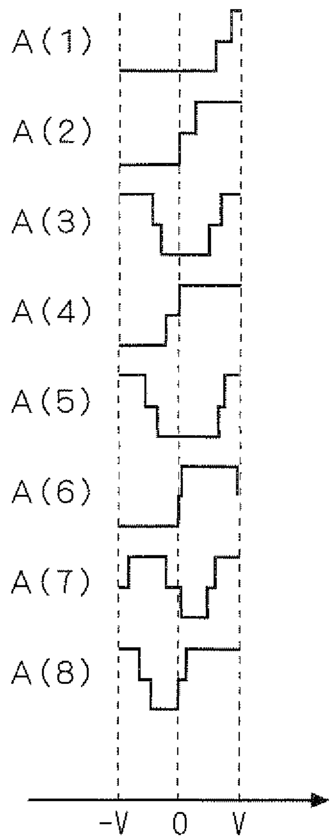


(b)

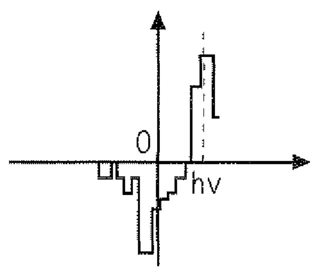

F I G . 1 3

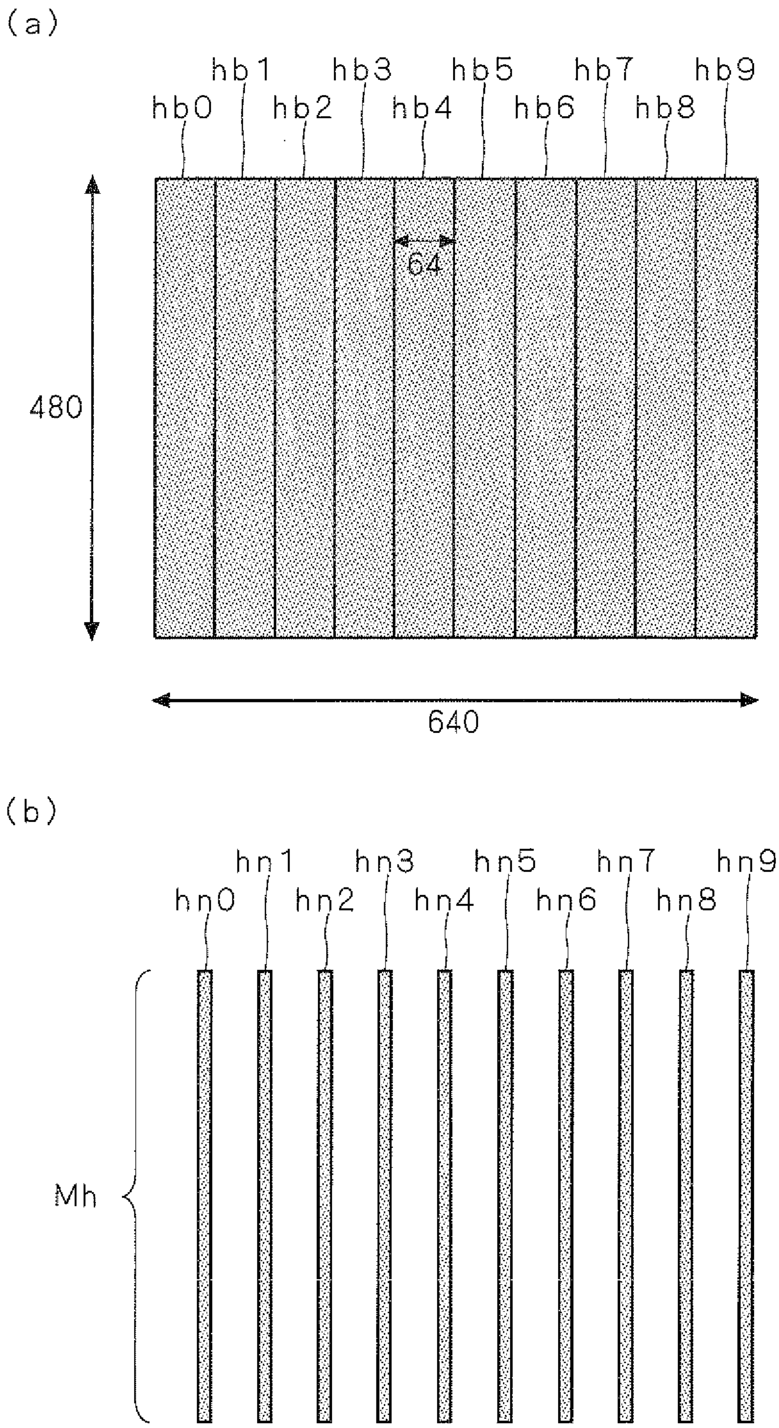
(a)
hb0
hb1
hb2
hb3
hb4
hb5
hb6
hb7
hb8
hb9
64
480
640
(b)
hn0
hn1
hn2
hn3
hn4
hn5
hn6
hn7
hn8
hn9
Mh

FIG. 14

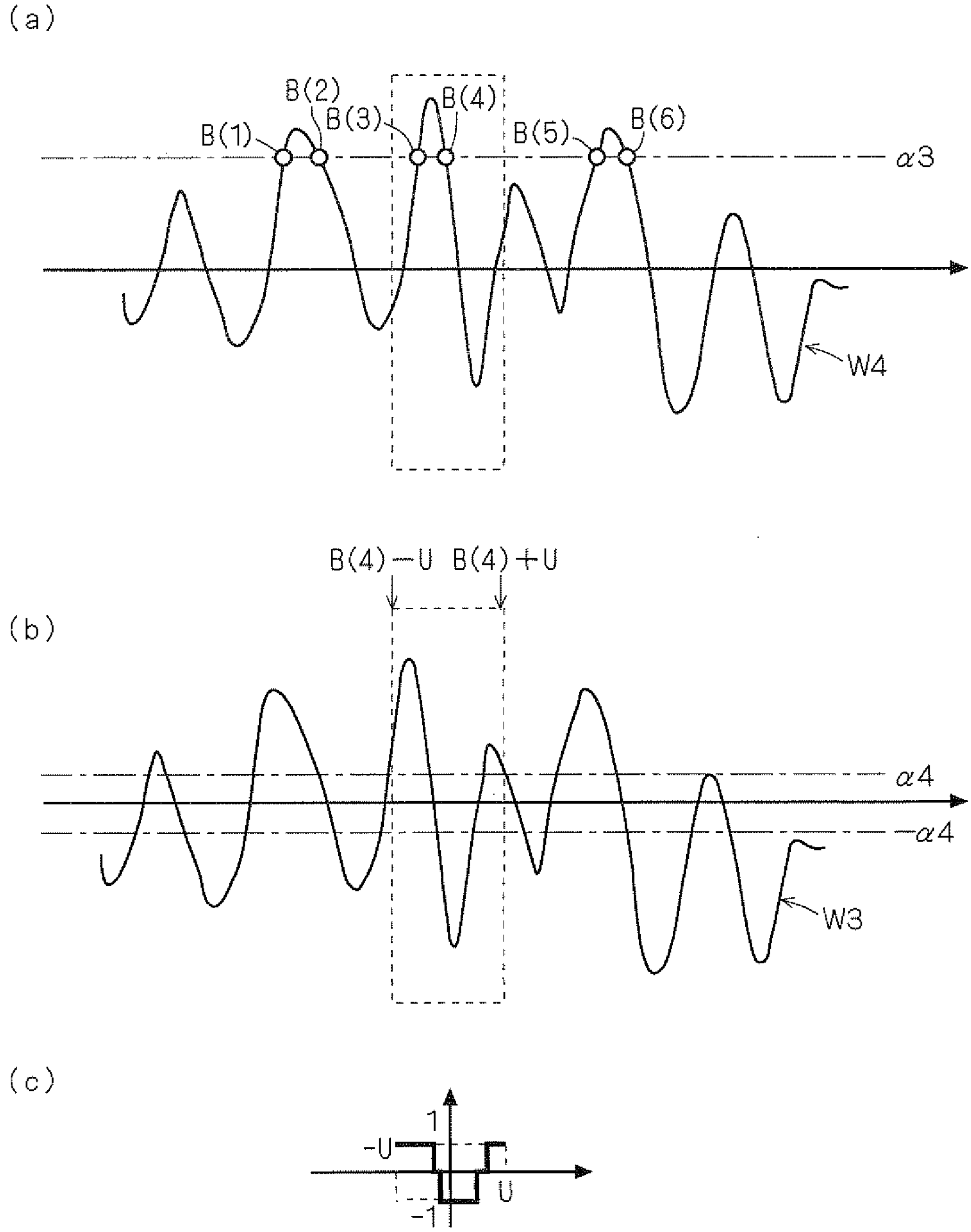

F I G . 1 5

(a)

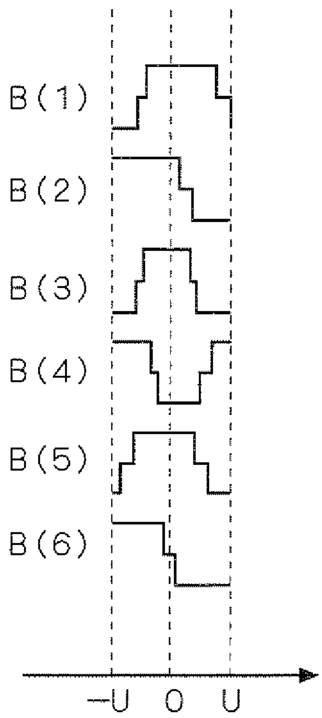


(b)

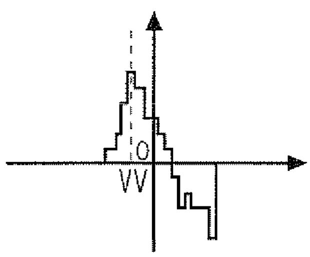

F I G . 1 6

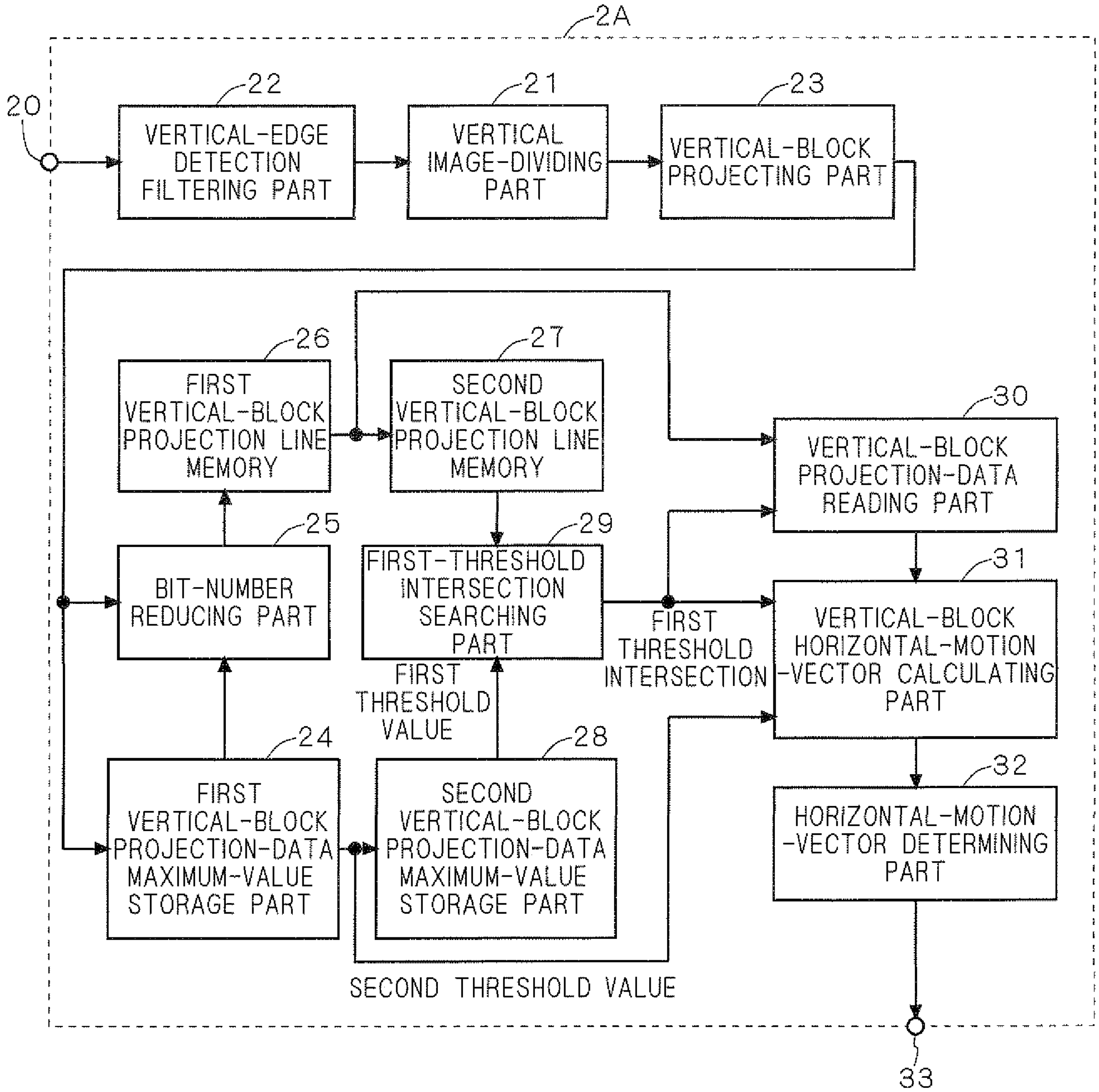
2A
20
22
VERTICAL-EDGE DETECTION FILTERING PART
21
VERTICAL IMAGE-DIVIDING PART
23
VERTICAL-BLOCK PROJECTING PART
26
FIRST VERTICAL-BLOCK PROJECTION LINE MEMORY
27
SECOND VERTICAL-BLOCK PROJECTION LINE MEMORY
30
VERTICAL-BLOCK PROJECTION-DATA READING PART
25
BIT-NUMBER REDUCING PART
29
FIRST-THRESHOLD INTERSECTION SEARCHING PART
31
VERTICAL-BLOCK HORIZONTAL-MOTION -VECTOR CALCULATING PART
FIRST THRESHOLD INTERSECTION
FIRST THRESHOLD VALUE
24
FIRST VERTICAL-BLOCK PROJECTION-DATA MAXIMUM-VALUE STORAGE PART
28
SECOND VERTICAL-BLOCK PROJECTION-DATA MAXIMUM-VALUE STORAGE PART
32
HORIZONTAL-MOTION -VECTOR DETERMINING PART
SECOND THRESHOLD VALUE
33

F I G . 1 7

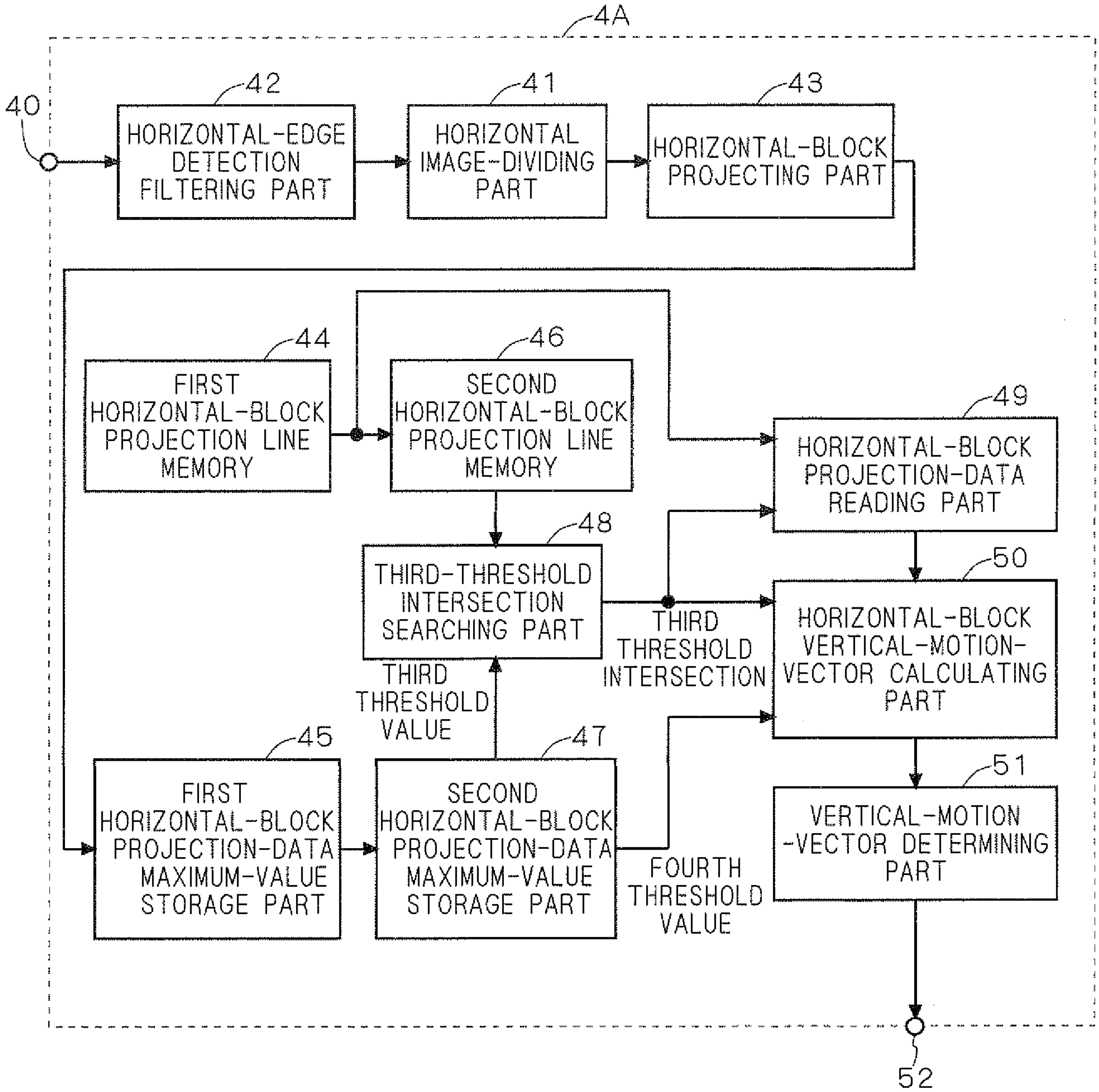
4A
40
42
HORIZONTAL-EDGE DETECTION FILTERING PART
41
HORIZONTAL IMAGE-DIVIDING PART
43
HORIZONTAL-BLOCK PROJECTING PART
44
FIRST HORIZONTAL-BLOCK PROJECTION LINE MEMORY
46
SECOND HORIZONTAL-BLOCK PROJECTION LINE MEMORY
49
HORIZONTAL-BLOCK PROJECTION-DATA READING PART
48
THIRD-THRESHOLD INTERSECTION SEARCHING PART
50
HORIZONTAL-BLOCK VERTICAL-MOTION-VECTOR CALCULATING PART
THIRD THRESHOLD INTERSECTION
THIRD THRESHOLD VALUE
45
FIRST HORIZONTAL-BLOCK PROJECTION-DATA MAXIMUM-VALUE STORAGE PART
47
SECOND HORIZONTAL-BLOCK PROJECTION-DATA MAXIMUM-VALUE STORAGE PART
FOURTH THRESHOLD VALUE
51
VERTICAL-MOTION -VECTOR DETERMINING PART
52

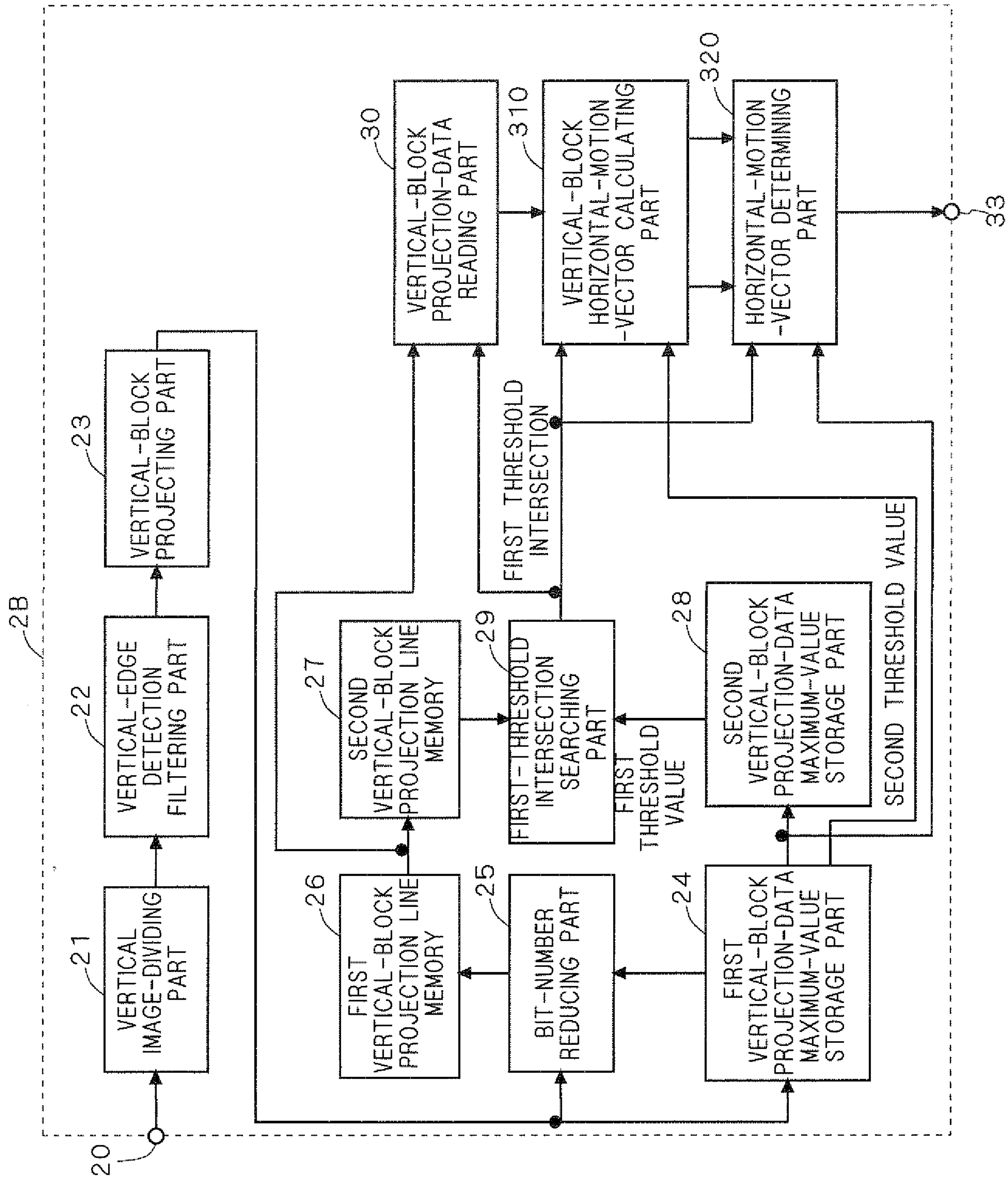
2B
20
21 VERTICAL IMAGE-DIVIDING PART
22 VERTICAL-EDGE DETECTION FILTERING PART
23 VERTICAL-BLOCK PROJECTING PART
24 FIRST VERTICAL-BLOCK PROJECTION-DATA MAXIMUM-VALUE STORAGE PART
25 BIT-NUMBER REDUCING PART
26 FIRST VERTICAL-BLOCK PROJECTION LINE MEMORY
27 SECOND VERTICAL-BLOCK PROJECTION LINE MEMORY
28 SECOND VERTICAL-BLOCK PROJECTION-DATA MAXIMUM-VALUE STORAGE PART
29 FIRST-THRESHOLD INTERSECTION SEARCHING PART
FIRST THRESHOLD VALUE
FIRST THRESHOLD INTERSECTION
SECOND THRESHOLD VALUE
30 VERTICAL-BLOCK PROJECTION-DATA READING PART
310 VERTICAL-BLOCK HORIZONTAL-MOTION -VECTOR CALCULATING PART
320 HORIZONTAL-MOTION -VECTOR DETERMINING PART
33

F I G . 1 8

F I G . 1 9

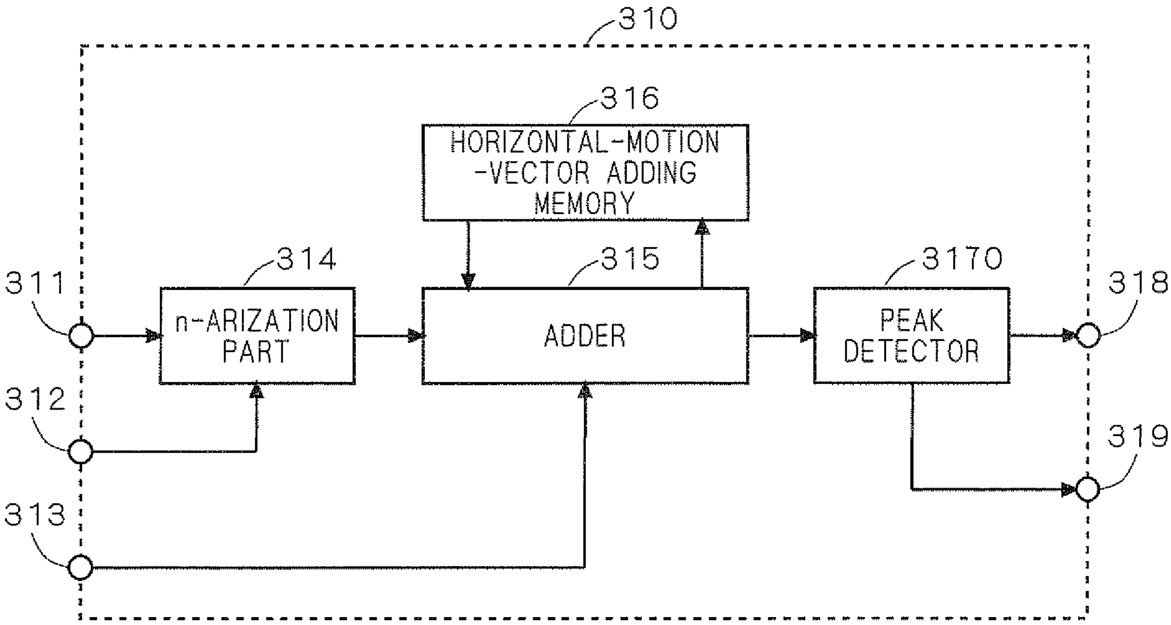
310
316
HORIZONTAL-MOTION -VECTOR ADDING MEMORY
311
314
n-ARIZATION PART
315
ADDER
3170
PEAK DETECTOR
318
312
319
313

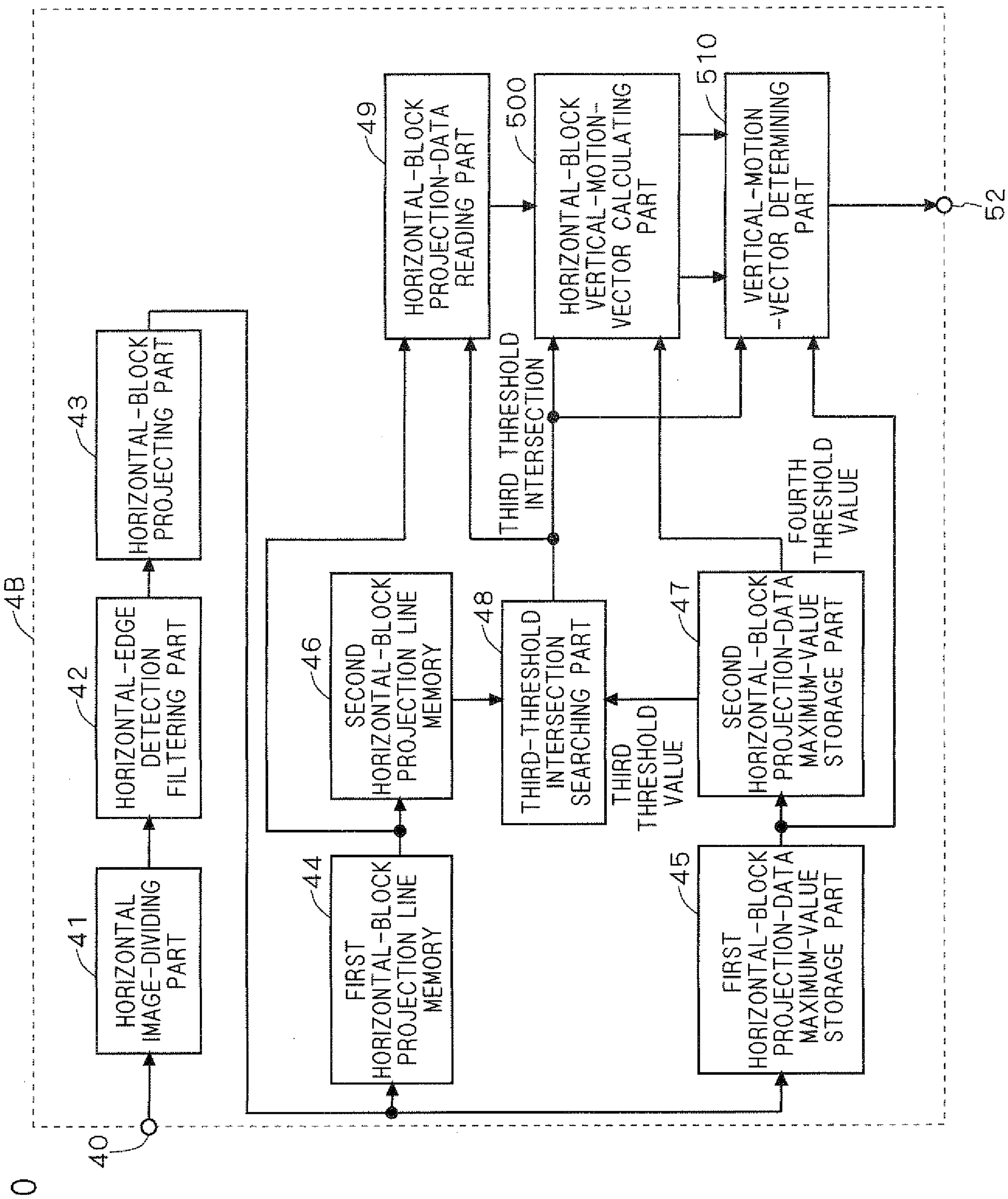
4B
40
41
HORIZONTAL IMAGE-DIVIDING PART
42
HORIZONTAL-EDGE DETECTION FILTERING PART
43
HORIZONTAL-BLOCK PROJECTING PART
44
FIRST HORIZONTAL-BLOCK PROJECTION LINE MEMORY
45
FIRST HORIZONTAL-BLOCK PROJECTION-DATA MAXIMUM-VALUE STORAGE PART
46
SECOND HORIZONTAL-BLOCK PROJECTION LINE MEMORY
47
SECOND HORIZONTAL-BLOCK PROJECTION-DATA MAXIMUM-VALUE STORAGE PART
48
THIRD-THRESHOLD INTERSECTION SEARCHING PART
THIRD THRESHOLD VALUE
THIRD THRESHOLD INTERSECTION
FOURTH THRESHOLD VALUE
49
HORIZONTAL-BLOCK PROJECTION-DATA READING PART
500
HORIZONTAL-BLOCK VERTICAL-MOTION-VECTOR CALCULATING PART
510
VERTICAL-MOTION-VECTOR DETERMINING PART
52

F I G . 2 0

FIG. 21

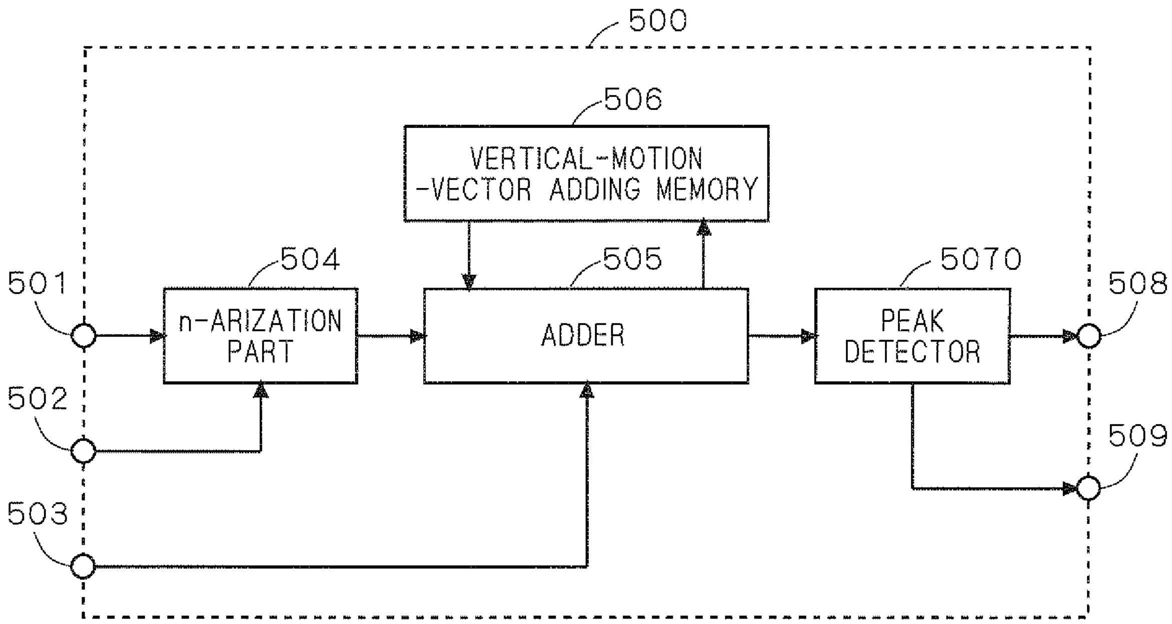
500
506
VERTICAL-MOTION -VECTOR ADDING MEMORY
501
504
n-ARIZATION PART
505
ADDER
5070
PEAK DETECTOR
508
502
509
503

FIG. 22

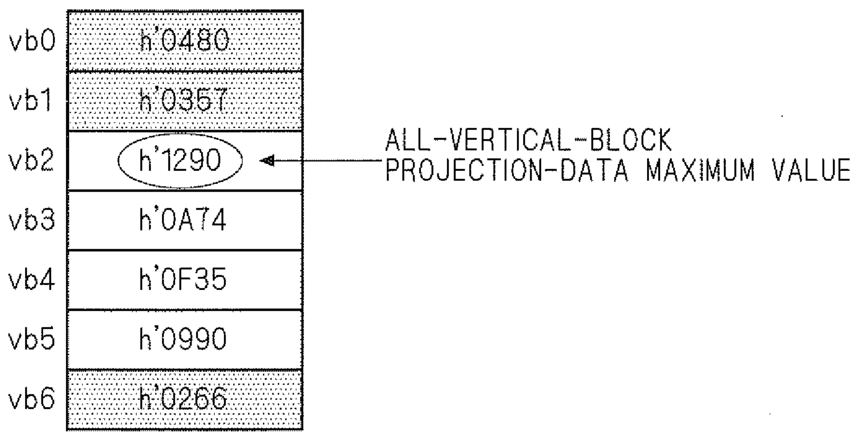
vb0
h'0480
vb1
h'0357
vb2
h'1290
ALL-VERTICAL-BLOCK PROJECTION-DATA MAXIMUM VALUE
vb3
h'0A74
vb4
h'0F35
vb5
h'0990
vb6
h'0266

FIG. 23

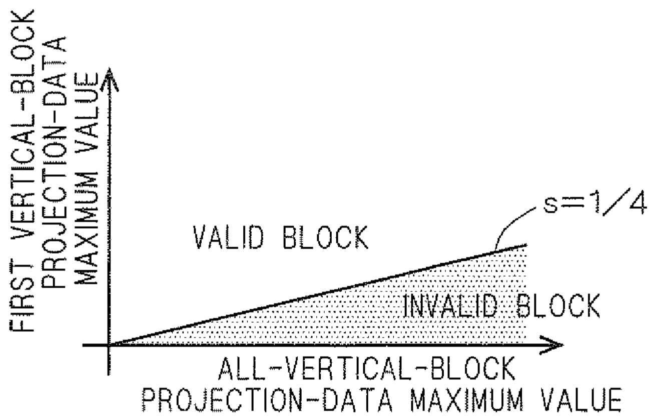
FIRST VERTICAL-BLOCK PROJECTION-DATA MAXIMUM VALUE
s=1/4
VALID BLOCK
INVALID BLOCK
ALL-VERTICAL-BLOCK PROJECTION-DATA MAXIMUM VALUE

FIG. 24

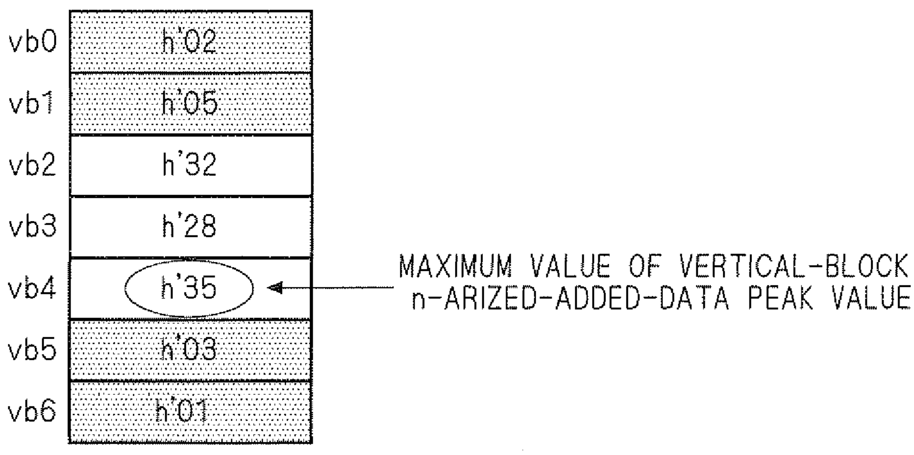
vb0 h'02
vb1 h'05
vb2 h'32
vb3 h'28
vb4 h'35
vb5 h'03
vb6 h'01
MAXIMUM VALUE OF VERTICAL-BLOCK n-ARIZED-ADDED-DATA PEAK VALUE

FIG. 25

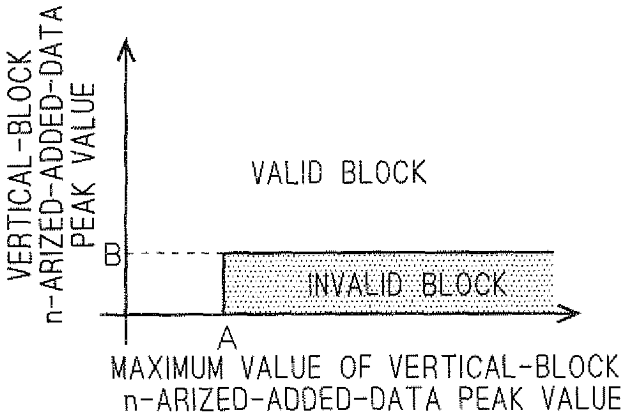
VERTICAL-BLOCK n-ARIZED-ADDED-DATA PEAK VALUE
VALID BLOCK
B
INVALID BLOCK
A
MAXIMUM VALUE OF VERTICAL-BLOCK n-ARIZED-ADDED-DATA PEAK VALUE

FIG. 26

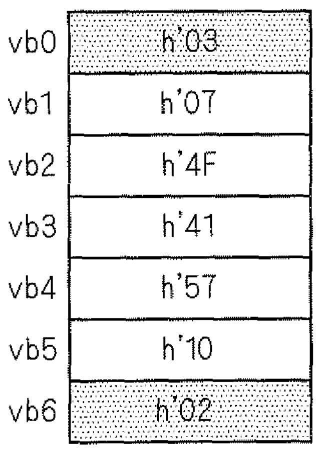
vb0
h'03
vb1
h'07
vb2
h'4F
vb3
h'41
vb4
h'57
vb5
h'10
vb6
h'02

F I G . 2 7

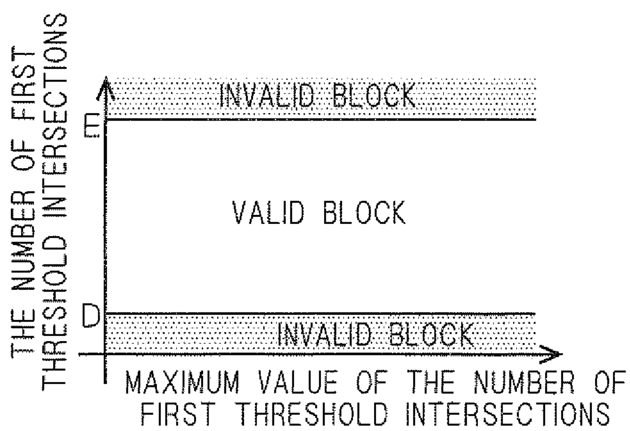
THE NUMBER OF FIRST THRESHOLD INTERSECTIONS
INVALID BLOCK
E
VALID BLOCK
D
INVALID BLOCK
MAXIMUM VALUE OF THE NUMBER OF FIRST THRESHOLD INTERSECTIONS

F I G . 2 8

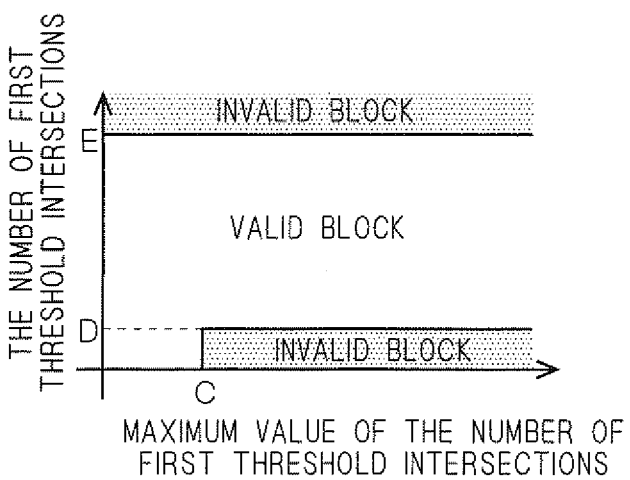
THE NUMBER OF FIRST THRESHOLD INTERSECTIONS
INVALID BLOCK
E
VALID BLOCK
D
INVALID BLOCK
C
MAXIMUM VALUE OF THE NUMBER OF FIRST THRESHOLD INTERSECTIONS

F I G . 2 9

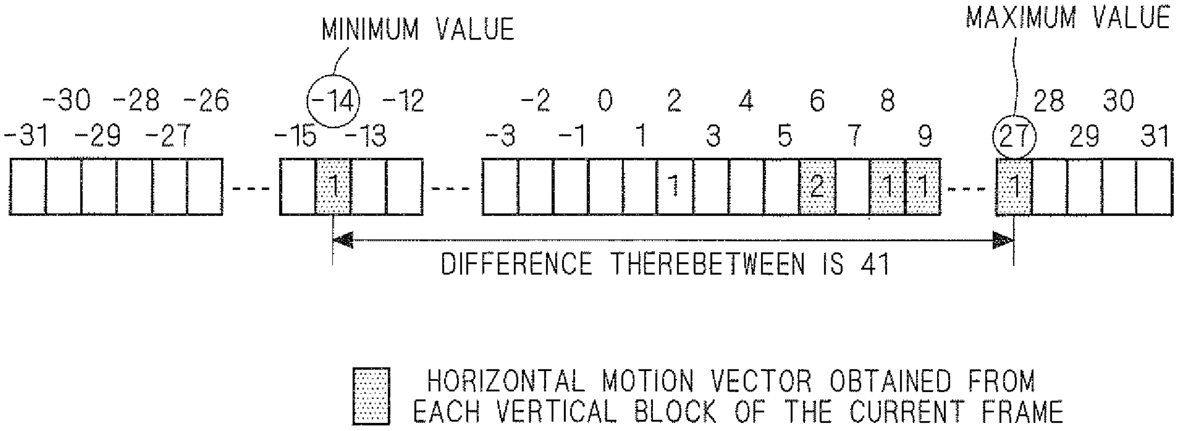
MINIMUM VALUE
MAXIMUM VALUE
-30 -28 -26
-31 -29 -27
-14 -12
-15 -13
-2 0 2 4 6 8
-3 -1 1 3 5 7 9
28 30
27 29 31
1
1
2
1 1
1
DIFFERENCE THEREBETWEEN IS 41
HORIZONTAL MOTION VECTOR OBTAINED FROM EACH VERTICAL BLOCK OF THE CURRENT FRAME

F I G . 3 0

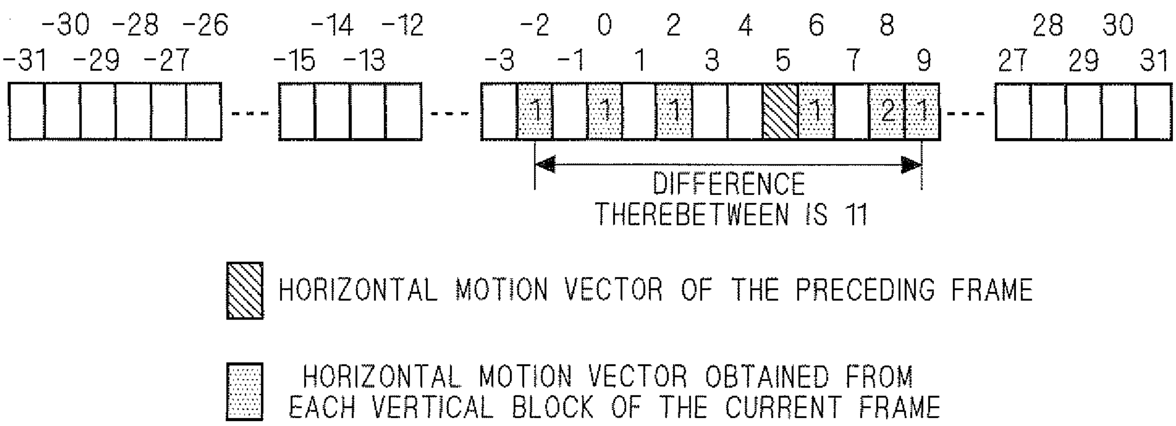
-30 -28 -26
-31 -29 -27
-14 -12
-15 -13
-2 0 2 4 6 8
-3 -1 1 3 5 7 9
28 30
27 29 31
1 1 1 1 2 1
DIFFERENCE THEREBETWEEN IS 11
HORIZONTAL MOTION VECTOR OF THE PRECEDING FRAME
HORIZONTAL MOTION VECTOR OBTAINED FROM EACH VERTICAL BLOCK OF THE CURRENT FRAME

FIG. 31

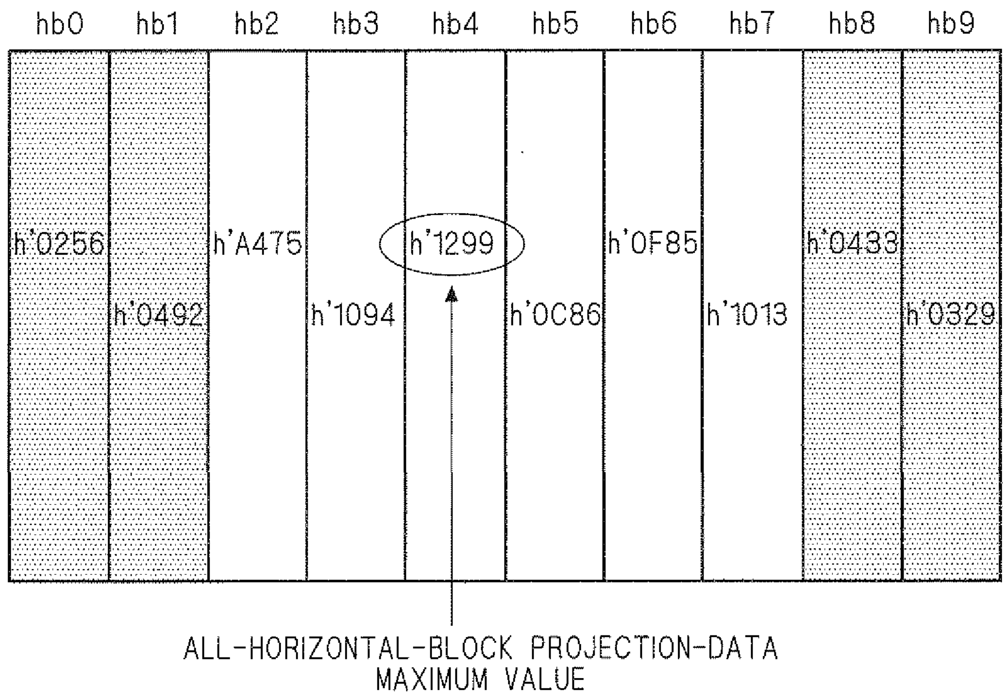
hb0
hb1
hb2
hb3
hb4
hb5
hb6
hb7
hb8
hb9
h'0256
h'0492
h'A475
h'1094
h'1299
h'0C86
h'0F85
h'1013
h'0433
h'0329
ALL-HORIZONTAL-BLOCK PROJECTION-DATA MAXIMUM VALUE

FIG. 32

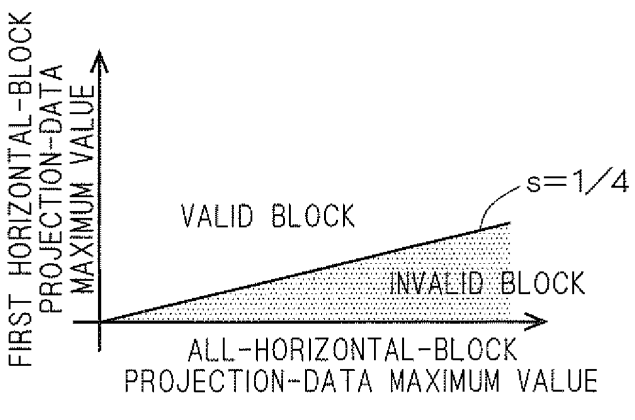
FIRST HORIZONTAL-BLOCK PROJECTION-DATA MAXIMUM VALUE
s=1/4
VALID BLOCK
INVALID BLOCK
ALL-HORIZONTAL-BLOCK PROJECTION-DATA MAXIMUM VALUE

F I G . 3 3

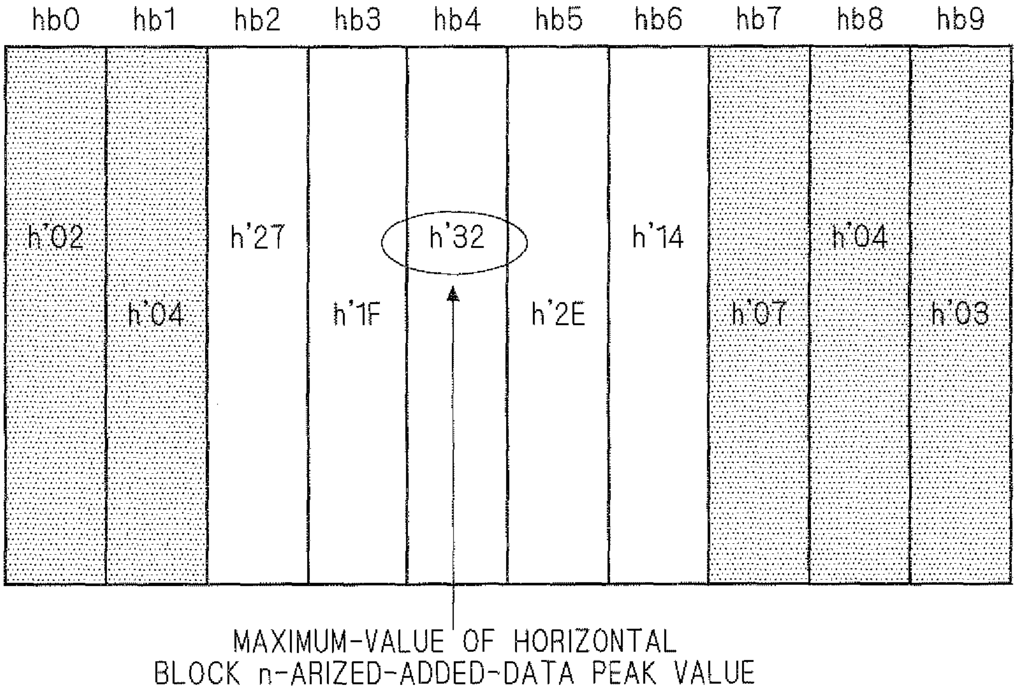
hb0
hb1
hb2
hb3
hb4
hb5
hb6
hb7
hb8
hb9
h'02
h'04
h'27
h'1F
h'32
h'2E
h'14
h'07
h'04
h'03
MAXIMUM-VALUE OF HORIZONTAL
BLOCK n-ARIZED-ADDED-DATA PEAK VALUE

F I G . 3 4

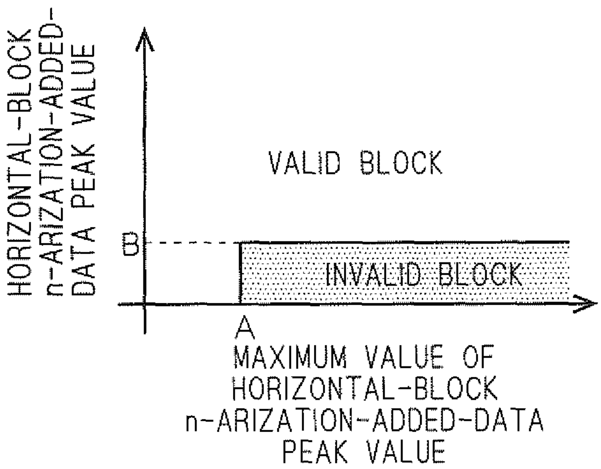
HORIZONTAL-BLOCK
n-ARIZATION-ADDED-
DATA PEAK VALUE
VALID BLOCK
B
INVALID BLOCK
A
MAXIMUM VALUE OF
HORIZONTAL-BLOCK
n-ARIZATION-ADDED-DATA
PEAK VALUE

FIG. 35

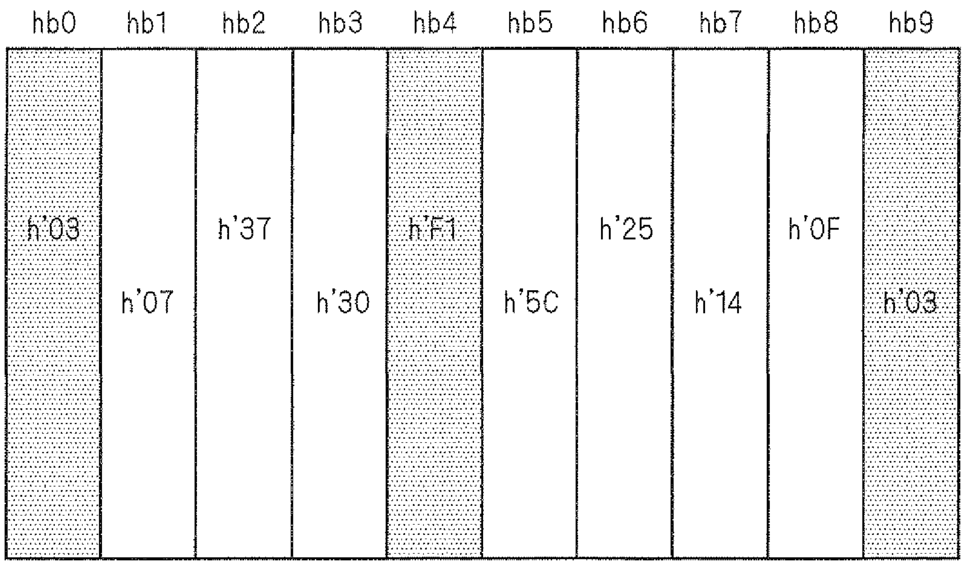


FIG. 36

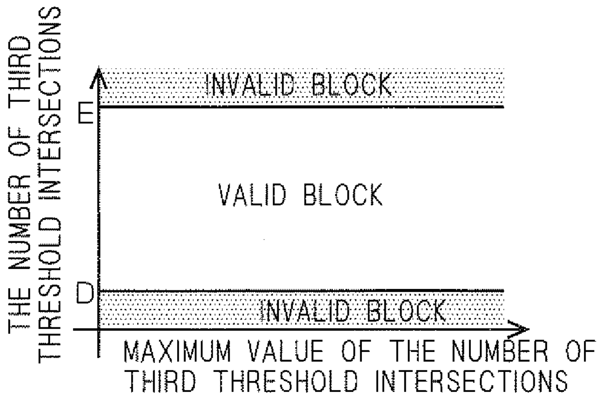


FIG. 37

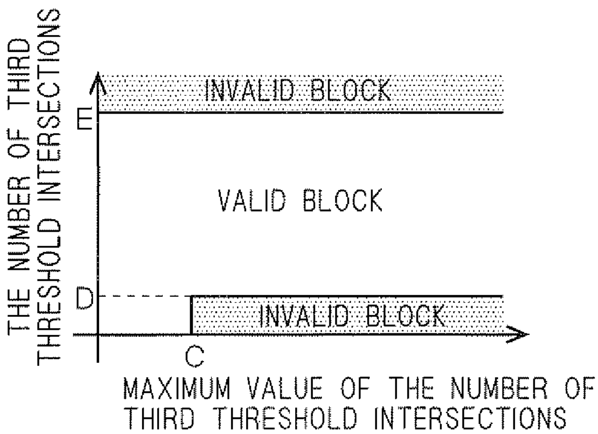

FIG. 38

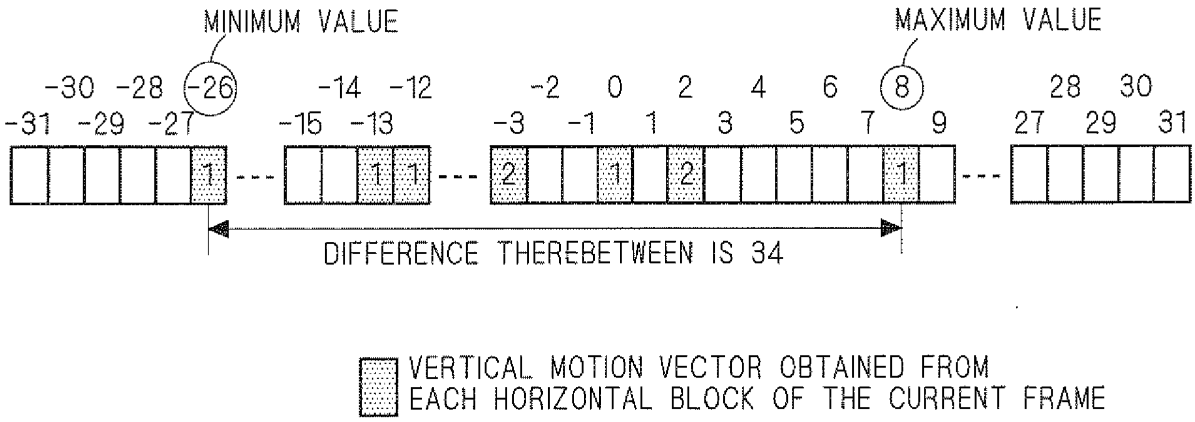
MINIMUM VALUE
MAXIMUM VALUE
-30 -28 -26 -14 -12 -2 0 2 4 6 8 28 30
-31 -29 -27 -15 -13 -3 -1 1 3 5 7 9 27 29 31
1 1 1 2 1 2 1
DIFFERENCE THEREBETWEEN IS 34
VERTICAL MOTION VECTOR OBTAINED FROM
EACH HORIZONTAL BLOCK OF THE CURRENT FRAME

FIG. 39

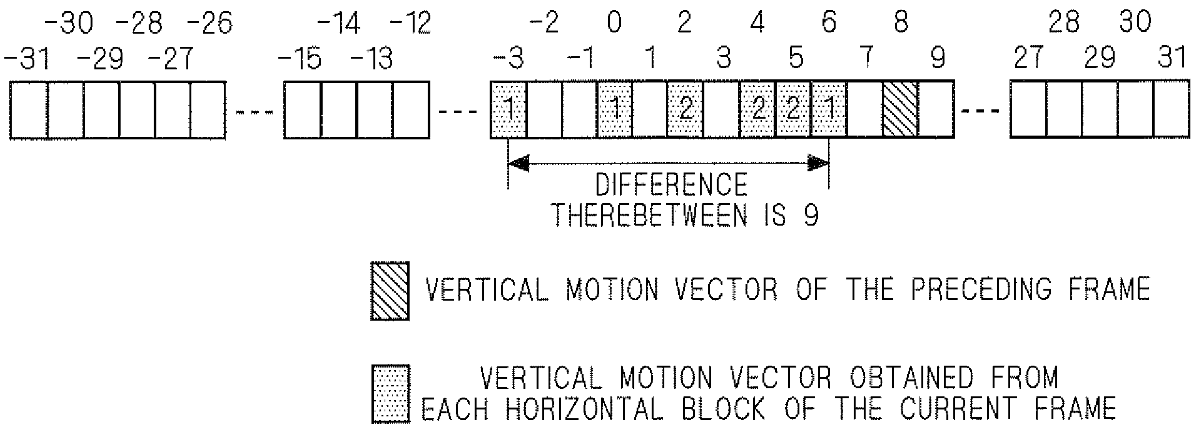
-30 -28 -26 -14 -12 -2 0 2 4 6 8 28 30
-31 -29 -27 -15 -13 -3 -1 1 3 5 7 9 27 29 31
1 1 2 2 2 1
DIFFERENCE
THEREBETWEEN IS 9
VERTICAL MOTION VECTOR OF THE PRECEDING FRAME
VERTICAL MOTION VECTOR OBTAINED FROM
EACH HORIZONTAL BLOCK OF THE CURRENT FRAME

FIG. 40

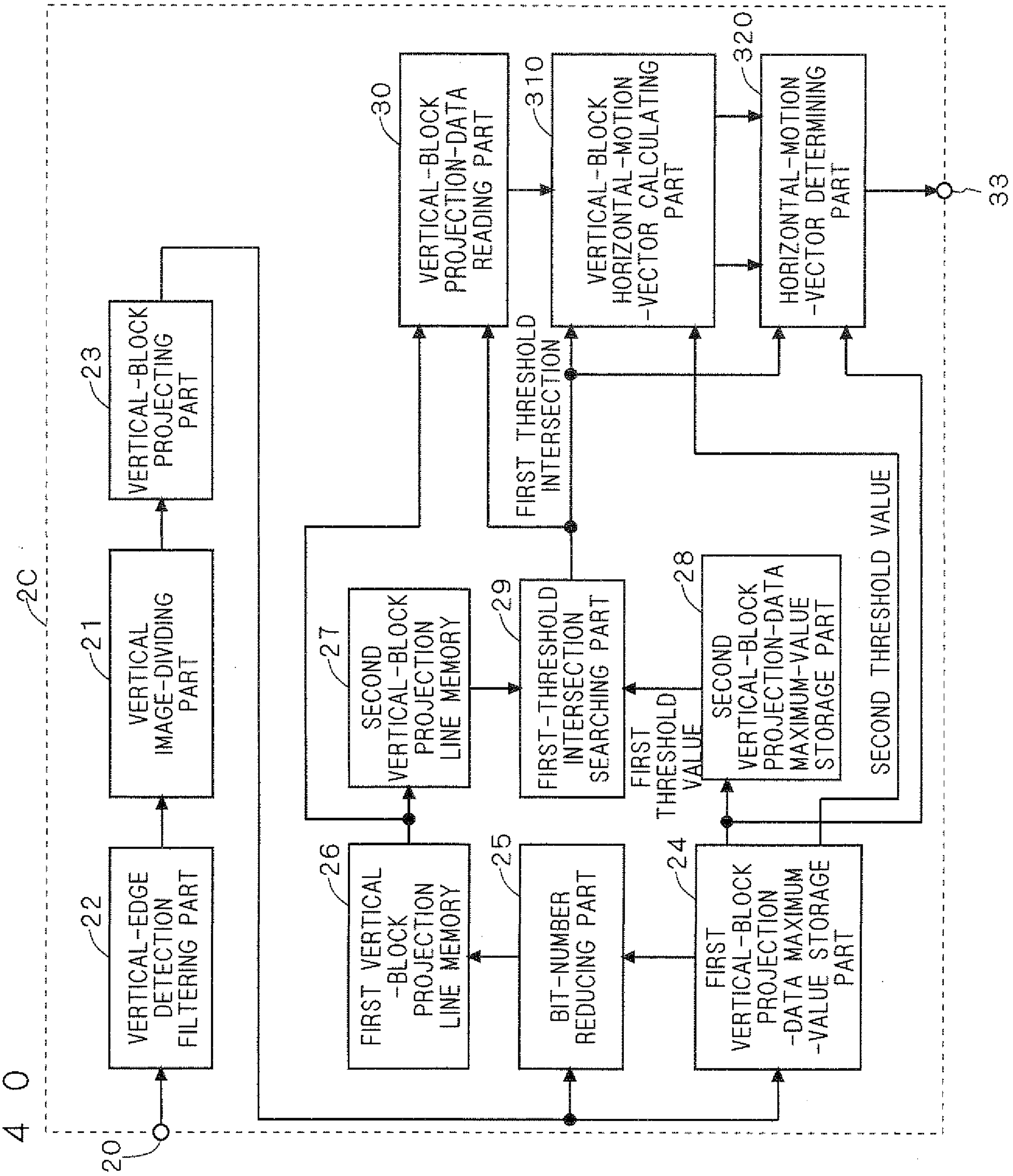
2C
20
22
VERTICAL-EDGE DETECTION FILTERING PART
21
VERTICAL IMAGE-DIVIDING PART
23
VERTICAL-BLOCK PROJECTING PART
24
FIRST VERTICAL-BLOCK PROJECTION -DATA MAXIMUM -VALUE STORAGE PART
25
BIT-NUMBER REDUCING PART
26
FIRST VERTICAL -BLOCK PROJECTION LINE MEMORY
27
SECOND VERTICAL-BLOCK PROJECTION LINE MEMORY
28
SECOND VERTICAL-BLOCK PROJECTION-DATA MAXIMUM-VALUE STORAGE PART
29
FIRST-THRESHOLD INTERSECTION SEARCHING PART
FIRST THRESHOLD VALUE
SECOND THRESHOLD VALUE
FIRST THRESHOLD INTERSECTION
30
VERTICAL-BLOCK PROJECTION-DATA READING PART
310
VERTICAL-BLOCK HORIZONTAL-MOTION -VECTOR CALCULATING PART
320
HORIZONTAL-MOTION -VECTOR DETERMINING PART
33

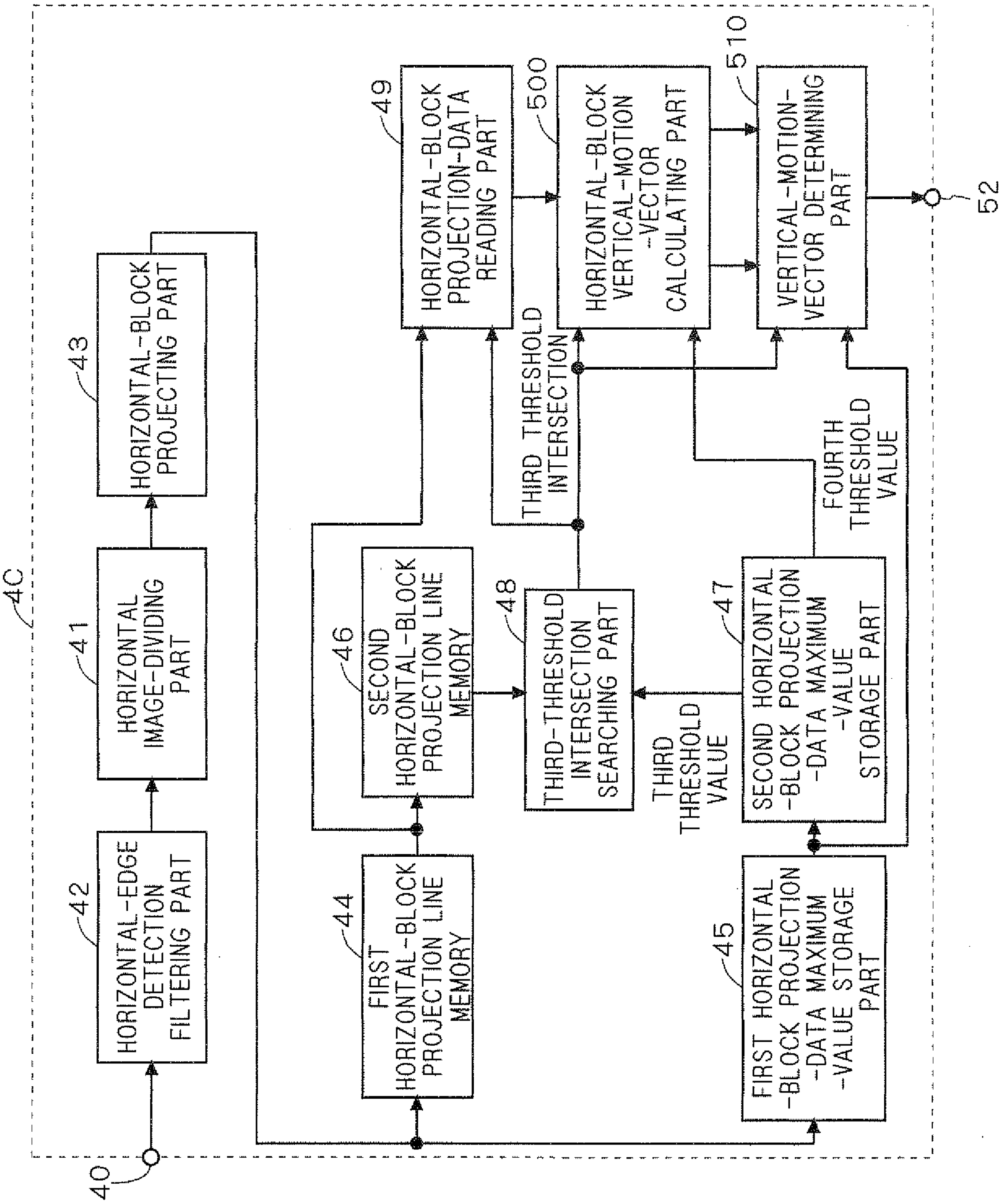
4C
40
42
HORIZONTAL-EDGE DETECTION FILTERING PART
41
HORIZONTAL IMAGE-DIVIDING PART
43
HORIZONTAL-BLOCK PROJECTING PART
44
FIRST HORIZONTAL-BLOCK PROJECTION LINE MEMORY
46
SECOND HORIZONTAL-BLOCK PROJECTION LINE MEMORY
49
HORIZONTAL-BLOCK PROJECTION-DATA READING PART
48
THIRD-THRESHOLD INTERSECTION SEARCHING PART
THIRD THRESHOLD INTERSECTION
500
HORIZONTAL-BLOCK VERTICAL-MOTION -VECTOR CALCULATING PART
45
FIRST HORIZONTAL -BLOCK PROJECTION -DATA MAXIMUM -VALUE STORAGE PART
47
SECOND HORIZONTAL -BLOCK PROJECTION -DATA MAXIMUM -VALUE STORAGE PART
THIRD THRESHOLD VALUE
FOURTH THRESHOLD VALUE
510
VERTICAL-MOTION-VECTOR DETERMINING PART
52

F I G . 4 1

## INTERNATIONAL SEARCH REPORT

International application No.
PCT/JP2007/052011

A. CLASSIFICATION OF SUBJECT MATTER
*G06T7/20*(2006.01)i, *H04N7/32*(2006.01)i

According to International Patent Classification (IPC) or to both national classification and IPC

B. FIELDS SEARCHED

Minimum documentation searched (classification system followed by classification symbols)
G06T7/20, H04N7/32, H04N5/232

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | JP 2006-268413 A (Mitsubishi Electric Corp.), 05 October, 2006 (05.10.06), Full text; all drawings (Family: none) | 1-26 |
| A | JP 2004-343483 A (Acutelogic Corp.), 02 December, 2004 (02.12.04), Par. Nos. [0046] to [0052]; Figs. 8 to 10 (Family: none) | 1-26 |
| A | JP 2002-279430 A (LG Electronics Inc.), 27 September, 2002 (27.09.02), Full text; all drawings (Family: none) | 1-26 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 March, 2007 (01.03.07) | 13 March, 2007 (13.03.07) |
| Name and mailing address of the ISA/ Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 3534551 A
- WO 3164121 A